# EUROPEAN PATENT APPLICATION

(11) **EP 4 819 609 A1**
(43) Date of publication of application: **07.10.2026**
(21) Application number: 24898259.7
(22) Date of filing: 02.12.2024
(51) Int. Cl.: H04N 19/61, H04N 19/132, H04N 19/18, H04N 19/70, H04N 19/625, H04N 19/159

(54) **IMAGE ENCODING/DECODING METHOD AND APPARATUS, AND RECORDING MEDIUM HAVING BITSTREAM STORED THEREIN**

(30) Priority: 30.11.2023 US 202363604836 P
(71) Applicant: LG Electronics Inc., Yeongdeungpo-gu Seoul 07336 (KR)
(72) Inventor: KOO, Moonmo, Seoul 06772 (KR); LIM, Jaehyun, Seoul 06772 (KR); KIM, Seunghwan, San Diego, California 92131 (US)
(74) Representative: Jung, Minkyu
(86) International application number: PCT/KR2024/019500
(87) International publication number: WO 2025/116667

(57) **Abstract**

An image decoding method and apparatus according to the present disclosure may: derive transform coefficients of the current block from a bitstream; derive residual samples of the current block on the basis of inverse transformation of the transform coefficients of the current block; and reconstruct the current block on the basis of the residual samples of the current block. Here, the current block may be a block encoded on the basis of inter prediction, and a transform set for the inverse transformation may be selected on the basis of a predetermined intra prediction mode for the current block.

## Description

### [Technical Field]

The present disclosure relates to an image encoding/decoding method and apparatus, and a recording medium storing a bitstream.

### [Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

### [Disclosure]

### [Technical Problem]

The present disclosure is to provide a method and an apparatus for performing a transform by using a non-separable primary transform.

The present disclosure is to provide a method and an apparatus for performing a transform by using a non-separable primary transform kernel of a reduced dimension.

The present disclosure is to provide a method and an apparatus for determining/signaling a non-separable transform kernel based on an encoding parameter.

### [Technical Solution]

An image decoding method and apparatus according to the present disclosure may derive transform coefficients of a current block from a bitstream, derive residual samples of the current block based on an inverse transform on the transform coefficients of the current block, and reconstruct the current block based on the residual samples of the current block. Here, the current block may be a block encoded based on inter prediction. A transform set for the inverse transform may be selected based on a predetermined intra prediction mode for the current block.

In an image decoding method and apparatus according to the present disclosure, the inverse transform may be performed based on at least one of a separate transform or a non-separable transform.

In an image decoding method and apparatus according to the present disclosure, when a sub-block transform is applied to the current block and the non-separable transform is applied to the current block, a transform type for the separable transform of the current block may be determined as DCT-2.

In an image decoding method and apparatus according to the present disclosure, when a sub-block transform is applied to the current block and the non-separable transform is applied to the current block, a transform type for the separable transform of the current block may be determined as one of combinations of DST-7 and DCT-8.

In an image decoding method and apparatus according to the present disclosure, the intra prediction mode may be derived by applying a decoder side intra mode derivation (DIMD) method based on a prediction block of the current block.

In an image decoding method and apparatus according to the present disclosure, when a sub-block transform is applied to the current block, based on whether the first sub-block of the current block corresponds to a size in which the non-separable transform is allowed, whether the non-separable transform is applied to the current block may be determined.

In an image decoding method and apparatus according to the present disclosure, the intra prediction mode may be determined by applying a decoder side intra mode derivation (DIMD) method based on the first sub-block of the current block.

In the image decoding method and apparatus according to the present disclosure, the transform set may include a plurality of transform kernel candidates, and an index indicating one of the plurality of transform kernel candidates may be signaled.

In an image decoding method and apparatus according to the present disclosure, the index may be signaled based on whether the current block satisfies a predetermined zero-out condition.

In an image decoding method and apparatus according to the present disclosure, when an intra block copy (IBC) mode is applied to the current block, the non-separable transform may be applied to the current block.

In an image decoding method and apparatus according to the present disclosure, a transform set for the non-separable transform may be determined based on whether an inter prediction mode which performs prediction in a sub-block unit is applied to the current block.

An image encoding method and apparatus according to the present disclosure may derive residual samples of a current block, derive transform coefficients of the current block based on a transform on the residual samples of the current block, and encode the transform coefficients of the current block. Here, the current block may be a block encoded based on inter prediction. A transform set for the transform may be selected based on a predetermined intra prediction mode for the current block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to an image encoding method according to the present disclosure are provided.

### [Advantageous Effects]

The present disclosure may improve the performance of a transform by using a non-separable primary transform as a primary transform.

The present disclosure may improve the performance of a transform by performing a transform by using a non-separable primary transform kernel of a reduced dimension.

The present disclosure may improve encoding efficiency by effectively determining and/or signaling a non-separable transform kernel based on an encoding parameter.

### [Brief Description of Drawings]

FIG. 1 shows a video/image coding system according to the present disclosure.
FIG. 2 shows a schematic block diagram of an encoding apparatus to which an embodiment of the present disclosure is applicable and encoding of video/image signals is performed.
FIG. 3 shows a schematic block diagram of a decoding apparatus to which an embodiment of the present disclosure is applicable and decoding of video/image signals is performed.
FIG. 4 illustrates an image decoding method performed by a decoding apparatus (300) as an embodiment according to the present disclosure.
FIG. 5 exemplarily shows intra prediction modes and prediction directions thereof according to the present disclosure.
FIG. 6 illustrates a flowchart of a method for deriving a DIMD mode according to the present disclosure.
FIG. 7 illustrates a filter for deriving a DIMD mode according to the present disclosure.
FIG. 8 illustrates a schematic configuration of a decoding apparatus (300) performing an image decoding method according to the present disclosure.
FIG. 9 illustrates an image encoding method performed by an encoding apparatus (200) according to an embodiment of the present disclosure.
FIG. 10 illustrates a schematic configuration of an encoding apparatus (200) that performs an image encoding method according to the present disclosure.
FIG. 11 shows an example of a contents streaming system to which embodiments of the present disclosure may be applied.

### [Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, the first component may be referred to as the second component without departing from the scope of a right of the present disclosure, and similarly, the second component may also be referred to as the first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

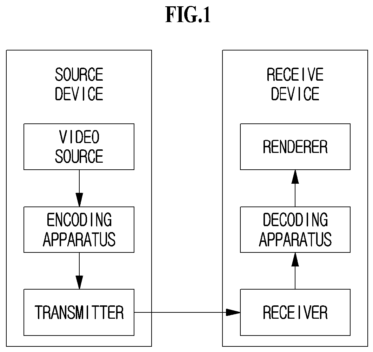

FIG. 1 shows a video/image coding system according to the present disclosure.

Referring to FIG. 1, a video/image coding system may include the first device (a source device) and the second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

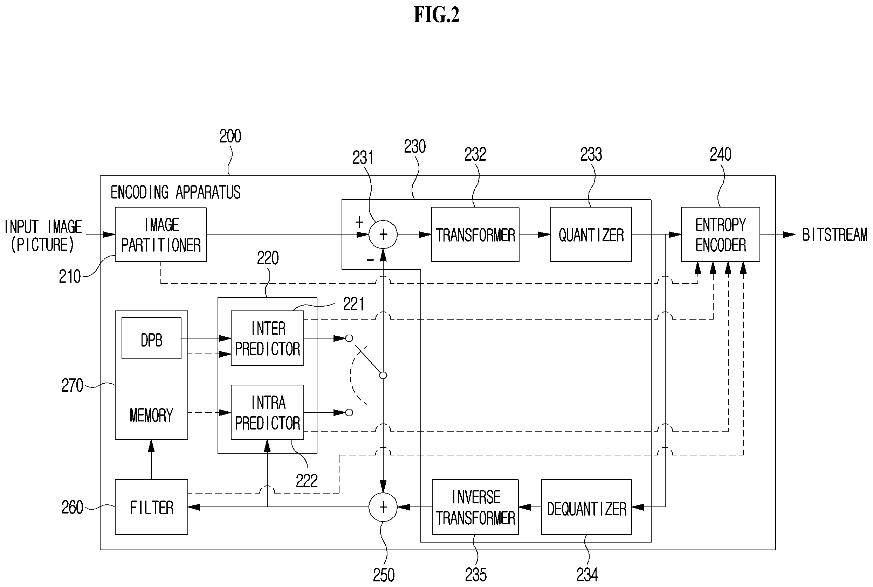

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into a 1D vector form based on coefficient scan order, and may generate information on the quantized transform coefficients based on the quantized transform coefficients in the 1D vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. . The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

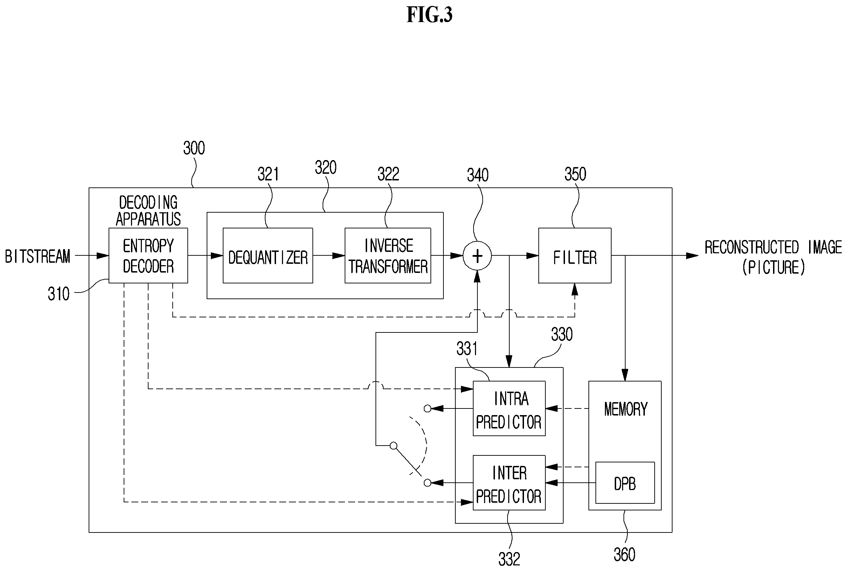

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

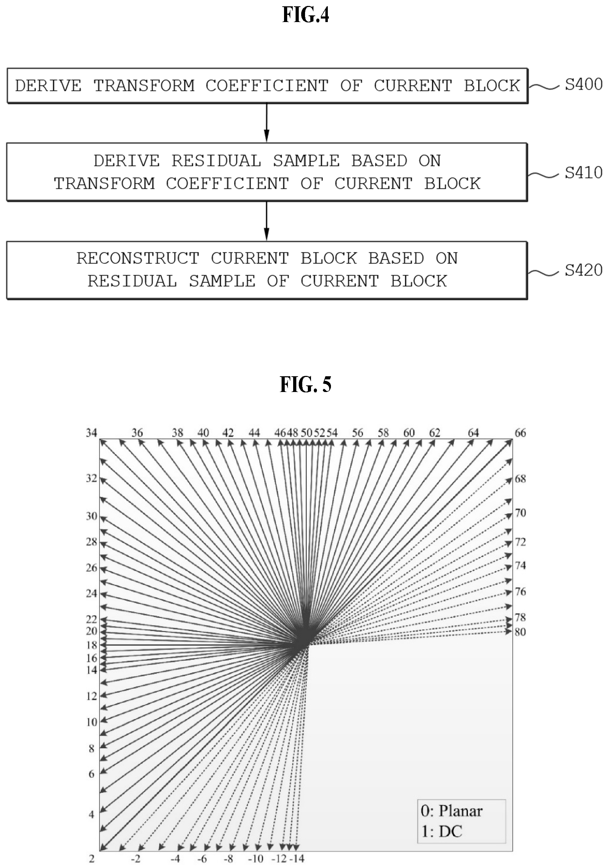

FIG. 4 illustrates an image decoding method performed by a decoding apparatus (300) as an embodiment according to the present disclosure.

Referring to FIG. 4, transform coefficients of the current block may be derived from the bitstream (S400). That is, the bitstream may include residual information of the current block, and the transform coefficients of the current block may be derived by decoding the residual information.

Referring to FIG. 4, residual samples of the current block may be derived by performing at least one of dequantization and inverse transform on the transform coefficients of the current block (S410).

When Adaptive Multiple Transform Selection (MTS) is applied, the inverse transform may be performed based on at least one of DCT-2, DST-7, or DCT-8. Here, DCT-2, DST-7, DCT-8, etc. may be called a transform type, a transform kernel, or a transform core.

In the present disclosure, the inverse transform may mean a separable transform. However, it is not limited thereto, and the inverse transform may mean a non-separable transform, or may be a concept including a separable transform and a non-separable transform. In addition, the inverse transform in the present disclosure means a primary transform, but is not limited thereto, and may be applied to a secondary transform by being modified into an identical/similar form.

For example, as a method for inverse transform, only DCT-2 and a non-separable transform may be used, or a non-separable transform may be used in addition to at least one of DCT-2, DST-7, or DCT-8, or a non-separable transform may replace the transform kernel of one or more of DCT-2, DST-7, or DCT-8.

As a more specific embodiment, when there are (DCT-2, DCT-2), (DST-7, DST-7), (DCT-8, DST-7), (DST-7, DCT-8), (DCT-8, DCT-8) as transform kernel candidates for a separable transform, a non-separable transform may replace or be added to one or more of the five transform kernel candidates. Here, the notation (transform1, transform2) indicates that transform1 is applied in the horizontal direction and transform2 is applied in the vertical direction. When the non-separable transform replaces some of the transform kernel candidates, the remaining transform kernel candidates except (DCT-2, DCT-2) and (DST-7, DST-7) may be replaced with the non-separable transform. However, the above-described transform kernel candidates are only examples, and other types of DCT and/or DST may be included, and a transform skip may be included as the transform kernel candidate.

A non-separable transform may mean a transform or inverse transform based on a non-separable transform matrix. That is, unlike a separable transform that performs horizontal and vertical transforms independently by separating vertical and horizontal transforms, a non-separable transform may perform horizontal and vertical transforms at once.

For example, when a non-separable transform is performed on a 4x4 block, the input data X to the non-separable transform is as shown in the following equation 1. [Equation 1] $= X = \left[\begin{matrix}{X}_{00} & {X}_{01} & {X}_{02} & {X}_{03} \\ {X}_{10} & {X}_{11} & {X}_{12} & {X}_{13} \\ {X}_{20} & {X}_{21} & {X}_{22} & {X}_{23} \\ {X}_{30} & {X}_{31} & {X}_{32} & {X}_{33}\end{matrix}\right]$

When the input data X is expressed in vector form, vector X' may be expressed as follows. [Equation 2] $X ′ = {\left[{X}_{00},{X}_{01},{X}_{02},{X}_{03},{X}_{10}{X}_{11},{X}_{12},{X}_{13},{X}_{20},{X}_{21},{X}_{22},{X}_{23},{X}_{30},{X}_{31},{X}_{32},{X}_{33}\right]}^{T}$

In this case, the non-separable transform may be performed as in the following equation 3. [Equation 3] $F = T ⋅ X ′$

In equation 3, F represents a transform coefficient vector, T represents a 16x16 non-separable transform matrix, and • represents the multiplication of a matrix and a vector.

A 16x1 transform coefficient vector F may be derived through the equation 3, and the F may be reconfigured into 4x4 blocks according to a predetermined scan order. The scan order may be a horizontal scan, a vertical scan, a diagonal scan, a z-scan, a raster scan, or a pre-defined scan.

The non-separable transform set and/or transform kernel for the non-separable transform may be variously configured based on at least one of a prediction mode (e.g., intra mode, inter mode, etc.), the width, height, or number of pixels of the current block, the position of a sub-block within the current block, explicitly signaled syntax elements, statistical characteristics of neighboring samples, whether a secondary transform is used, or a quantization parameter (QP).

Specifically, for the intra mode, the pre-defined intra prediction modes may be grouped to correspond to n non-separable transform sets, and each non-separable transform set may include k transform kernel candidates. Here, n and k may be arbitrary constants according to rules (conditions) defined identically for the encoding apparatus and the decoding apparatus.

The number of non-separable transform sets and/or the number of transform kernel candidates included in the non-separable transform set may be configured differently depending on the width and/or height of the current block. For example, for a 4x4 block, n1 non-separable transform sets and k1 transform kernel candidates may be configured. For a 4x8 block, n2 non-separable transform sets and k2 transform kernel candidates may be configured. In addition, the number of non-separable transform sets and the number of transform kernel candidates included in each non-separable transform set may be configured differently depending on the product of the width and the height of the current block. For example, when the product of the width and the height of the current block is equal to or greater than 256, n3 non-separable transform sets and k3 transform kernel candidates may be configured, and otherwise, n4 non-separable transform sets and k4 transform kernel candidates may be configured. That is, since the degree of change in the statistical characteristics of the residual signal varies depending on the block size, the number of non-separable transform sets and transform kernel candidates may be configured differently to reflect this.

When the current block is divided into a plurality of sub-blocks, the statistical characteristics of the residual signal may be different for each sub-block, and therefore the number of non-separable transform sets and transform kernel candidates may be configured differently. For example, when a 4x8 or 8x4 block is divided into two 4x4 sub-blocks and a non-separable transform is applied to each sub-block, n5 non-separable transform sets and k5 transform kernel candidates may be configured for the top-left 4x4 sub-block, and n6 non-separable transform sets and k6 transform kernel candidates may be configured for other 4x4 sub-blocks.

Based on the explicitly signaled syntax element, the number of non-separable transform sets and transform kernel candidates may be differently configured. As the syntax element, information indicating one of a plurality of non-separable transform configurations may be used. For example, when three kinds of non-separable transform configurations are supported (i.e., n7 non-separable transform sets and k7 transform kernel candidates, n8 non-separable transform sets and k8 transform kernel candidates, n9 non-separable transform sets and k9 transform kernel candidates), the syntax element may have values of 0, 1, and 2, and the non-separable transform configuration applied to the current block may be determined based on the value of the signaled syntax element.

Based on whether a secondary transform is applied and/or which secondary transform is applied, the number of non-separable transform sets and transform kernel candidates may be configured differently. For example, when a secondary transform is not applied, a non-separable transform configuration including n10 non-separable transform sets and k10 transform kernel candidates may be applied. When a secondary transform is applied, a non-separable transform configuration including n11 non-separable transform sets and k11 transform kernel candidates may be applied.

Based on the quantization parameter (QP) and/or the range to which the QP value belongs, different non-separable transform configurations may be applied. For example, when the QP value has a small value, a non-separable transform configuration including n12 non-separable transform sets and k12 transform kernel candidates may be applied. On the other hand, when the QP value has a large value, a non-separable transform configuration including n13 non-separable transform sets and k13 transform kernel candidates may be applied. When the QP value is less than or equal to a threshold (e.g., 32), the case is classified as having a small QP value, and otherwise, the case is classified as having a large QP value. Alternatively, the range of the QP values may be divided into three or more, and different non-separable transform configurations may be applied for each range.

For relatively large blocks, instead of using a non-separable transform corresponding to the width and height of the block, the block may be divided into a plurality of sub-blocks and a non-separable transform corresponding to the width and height of the sub-block may be used. For example, when performing a non-separable transform for a 4x8 block, the 4x8 block may be divided into two 4x4 sub-blocks and a 4x4 block-based non-separable transform may be used for each of the 4x4 sub-blocks. Alternatively, an 8x16 block may be divided into two 8x8 sub-blocks and an 8x8 block-based non-separable transform may be used.

The non-separable transform set may be determined based on the intra prediction mode of the current block and the mapping table. The mapping table may define a mapping relationship between the pre-defined intra prediction modes and the non-separable transform sets. The pre-defined intra prediction modes may include two non-directional modes and 65 directional modes. In general, the non-separable transform has a larger transform kernel size than the separable transform. This means that the computational complexity required for the transform process is high and the memory required for storing the transform kernel is large. Meanwhile, while the separable transform may only consider statistical characteristics existing in the horizontal and/or vertical directions, the non-separable transform may simultaneously consider statistical characteristics in a two-dimensional space including the horizontal and vertical directions, thereby providing better compression efficiency. Since the statistical characteristics and diversity of the residual are different depending on the directionality of the intra prediction mode, there may be cases where the non-separable transform is absolutely necessary, and there may exist intra prediction modes where the characteristics of the residual may be sufficiently identified by the separable transform alone. Therefore, by predefining which transform to use based on to the intra prediction mode in the encoding apparatus and the decoding apparatus, the transform process may be designed with optimized complexity and memory requirements. The non-directional mode may include the planar mode of number 0 and the DC mode of number 1, and the directional mode may include the intra prediction modes of numbers 2 to 66. However, this is merely an example, and the present disclosure may also be applied to cases where the number of pre-defined intra prediction modes is different.

Due to the application of wide angle intra prediction (WAIP), the pre-defined intra prediction modes may further include intra prediction modes from -14 to -1 and intra prediction modes from 67 to 80.

FIG. 5 exemplarily shows intra prediction modes and prediction directions thereof according to the present disclosure. Referring to FIG. 5 , modes -14 to -1 and 2 to 33 and modes 35 to 80 are symmetrical with respect to mode 34 in terms of prediction direction. For example, modes 10 and 58 are symmetrical with respect to the direction corresponding to mode 34, and mode -1 is symmetrical with mode 67. Accordingly, for a vertical directionality mode symmetrical to a horizontal directionality mode with respect to mode 34, the input data may be transposed and used. Transposing the input data means that the rows and columns in the input data MxN of a two-dimensional block become columns and rows, respectively, to form NxM data.

For example, when a 4x4 block is used, 16 data forming a 4x4 block may be appropriately arranged to form a 16x1 1-dimensional vector for non-separable transform. In this case, the 1-dimensional vector may be formed in row-first order or in column-first order. The residual samples resulting from the non-separable transform may be arranged in the above order to form a 2-dimensional block.

For modes -14 to -1 and 2 to 33, when the data arrangement order for forming a 16x1 input vector is row-first order, for modes 35 to 80, the input vector may be formed according to column-first order.

Mode 34 may be regarded as neither a horizontal directionality mode nor a vertical directionality mode, but in this disclosure, it is classified as belonging to a horizontal directionality mode. That is, for modes -14 to -1 and 2 to 33, the input data arrangement method for the horizontal directionality mode, i.e., the row-first order, is used, and for the vertical directionality mode symmetrical with respect to mode 34, the input data may be transposed and used.

For non-square blocks, the symmetry in square blocks (i.e., the symmetry between the mode P and the mode (68-P) in an NxN block (2<=P<=33) or the symmetry between the mode Q and the mode (66-Q) (-14<=Q<=-1)) cannot be utilized. Therefore, in addition to the symmetry based only on the intra prediction mode, the symmetry between block shapes that are in a transpose relationship with each other, i.e., the symmetry between a KxL block and an LxK block, may also be utilized. Specifically, a symmetry relationship exists between a KxL block predicted by the mode P and an LxK block predicted by the mode (68-P). Alternatively, a symmetry relationship exists between a KxL block predicted by the mode Q and an LxK block predicted by the mode (66-Q).

Since a KxL block having mode 2 and an LxK block having mode 66 can be seen as symmetrical to each other, the same transform kernel may be applied to the KxL block and the LxK block. If a non-separable transform set for the intra prediction mode of the KxL block is mapped, in order to apply a non-separable transform to the LxK block, the non-separable transform set may be derived through a mapping table corresponding to the KxL block based on the mode (68-P) instead of the mode P applied to the LxK block. Alternatively, the non-separable transform set may be derived through a mapping table corresponding to the KxL block based on the mode (66-Q) instead of the mode Q applied to the LxK block.

For example, in order to apply a non-separable transform to an LxK block, the non-separable transform set may be selected based on mode 2 instead of mode 66. In addition, for a KxL block, the input data may be read in a pre-determined order (e.g., row-first order or column-first order) to form a 1D vector and then the corresponding non-separable transform may be applied. For an LxK block, the input data may be read in the transposed order to form a 1D vector and then the corresponding non-separable transform may be applied. That is, when the KxL block is read in row-first order, the LxK block may be read in column-first order. Conversely, when the KxL block is read in column-first order, the LxK block may be read in row-first order.

In addition, when mode 34 is applied to the KxL block, a non-separable transform set may be determined based on mode 34, and the input data may be read in a pre-determined order to form a 1D vector and perform the corresponding non-separable transform. When mode 34 is applied to the LxK block, a non-separable transform set may be determined based on mode 34, but the input data may be read in a transposed order to form a 1D vector and perform the corresponding non-separable transform.

In the present disclosure, a method for determining a non-separable transform set and a method for forming input data are described based on a KxL block. However, the non-separable transform may be performed based on an LxK block by utilizing the symmetry described above for a KxL block. Alternatively, a block having a width greater than a height may be restricted to be used as a reference block. Alternatively, the symmetry may be restricted not to be utilized in the case of non-square blocks. In this case, a non-square block may use a different number of non-separable transform sets and/or transform kernel candidates than a square block, and may select a non-separable transform set using a different mapping table than a square block.

An example of a mapping table for selecting a non-separable transform set is as follows:

**[Table 1]**

| **predModeIntra** | **TrSetIdx** |
|---|---|
| predModeIntra < 0 | 4 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |
| 67 <= predModeIntra <= 80 | 4 |

Table 1 shows an example of assigning a non-separable transform set for each intra prediction mode when there are five non-separable transform sets. The value of predModeIntra means the value of the intra prediction mode considering WAIP, and TrSetIdx is an index indicating a specific non-separable transform set. In Table 1, it may be confirmed that the same non-separable transform set is applied to modes located in symmetrical directions according to the intra prediction mode. Table 1 is only an example of using five non-separable transform sets, and does not limit the total number of non-separable transform sets for non-separable transform.

Alternatively, as shown in Table 2, the non-separable transform may not be applied to WAIP for compression performance.

**[Table 2]**

| **predModeIntra** | **TrSetIdx** |
|---|---|
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |

Alternatively, as shown in Table 3, instead of configuring a separate non-separable transform set for WAIP, a non-separable transform set corresponding to an adjacent intra prediction mode may be shared.

**[Table 3]**

| **predModeIntra** | **TrSetIdx** |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

The non-separable transform set may include a plurality of transform kernel candidates, and one of the plurality of transform kernel candidates may be selectively used. For this purpose, an index signaled through a bitstream may be used. Alternatively, one of the plurality of transform kernel candidates may be implicitly determined based on context information of a current block. Here, the context information may mean a size of a current block or whether a non-separable transform is applied to a neighboring block. Here, the size of the current block may be defined as a width, a height, a maximum/minimum value of the width and the height, a sum of the width and the height, or a product of the width and the height.

Below, a method of determining the transform kernel for the inverse transform of the current block will be described in detail.

### Embodiment 1

As described above, the inverse transform may be divided into a separable transform and a non-separable transform. The separable transform means performing transform in the horizontal direction and the vertical direction respectively for a two-dimensional block, and the non-separable transform may mean performing a single transform for samples constituting the entire or a part of the two-dimensional block. When expressing a separable transform, it may be expressed as a pair of a horizontal transform and a vertical transform, and in the present disclosure, it will be expressed as (horizontal transform, vertical transform).

A plurality of transform sets may be defined for the inverse transform of the current block. Each transform set may include one or more transform kernel candidates.

For example, one of (DST-7, DST-7), (DCT-8, DST-7), (DST-7, DCT-8), or (DCT-8, DCT-8) may be applied as a separable transform, and the above four transform kernel candidates may be regarded as one transform set. In addition, (DCT-2, DCT-2) may be regarded as one transform set. A transform skip that does not apply a transform may also be regarded as one transform set, and (DCT-2, DCT-2) and the transform skip may be regarded as one transform set. In the present disclosure, a transform kernel may refer to one transform (e.g., DCT-2, DST-7) or may refer to two transform pairs (e.g., (DCT-2, DCT-2)).

As another example of a transform set, there may be the above-described non-separable transform set. In the present disclosure, a non-separable transform applied as a primary transform may be denoted as a Non-Separable Primary Transform (NSPT). In NSPT, a plurality of non-separable transform sets may be configured, and each non-separable transform set may include one or more transform kernels as transform kernel candidates. In the case of NSPT, one of the plurality of non-separable transform sets is selected based on the intra prediction mode, and the plurality of non-separable transform sets for NSPT may be denoted as an NSPT set list. This is as described above, and a detailed description thereof will be omitted here.

A group of one or more transform sets available for a current block may be configured from a plurality of pre-defined transform sets. The group of one or more transform sets may be configured in a predetermined area unit to which the current block belongs, and is hereinafter referred to as a collection. Here, the predetermined area unit may be at least one of a picture, a slice, a coding tree unit row (CTU row), or a coding tree unit (CTU).

For example, a transform set consisting of (DCT-2, DCT-2) is called S1, and a transform set consisting of (DST-7, DST-7), (DCT-8, DST-7), (DST-7, DCT-8), and (DCT-8, DCT-8) is called S2. In addition, the above-described NSPT set list may include N non-separable transform sets, and the N non-separable transform sets are called S3,1, S3,2, ..., S3,N, respectively. Here, N may be 35, but is not limited thereto.

When S3,13 is selected as the non-separable transform set for NSPT based on the intra prediction mode of the current block, the transform kernel applicable to the current block may belong to one of S1, S2, or S3,13. In this case, the collection available for the current block may be denoted as {S1, S2, S3,13}.

As described above, since a collection according to the present disclosure is a group of one or more transform sets available for a current block, the collection may be configured differently based on the context of the current block. Here, the context may include at least one of a shape, a size, or an intra prediction mode. If a total of K contexts are defined, K collections may be generated, and each collection may be denoted as Ci (i=1, 2, ..., N). For example, when the sizes of blocks to which NSPT is applicable are 4x4, 8x8, 16x16, and 32x32 and one of a total of 35 non-separable transform sets is selected based on the intra prediction mode, a total of 4 x 35 = 140 contexts may be defined if different transform kernels are applied for each size of the block.

A collection may be configured based on the context of the current block, and in this case, a process of selecting one of a plurality of transform sets belonging to the collection and selecting one of a plurality of transform kernel candidates belonging to the selected transform set may be performed. Here, the selection of the transform set and the transform kernel candidate may be performed implicitly based on the context of the current block, or may be performed based on an explicitly signaled index. Alternatively, the process of selecting one of a plurality of transform sets belonging to the collection and the process of selecting one of a plurality of transform kernel candidates belonging to the selected transform set may be performed separately. For example, an index for selecting a transform set may be first signaled, and one of a plurality of transform sets belonging to the collection may be selected based on the index. Then, an index indicating one of a plurality of transform kernel candidates belonging to the transform set may be signaled, and one of the transform kernel candidates may be selected from the transform set based on the signaled index. The transform kernel of the current block may be determined based on the selected transform kernel candidate. Alternatively, selection of one transform set from the collection may be performed implicitly based on the context of the current block, and selection of one transform kernel candidate from the selected transform set may be performed based on a signaled index. Alternatively, selection of one transform set from the collection may be performed based on a signaled index, and selection of one transform kernel candidate from the selected transform set may be performed implicitly based on the context of the current block. Alternatively, selection of one transform set from the collection may be performed implicitly based on the context of the current block, and selection of one transform kernel candidate from the selected transform set may also be performed implicitly based on the context of the current block. Of course, when the number of transform sets belonging to the collection is 1, the index for selecting the transform set may not be signaled. Similarly, when the number of transform kernel candidates belonging to the selected transform set is 1, the index for indicating the transform kernel candidate may not be signaled. Alternatively, an index indicating one of all transform kernel candidates belonging to the current collection may be signaled. In this case, the process of selecting one transform set from the collection may be omitted. In this case, all transform sets belonging to the collection may be shuffled in consideration of priorities. For example, in the case of assigning small-length binary codes to small-value indices, such as truncated unary codes, it may be advantageous to assign small-value indices to transform kernel candidates that are more advantageous for improving coding performance. When shuffling all transform kernel candidates belonging to the collection in accordance with priorities, different shuffling may be applied to each collection. In addition, instead of shuffling all transform kernel candidates belonging to the collection, only some of them may be selectively shuffled.

### Embodiment 2

The transform kernel for the inverse transform of the current block may be determined based on MTS (Multiple Transform Selection).

The MTS according to the present disclosure may use at least one of DST-7, DCT-8, DCT-5, DST-4, DST-1, or IDT (identity transform) as a transform kernel. In addition, the MTS according to the present disclosure may further include a transform kernel of DCT-2.

In the present disclosure, a plurality of MTS sets for MTS may be defined. Based on the size and/or an intra prediction mode of a current block, one of the plurality of MTS sets may be determined. For example, in determining one MTS set, 16 transform block sizes may be considered, and for a directional mode, the shape of the transform block and the symmetry between the intra prediction modes may be considered. For the WAIP (Wide Angle Intra Prediction) mode (i.e., -1 to -14 (or -15), 67 to 80 (or 81)), an MTS set corresponding to mode 2 may be applied for modes -1 to -14 (or -15), and an MTS set corresponding to mode 66 may be applied for modes 67 to 80 (or 81). A separate MTS set may be assigned for the MIP (Matrix-based Intra Prediction) mode.

For example, an MTS set according to transform block size and intra prediction mode may be assigned/defined as shown in Table 4 below.

**[Table 4]**

| Block size | | Intra prediction mode | | | | |
|---|---|---|---|---|---|---|
| width | height | [0, 1] | [2, 12] | [13, 23] | [24, 34] | MIP |
| 4 | 4 | 0 | 1 | 2 | 3 | 4 |
| 4 | 8 | 5 | 6 | 7 | 8 | 9 |
| 4 | 16 | 10 | 11 | 12 | 13 | 14 |
| 4 | 32 | 15 | 16 | 17 | 18 | 19 |
| 8 | 4 | 20 | 21 | 22 | 23 | 24 |
| 8 | 8 | 25 | 26 | 27 | 28 | 29 |
| 8 | 16 | 30 | 31 | 32 | 33 | 34 |
| 8 | 32 | 35 | 36 | 37 | 38 | 39 |
| 16 | 4 | 40 | 41 | 42 | 43 | 44 |
| 16 | 8 | 45 | 46 | 47 | 48 | 49 |
| 16 | 16 | 50 | 51 | 52 | 53 | 54 |
| 16 | 32 | 55 | 56 | 57 | 58 | 59 |
| 32 | 4 | 60 | 61 | 62 | 63 | 64 |
| 32 | 8 | 65 | 66 | 67 | 68 | 69 |
| 32 | 16 | 70 | 71 | 72 | 73 | 74 |
| 32 | 32 | 75 | 76 | 77 | 78 | 79 |

Table 4 shows the assignment of MTS sets according to 16 transform block sizes and intra prediction modes. The number of pre-defined MTS sets is 80, and the index indicating one of the 80 MTS sets may have a value from 0 to 79, as shown in Table 4.

**[Table 5]**

| MTS set index | Transform kernel candidate index | | | | | |
|---|---|---|---|---|---|---|
| | 0 | 1 | 2 | 3 | 4 | 5 |
| 0 | 18 | 24 | 17 | 23 | 8 | 12 |
| 1 | 18 | 3 | 7 | 22 | 0 | 16 |
| 2 | 18 | 2 | 17 | 22 | 3 | 23 |
| 3 | 18 | 3 | 15 | 17 | 12 | 23 |
| 4 | 18 | 12 | 3 | 19 | 10 | 13 |
| 5 | 18 | 12 | 19 | 23 | 13 | 24 |
| 6 | 18 | 12 | 17 | 2 | 3 | 23 |
| 7 | 18 | 2 | 17 | 22 | 12 | 23 |
| 8 | 18 | 2 | 11 | 17 | 22 | 23 |
| 9 | 18 | 12 | 19 | 23 | 3 | 10 |
| 10 | 16 | 12 | 13 | 24 | 7 | 8 |
| 11 | 16 | 2 | 11 | 23 | 12 | 18 |
| 12 | 13 | 17 | 2 | 22 | 12 | 18 |
| 13 | 17 | 11 | 2 | 21 | 12 | 18 |
| 14 | 16 | 13 | 19 | 22 | 3 | 10 |
| 15 | 18 | 12 | 13 | 7 | 14 | 22 |
| 16 | 16 | 12 | 11 | 1 | 18 | 22 |
| 17 | 17 | 13 | 3 | 22 | 12 | 18 |
| 18 | 6 | 12 | 1 | 22 | 13 | 17 |
| 19 | 16 | 12 | 13 | 15 | 2 | 23 |
| 20 | 18 | 24 | 23 | 19 | 12 | 17 |
| 21 | 18 | 24 | 2 | 17 | 0 | 23 |
| 22 | 17 | 3 | 4 | 22 | 2 | 13 |
| 23 | 18 | 12 | 19 | 23 | 3 | 15 |
| 24 | 18 | 12 | 19 | 23 | 3 | 10 |
| 25 | 6 | 12 | 18 | 24 | 13 | 19 |
| 26 | 6 | 12 | 2 | 21 | 13 | 18 |
| 27 | 17 | 11 | 1 | 22 | 2 | 18 |
| 28 | 16 | 17 | 3 | 11 | 12 | 23 |
| 29 | 8 | 12 | 19 | 23 | 11 | 24 |
| 30 | 16 | 13 | 7 | 23 | 12 | 19 |
| 31 | 6 | 12 | 1 | 11 | 18 | 22 |
| 32 | 17 | 11 | 1 | 21 | 12 | 18 |
| 33 | 6 | 11 | 17 | 21 | 12 | 18 |
| 34 | 8 | 11 | 14 | 17 | 12 | 22 |
| 35 | 6 | 12 | 11 | 21 | 14 | 16 |
| 36 | 6 | 12 | 11 | 1 | 17 | 21 |
| 37 | 6 | 12 | 11 | 2 | 17 | 21 |
| 38 | 6 | 11 | 21 | 1 | 12 | 17 |
| 39 | 16 | 12 | 11 | 7 | 1 | 5 |
| 40 | 8 | 12 | 19 | 24 | 11 | 17 |
| 41 | 18 | 13 | 1 | 22 | 2 | 24 |
| 42 | 6 | 2 | 17 | 21 | 19 | 22 |
| 43 | 16 | 12 | 11 | 19 | 8 | 15 |
| 44 | 8 | 12 | 17 | 24 | 13 | 15 |
| 45 | 6 | 12 | 19 | 21 | 17 | 18 |
| 46 | 6 | 12 | 13 | 21 | 2 | 18 |
| 47 | 16 | 2 | 17 | 21 | 1 | 11 |
| 48 | 6 | 17 | 19 | 23 | 12 | 16 |
| 49 | 6 | 12 | 14 | 17 | 8 | 22 |
| 50 | 6 | 7 | 11 | 21 | 9 | 12 |
| 51 | 16 | 12 | 11 | 1 | 7 | 21 |
| 52 | 6 | 12 | 11 | 1 | 17 | 21 |
| 53 | 6 | 12 | 11 | 21 | 1 | 16 |
| 54 | 8 | 7 | 9 | 11 | 12 | 21 |
| 55 | 6 | 12 | 7 | 11 | 14 | 21 |
| 56 | 6 | 12 | 7 | 11 | 1 | 21 |
| 57 | 16 | 12 | 11 | 1 | 2 | 21 |
| 58 | 6 | 11 | 17 | 21 | 1 | 12 |
| 59 | 6 | 12 | 7 | 11 | 9 | 21 |
| 60 | 18 | 12 | 14 | 21 | 6 | 21 |
| 61 | 16 | 11 | 1 | 22 | 2 | 17 |
| 62 | 16 | 11 | 1 | 22 | 2 | 17 |
| 63 | 16 | 13 | 15 | 7 | 14 | 19 |
| 64 | 8 | 12 | 1 | 19 | 16 | 23 |
| 65 | 6 | 12 | 7 | 9 | 13 | 21 |
| 66 | 6 | 12 | 13 | 2 | 7 | 18 |
| 67 | 16 | 12 | 1 | 21 | 11 | 17 |
| 68 | 16 | 11 | 7 | 19 | 12 | 15 |
| 69 | 8 | 12 | 7 | 11 | 14 | 21 |
| 70 | 6 | 12 | 7 | 11 | 8 | 9 |
| 71 | 6 | 12 | 7 | 11 | 2 | 21 |
| 72 | 6 | 12 | 1 | 11 | 21 | 22 |
| 73 | 6 | 7 | 11 | 16 | 9 | 12 |
| 74 | 6 | 12 | 7 | 11 | 9 | 21 |
| 75 | 6 | 12 | 7 | 11 | 13 | 17 |
| 76 | 6 | 12 | 11 | 21 | 2 | 7 |
| 77 | 6 | 12 | 1 | 11 | 2 | 7 |
| 78 | 6 | 12 | 7 | 11 | 16 | 21 |
| 79 | 6 | 12 | 7 | 11 | 9 | 16 |

Table 5 shows transform kernel candidates included in each MTS set described in Table 4. Each MTS set may be composed of six transform kernel candidates. The transform kernel candidate index has a value of one of 0 to 5 and may indicate one of the six transform kernel candidates. Here, each transform kernel candidate may be a combination of a horizontal transform kernel and a vertical transform kernel for a separable transform, and 25 transform kernel candidates having indices of 0 to 24 may be defined.

**[Table 6]**

| Kernel Combination Index | when the value of the intra prediction mode is less than 35 | when the value of the intra prediction mode is greater than or equal to 35 |
|---|---|---|
| 0 | (DCT-8, DCT-8) | (DCT-8, DCT-8) |
| 1 | (DST-7, DCT-8) | (DCT-8, DST-7) |
| 2 | (DCT-5, DCT-8) | (DCT-8, DCT-5) |
| 3 | (DST-4, DCT-8) | (DCT-8, DST-4) |
| 4 | (DST-1, DCT-8) | (DCT-8, DST-1) |
| 5 | (DCT-8, DST-7) | (DST-7, DCT-8) |
| 6 | (DST-7, DST-7) | (DST-7, DST-7) |
| 7 | (DCT-5, DST-7) | (DST-7, DCT-5) |
| 8 | (DST-4, DST-7) | (DST-7, DST-4) |
| 9 | (DST-1, DST-7) | (DST-7, DST-1) |
| 10 | (DCT-8, DCT-5) | (DCT-5, DCT-8) |
| 11 | (DST-7, DCT-5) | (DCT-5, DST-7) |
| 12 | (DCT-5, DCT-5) | (DCT-5, DCT-5) |
| 13 | (DST-4, DCT-5) | (DCT-5, DST-4) |
| 14 | (DST-1, DCT-5) | (DCT-5, DST-1) |
| 15 | (DCT-8, DST-4) | (DST-4, DCT-8) |
| 16 | (DST-7, DST-4) | (DST-4, DST-7) |
| 17 | (DCT-5, DST-4) | (DST-4, DCT-5) |
| 18 | (DST-4, DST-4) | (DST-4, DST-4) |
| 19 | (DST-1, DST-4) | (DST-4, DST-1) |
| 20 | (DCT-8, DST-1) | (DST-1, DCT-8) |
| 21 | (DST-7, DST-1) | (DST-1, DST-7) |
| 22 | (DCT-5, DST-1) | (DST-1, DCT-5) |
| 23 | (DST-4, DST-1) | (DST-1, DST-4) |
| 24 | (DST-1, DST-1) | (DST-1, DST-1) |

Table 6 is an example of the 25 transform kernel candidates described in Table 5. Specifically, the horizontal transform and vertical transform of the transform kernel candidate are expressed as (horizontal transform, vertical transform). For each transform kernel candidate index, the horizontal/vertical transform when the intra prediction mode is less than 35 may be the opposite of the horizontal/vertical transform when the intra prediction mode is greater than or equal to 35. When the value of the intra prediction mode is greater than or equal to 35, a mode symmetrical with respect to mode 34 may be derived, and an MTS set may be selected from Table 4 based on the mode. In addition, the symmetry of the block shape may be additionally considered. When the original transform block has a WxH size, the original transform block may be considered to have a HxW size by symmetrizing it, and an MTS set may be selected from Table 4. Here, the value of the intra prediction mode may be the value of the modified intra prediction mode. That is, as a mode value for WAIP, for from -14 (or -15) to -1, it is modified to mode 2, for from 67 to 80 (or 81), it is modified to mode 66, and for the remaining modes, the value of the original intra prediction mode may be set as the value of the modified intra prediction mode. In this case, since the extended modes for WAIP are also configured symmetrically with respect to mode 34, the symmetry with respect to mode 34 may be used for all directional modes except for the Planar mode and the DC mode.

For example, when a 16x32 block is predicted based on mode 54, mode 14 (=68-54) may be derived as a mode symmetrical to mode 54, and the block size may be regarded as 32x16. In this case, an MTS set with an index of 72 may be selected, as defined in Table 4.

When the MIP mode is applied, the MTS set assigned to the MIP mode may be selected based on the size of the current block without considering the symmetry of the block shape. Alternatively, when the MIP mode is applied, the MTS set assigned to the MIP mode may be selected based on the symmetrical block size considering the symmetry of the block shape. For example, when the MIP mode is applied for an 8x16 block, the 8x16 block may be regarded as a 16x8 block symmetrical to this, and an MTS set having an index of 49 may be selected as defined in Table 4. Alternatively, when the MIP mode is applied, the intra prediction mode may be regarded as the Planar mode. In this case, the MTS set assigned to the MIP mode may be selected based on the size of the current block without considering the symmetry of the block shape. Alternatively, the MTS set assigned to the MIP mode may be selected based on the symmetrical block size considering the symmetry of the block shape.

For MIP mode, a flag may be used to indicate whether the MIP mode is applied in transpose mode. When the MIP mode is applied to the current block of MxN and the flag indicates that the transpose mode is applied, the intra prediction mode may be regarded as Planar mode, and the current block of MxN may be regarded as an NxM block. That is, from Table 4, an MTS set corresponding to the block size of NxM and the Planar mode may be selected. As described in Table 6, when the value of the intra prediction mode is greater than or equal to 35, the horizontal transform and the vertical transform are swapped, but since the intra prediction mode of the current block is regarded as the Planar mode, the horizontal transform and the vertical transform of the transform kernel candidate may not be swapped. Alternatively, when the MIP mode is applied to the current block of MxN and the flag indicates that the transpose mode is applied, the intra prediction mode may not be regarded as the Planar mode, and the current block of MxN may be regarded as an NxM block. That is, from Table 4, an MTS set corresponding to the block size of NxM and the MIP mode may be selected.

In Table 5, a transform kernel candidate selected by a transform kernel candidate index may be set as a transform kernel of the current block. Alternatively, based on the size of the current block, at least one of a horizontal transform or a vertical transform of the selected transform kernel candidate may be changed to another transform kernel. For example, when the transform kernel candidate index is 3 and both the width and the height of the current block are less than or equal to 16, at least one of a horizontal transform or a vertical transform of the transform kernel candidate corresponding to the transform kernel candidate index of 3 may be changed to another transform kernel. In this case, the horizontal transform and the vertical transform may be changed independently of each other. When the difference (or the absolute value of the difference) between the value of the intra prediction mode of the current block and the value of the horizontal mode is less than or equal to a predetermined threshold, the vertical transform of the selected transform kernel candidate may be changed to IDT (identity transform). When the difference (or the absolute value of the difference) between the value of the intra prediction mode of the current block and the value of the vertical mode is less than or equal to a predetermined threshold, the horizontal transform of the selected transform kernel candidate may be changed to IDT (identity transform). Here, the threshold may be determined based on the width and height of the current block, as shown in Table 7 below.

**[Table 7]**

| Block size | | Threshold |
|---|---|---|
| width | height | |
| 4 | 4 | 8 |
| 4 | 8 | 6 |
| 4 | 16 | 4 |
| 8 | 4 | 8 |
| 8 | 8 | 8 |
| 8 | 16 | 6 |
| 16 | 4 | 4 |
| 16 | 8 | 2 |
| 16 | 16 | -1 |

Table 7 is for changing the horizontal transform and/or vertical transform of a transform kernel candidate selected by a transform kernel candidate index to another transform kernel and defines thresholds according to the size of a transform block.

Six transform kernel candidates composing one MTS set may be distinguished by transform kernel candidate indices from 0 to 5 as defined in Table 5. The transform kernel candidate index may be signaled via a bitstream. A flag indicating whether the MTS set is available/applied (MTS enabled flag or MTS flag) may be signaled, and a transform kernel candidate index may be signaled when the flag indicates that the MTS set is available/applied. The MTS flag may be composed of one bin, and one or more contexts for CABAC-based entropy coding (hereinafter, referred to as CABAC contexts) may be assigned to the bin. For example, different CABAC contexts may be assigned for non-MIP mode and MIP mode, respectively.

Based on the context of the current block described above, the number of transform kernel candidates available for the current block may be set differently. For example, as the context of the current block, the sum of the absolute values of all or some of the transform coefficients in the current block may be considered. The sum of the absolute values of the transform coefficients is referred to as AbsSum. When AbsSum is less than or equal to T1, only one transform kernel candidate corresponding to the transform kernel candidate index of 0 may be available. When AbsSum is greater than T1 and less than or equal to T2, four transform kernel candidates corresponding to the transform kernel candidate indices of 0 to 3 may be available. When AbsSum is greater than T2, six transform kernel candidates corresponding to the transform kernel candidate indices of 0 to 5 may be available. Here, T1 may be 6 and T2 may be 32, but this is only an example.

When AbsSum is less than or equal to T1, since the number of transform kernel candidates available for the current block is 1, the transform kernel candidate corresponding to the transform kernel candidate index of 0 may be set as the transform kernel of the current block without signaling the transform kernel candidate index. When AbsSum is greater than T1 and less than or equal to T2, since four transform kernel candidates are available, one of the four transform kernel candidates may be selected based on the transform kernel candidate index with two bins. That is, the transform kernel candidate indices of 0 to 3 may be signaled as 00, 01, 10, and 11, respectively. For the two bins, the MSB (Most Significant Bit) may be signaled first and the LSB (Least Significant Bit) may be signaled later. Different CABAC contexts may be assigned to each bin. For example, a CABAC context other than the CABAC context assigned for the MTS flag may be assigned to each bin for the two bins. Alternatively, bypass coding may be applied without assigning a CABAC context to the two bins. When AbsSum is greater than T2, the transform kernel candidate index has a value from 0 to 5, so the transform kernel candidate index cannot be expressed with only two bins. In this case, the transform kernel candidate index may be expressed by assigning two or more bins, such as truncated binary coding. For each bin assigned by the truncated binary coding method, a CABAC context may be assigned, or bypass coding may be applied without assigning a CABAC context. Alternatively, a CABAC context may be assigned to some of the plurality of bins (e.g., the first bin, or the first and second bins), and bypass coding may be applied to the remaining bins.

### Embodiment 3

The transform kernel of the current block may be determined based on a transform set including one or more transform kernel candidates. The transform kernel of the current block may be derived as one of one or more transform kernel candidates belonging to the transform set.

The process of determining the transform kernel of the current block may include at least one of 1) the process of determining the transform set of the current block or 2) the process of selecting one transform kernel candidate from the transform set of the current block. The process of determining the transform set may be the process of selecting one of a plurality of transform sets that are identically pre-defined in the encoding apparatus and the decoding apparatus. Alternatively, the process of determining the transform set may be a process of configuring one or more transform sets available for the current block from among a plurality of transform sets that are identically pre-defined in the encoding apparatus and the decoding apparatus, and selecting one of the configured transform sets. Alternatively, the process of determining the transform set may be a process of configuring one transform set based on a transform kernel candidate available for the current block from among a plurality of transform kernel candidates that are identically pre-defined in the encoding apparatus and the decoding apparatus.

When the transform set of the current block includes a plurality of transform kernel candidates, a process of selecting one of the plurality of transform kernel candidates for the current block may be performed. However, when the transform set of the current block includes one transform kernel candidate (i.e., when the number of transform kernel candidates available for the current block is 1), the transform kernel of the current block may be set to the corresponding transform kernel candidate.

The transform set according to the present disclosure may mean the (non-separable) transform set in the above-described Embodiment 1, or may mean the MTS set in the Embodiment 2. Alternatively, the transform set may be defined separately from the (non-separable) transform set in Embodiment 1 or the MTS set in Embodiment 2. In this case, the transform set may include one or more specific transform kernels as transform kernel candidates. One specific transform kernel may be defined as a pair of a transform kernel for horizontal transform and a transform kernel for vertical transform, or may be defined as one transform kernel that is applied equally to horizontal and vertical transforms.

In the embodiment of the present disclosure, the process of applying NSPT, a non-separable transform applied as a primary transform, is described in detail. NSPT may be applied to the entire or a part of a transform block. Based on forward NSPT, a residual sample existing in a region where NSPT is applied may be input as a 1D vector of NSPT. In other words, residual samples existing in the entire or a part of a single transform block (referred to as a Region Of Interest (ROI) in the present disclosure) may be collected as a 1D vector and configured as an input. Then, when forward NSPT is applied, a primary transform coefficient may be obtained. Conversely, when backward NSPT is applied to a primary transform coefficient, a 1D vector output may be obtained. A residual sample for a ROI may be obtained by arranging each element value configuring a corresponding output vector at a position determined within a 2D transform block.

For a non-separable transform kernel for NSPT, a matrix dimension may be determined according to the size of a ROI. In the present disclosure, a transform kernel may be referred to as a transform type or a transform matrix, and a non-separable transform kernel for NSPT may be referred to as a NSPT kernel. For example, when a current block is a MxN transform block, a ROI is a region for the entire MxN transform block and square NSPT is applied, the dimension of a corresponding transform matrix may be MN x MN. For example, when a ROI is a region for the entire 8x8 transform block, the dimension of a NSPT kernel may be 64 x 64.

According to an embodiment of the present disclosure, when NSPT is applied to a residual generated by intra prediction, a NSPT kernel may be adaptively determined according to an intra prediction mode. Since a statistical characteristic for a residual block may vary depending on an intra prediction mode, compression efficiency may be improved by adaptively determining a NSPT kernel according to an intra prediction mode.

It may be configured to share a NSPT kernel that is applied to at least one intra prediction mode. As described above, a non-separable transform set may be determined based on the intra prediction mode of a current block and a mapping table. A mapping table may define a mapping relationship between pre-defined intra prediction modes and non-separable transform sets. The pre-defined intra prediction modes may include two non-directional modes and 65 directional modes.

As an embodiment, intra prediction modes may be grouped into an intra prediction mode group. One NSPT kernel may be allocated to or a plurality of NSPT kernels may be allocated to an intra prediction mode group. In other words, a non-separable transform set (NSPT set) including at least one NSPT kernel may be allocated to an intra prediction mode group. A non-separable transform set may be mapped to an intra prediction mode and one of the N NSPT kernels included in a non-separable transform set may be selected.

As an example, an intra prediction group may include adjacent prediction modes (e.g., modes 17, 18 and 19). In addition, an intra prediction group may include modes having symmetry. For example, directional modes may be symmetrical around a diagonal mode (i.e., intra prediction mode 34) in FIG. 5 described above. In this case, two symmetrical modes may configure one group (or pair). For example, mode 18 and mode 50 may be included in the same group because they are symmetrical around mode 34. However, for modes having symmetry, the process of transposing a 2D input block and then configuring a one-dimensional input vector may be added before applying a forward NSPT kernel. For example, when an intra prediction mode is less than or equal to 34, a one-dimensional input vector may be derived from a corresponding input block in the row first order without transposing a 2D input block. When an intra prediction mode is greater than 34, a one-dimensional input vector may be configured by transposing a 2D input block first and then reading a corresponding input block in the row first order or by leaving a 2D input block as it is and reading a corresponding input block in the column first order.

Table 8 below illustrates a mapping table for allocating a NSPT set according to an intra prediction mode. Referring to Table 8, a total of 35 NSPT sets from 0 to 34 may be defined. A NSPT set allocated to the nearest general directional mode may be allocated to an extended WAIP mode (i.e., modes -14 to -1 and modes 67 to 80 in FIG. 5). In other words, NSPT set 2 may be allocated to an extended WAIP mode.

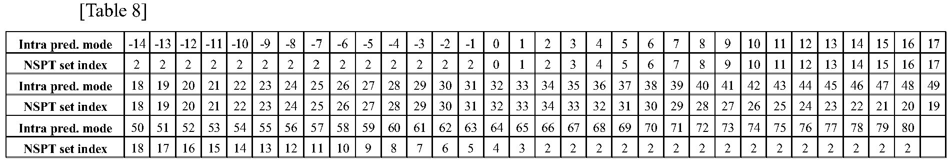

A NSPT set may include at least one NSPT kernel (or kernel candidate). In other words, a NSPT set may include N NSPT kernel candidates. As an example, N may be set as a value equal to or greater than 1 such as 1, 2, 3, 4, etc. A kernel applied to a current block among at least one NSPT kernel included in a NSPT set may be signaled by using an index. In the present disclosure, a corresponding index may be referred to as a NSPT index. As an example, a NSPT index may have a value of 0, 1, 2, ..., N - 1.

In addition, as an embodiment, when the number of NSPT kernel candidates is 1, a NSPT index value may be fixed to 0. In this case, a NSPT index may be inferred without being separately signaled. In addition, a flag indicating whether to apply NSPT may be signaled separately from a NSPT index. In the present disclosure, a corresponding flag may be referred to as a NSPT flag.

When a NSPT flag value is 1, NSPT may be applied. When a NSPT flag value is 0, NSPT may not be applied. When a NSPT flag is not signaled, a NSPT flag value may be inferred as 0. As an example, when a NSPT flag value is 1, a NSPT index may be applied. One of the N kernel candidates included in a NSPT set selected by an intra prediction mode may be specified based on a signaled NSPT index.

In an embodiment, the entropy coding method of a NSPT index may be defined in various ways by considering the number (N) of NSPT kernels included in a NSPT set. For example, as a method for mapping a value from 0 to N-1 to a bin string (i.e., a binarization method), truncated unary binarization, truncated binarization and fixed-length binarization methods may be used.

For example, when the value of N, the number of kernel candidates configuring a NSPT set, is 2, one of the two candidates may be specified with one bin. For example, 0 may indicate the first candidate and 1 may indicate the second candidate. In addition, when the value of N is 3 and truncated unary binarization is applied, a candidate may be specified with two bins. For example, the first, second and third candidates may be binarized to 0, 10 and 11, respectively, and signaled. As an embodiment, binarized bins may be coded by using context coding or bypass coding.

In the present disclosure, a reduced primary transform (RPT) method using a transform kernel of a reduced dimension as a primary transform is described. As described above, when forward NSPT is applied, samples belonging to a 2D residual block may be arranged (or rearranged) into a 1D vector according to the row-first order (or the column-first order). Afterwards, a transform matrix for NSPT may be multiplied by an arranged vector. When a corresponding 2D residual block is a M x N block (M is a horizontal length and N is a vertical length), the length of a rearranged 1D vector may be M*N. In other words, a corresponding 2D residual block may also be represented as a column vector having a dimension of M*N x 1. In the present disclosure, M*N may be expressed as MN for convenience. In this case, the dimension of a corresponding transform matrix may be MN x MN. In summary, forward NSPT may operate in a way that a MN x 1 transform coefficient vector is obtained by multiplying the left side of a MN x 1 vector by a corresponding MN x MN transform matrix.

When RPT is applied, r transform coefficients may be obtained by multiplying a r x MN matrix, instead of multiplying a MN x MN matrix, as a forward NSPT transform matrix described above. Here, r represents the number of rows of a transform matrix, and MN represents the number of columns of a transform matrix. According to an embodiment of the present disclosure, the value of r may be set to be less than or equal to MN. In other words, the existing forward NSPT transform matrix includes MN rows, and each row is a 1 x MN row vector and a transform basis vector of a corresponding NSPT transform matrix. A corresponding transform coefficient may be obtained by multiplying each transform basis vector by a MN x 1 sample column vector.

Since the existing forward NSPT transform matrix is composed of MN row vectors, MN transform coefficients (i.e., MN x 1 transform coefficient column vectors) may be obtained by applying forward NSPT. Meanwhile, for forward RPT, a transform matrix may be composed of r transform basis vectors instead of MN transform basis vectors. Accordingly, when forward RPT is applied, r, instead of MN, transform coefficients (i.e., r x 1 transform coefficient column vectors) may be obtained.

A RPT kernel may be configured by selecting r transform basis vectors which are a part of the transform basis vectors configuring a MN x MN forward NSPT kernel. In the present disclosure, a transform kernel may be referred to as a transform type or a transform matrix, and a non-separable transform kernel for NSPT may be referred to as a RPT kernel. In other words, when r 1 x MN row vectors are selected from a MN x MN forward NSPT kernel, it may be advantageous to select the most important transform basis vectors from the perspective of coding performance. Specifically, in terms of energy compaction through transform, more energy may be concentrated on transform coefficients that appear first by multiplying a forward NSPT transform matrix. In other words, a transform basis vector positioned on the top side of a forward NSPT transform matrix may generate a transform coefficient having greater energy. Considering this, a r x MN forward RPT kernel may be configured (or derived) by taking r from the top side of a forward NSPT kernel.

RPT according to the present disclosure takes only a part (i.e., r) of the transform coefficients obtained by applying the existing NSPT and accordingly, the original signal's energy may be partially lost. In other words, distortion between an original signal and a natural signal may occur through a corresponding process. Nevertheless, since only r, instead of MN, transform coefficients are generated by applying RPT, the amount of bits required to code corresponding transform coefficients may be reduced. Therefore, for a signal where a large amount of energy is concentrated on a small number of transform coefficients (e.g., an image residual signal), gains obtained by reducing signaling bits may be significantly large, thereby improving coding performance.

Backward NSPT is a transform matrix, and may be a transpose matrix of a forward NSPT kernel described above. In this case, input data may be a transform coefficient signal instead of a sample signal such as a residual signal. Specifically, when a forward NSPT transform matrix is G and a sample signal rearranged into a 1D vector is x, a transform coefficient vector obtained by multiplying a corresponding transform matrix by the left side may be expressed as in Equation 4 below. [Equation 4] $y = Gx$

Referring to Equation 4, x and y may be a MN x 1 column vector. G may have the form of a MN x MN matrix. A backward NSPT process may be expressed as in Equation 5 below by using the same variable. [Equation 5] $x = {G}^{T} y$

In Equation 5, G^{T} means a transpose matrix of G. A forward RPT operation and a backward RPT operation according to the present disclosure may also be expressed by the two equations. However, when RPT is applied, y is a r x 1 column vector instead of a MN x 1 column vector, and G is a r x MN matrix instead of a MM x MN matrix. In other words, even when RPT instead of NSPT is applied, the dimension of a sample signal (e.g., an image residual signal) is not changed, which may mean that the original number of sample signals (i.e., MN sample signals) may be reconstructed with only r transform coefficients through backward RPT. In other words, the original MN sample signals may be reconstructed by coding only r transform coefficients that are less than MN, which may improve coding performance.

In an embodiment of the present disclosure, a RPT structure is proposed that defines the value of r by considering the statistical characteristics of a residual block and derives a residual block of the existing transform block size from a residual block of a reduced size determined according to the defined value of r. If another additional transform (i.e., a secondary transform) is applied to predict the statistical distribution of a primary transform coefficient, a quantization process is applied to a primary transform coefficient, so quantized non-zero coefficients may be concentrated in a relatively low frequency domain. Accordingly, a reduced secondary transform for the statistical distribution of a primary transform coefficient may define the statistical characteristics of a primary transform coefficient relatively simply in the form of setting the value of r for a given low frequency domain. However, RPT according to the present disclosure has a fundamental difference from a reduced secondary transform as a technology for defining the value of r by considering the statistical characteristics of samples within a residual block having a very different characteristic from the distribution of a primary transform coefficient. Hereinafter, various embodiments for determining a RPT kernel which is a transform matrix of a reduced dimension are described. In other words, a method for determining or defining the value of r in RPT is described below.

In an embodiment of the present disclosure, the value of r in RPT may be determined by considering the worst case complexity allowed by a transform system. As an embodiment, the worst case complexity may be calculated based on the number of multiplications per sample. MN * r multiplications are needed to apply RPT in both forward and backward directions based on a M x N block. Since a 2D block is composed of a total of MN samples, the number of multiplications per sample may be calculated as (MN * r) / MN = r. Accordingly, the value of r may be configured to be maintained less than or equal to the maximum number of multiplications per sample allowed. For example, when the maximum possible number of multiplications per sample is set as 16 for a 16x16 block, the value of r may be determined to be less than or equal to 16. In other words, a forward RPT kernel may be set as 16 x 256.

In another embodiment, memory usage may be considered as a measure of the worst case complexity. As an example, a memory size allowed per kernel may be set. For example, when p bytes are needed per kernel coefficient (in the present disclosure, each element configuring a transform kernel is referred to as a kernel coefficient) and the memory usage is set to be less than or equal to q bytes per kernel, the value of r may be set to be less than or equal to q / (MN * p). For example, when p is 1 byte for a forward RPT kernel for a 16x16 block and the memory usage is set to be less than or equal to 8KB per kernel (q = 8 KB = 213 bytes), the value of r may be set to be less than or equal to 32.

In addition, as another example, the memory usage and/or the number of multiplications per sample may be considered as a measure of the worst case complexity. For example, when the maximum possible number of multiplications per sample is set as 16 for a 16x16 block and the memory usage is set to be less than or equal to 8KB per kernel (a kernel coefficient is expressed as 1 byte), the value of r may be set to be less than or equal to 16.

In addition, in an embodiment, the value of r configuring a RPT kernel may be determined by specific information. In other words, the value of r configuring a RPT kernel may be determined based on a predefined encoding parameter. For example, the value of r may be determined based on the size of a block. In other words, a RPT kernel may be variably determined based on the size of a block. Here, a block may be at least one of a coding block, a transform block and a prediction block. In addition, for example, the value of r may be determined based on prediction information. Here, prediction information may include information about inter/intra prediction, intra prediction mode information, etc. In addition, for example, the value of r may be determined based on signaled information (the value of a syntax element). For example, the value of r may be variably determined according to a quantization parameter value. In addition, in terms of complexity improvement, a fixed value predefined as the value of r may be used, and the predefined fixed value may be determined based on signaled information.

When a sample signal is multiplied by a RPT kernel r x MN, r transform coefficients may be obtained. The obtained r transform coefficients may be arranged according to the predefined scan order of transform coefficients (e.g., forward/backward zig-zag scan order, forward/backward horizontal scan order, forward/backward vertical scan order, forward/backward diagonal scan order, scan order specified based on an intra prediction mode, etc.). When transform coefficients obtained by applying forward RPT are arranged according to this scan order (e.g., scan order in the unit of a coefficient group (CG) may also be applied), if the value of r is smaller than MN, the inside of a M x N block may not be completely filled with r transform coefficients, so an empty space may occur. As an embodiment of the present disclosure, an empty space described above may be predicted in the following manner by considering the characteristics of a residual signal.
- The value of an empty space may be filled by using the value of an available neighboring pixel.
- The value of an empty space may be filled based on the value of an available neighboring pixel and an intra prediction mode. For example, the value of an empty space may be predicted by performing intra prediction based on the value of an available neighboring pixel and an intra prediction mode.
- The value of an empty space may be filled by using a predefined fixed value (e.g., 0).
- The value of an empty space may be filled from an available neighboring pixel by using a predetermined intra prediction mode (e.g., a planar mode).

In the present disclosure, filling an empty space with 0 among the above-described examples may be referred to as a zero-out process. When an empty space is filled with 0, the following embodiment may be applied. When a non-zero transform coefficient is detected (or parsed) in a corresponding empty space part during parsing of a transform coefficient on the decoding device side, it may be considered (or inferred) that RPT is not applied. In other words, when a non-zero transform coefficient exists in a predefined region representing the corresponding empty space, it may be considered that RPT is not applied. In this case, signaling (or parsing) for a flag indicating whether to apply RPT and/or an index designating one of a plurality of RPT kernel candidates may not be performed. As an example, when a non-zero transform coefficient exists in a predefined region representing the corresponding empty space, a predefined variable value may be updated, and it may be inferred that RPT is not applied based on an updated variable value.

In an embodiment of the present disclosure, whether to apply RPT may be determined based on the size and/or form of a block. In addition, a RPT kernel may be variably determined according to the size and/or form of a block. Since the value of r may be different according to the size and/or form of a block (i.e., for each M x N block), an empty space may be different according to the size and/or form of a block. Accordingly, a region for checking whether a non-zero transform coefficient is detected may be defined differently for each size and/or form of a block. In other words, a zero-out region may be variably determined.

As an example, when a 16x64 matrix is applied as a forward RPT matrix for a 8x8 block, the value of r may be 16. In this case, when a CG is a 4x4 sub-block, only a top-left 4x4 block may be filled with non-zero RPT transform coefficients, and the remaining three 4x4 sub-blocks (i.e., top-right, bottom-left and bottom-right sub-blocks) that are an empty space may be filled with the value of 0. In this case, when a non-zero transform coefficient is detected in the corresponding remaining three 4x4 sub-block regions during a decoding process, it may be considered that RPT is not applied. And, as described above, a flag indicating whether to apply RPT or an index designating one of a plurality of RPT kernel candidates may not be signaled.

In addition, as an example, when a 32x128 matrix is applied as a forward RPT matrix for a 16x8 block (i.e., the value of r is 32) and a CG is a 4x4 sub-block, only two CGs in scan order may be filled with non-zero RPT transform coefficients. For example, a top-left 4x4 sub-block and a 4x4 sub-block adjacent to the bottom of a top-left sub-block may be filled with corresponding RPT transform coefficients. A region filled with 0 as an empty space may be determined as the remaining region excluding corresponding two 4x4 sub-blocks. A RPT kernel may be variably determined according to the size and/or form of a block, and as described, an empty space may be determined differently for a 8x8 block and a 16x8 block.

As an embodiment, when the value of r is a multiple of a CG size and a transform coefficient is scanned in the unit of a CG, if a non-zero transform coefficient is detected in CGs belonging to an empty space, a flag and/or an index related to RPT may not be signaled. In other words, transform coefficients inside a CG may be scanned in designated order for each CG, and transform coefficients inside a CG may be scanned in the same manner after moving on to the next CG in scan order for the unit of a CG. In the existing image compression technology, since a flag for whether a non-zero transform coefficient exists in a corresponding CG is signaled first for each CG, whether to apply RPT may be determined only with corresponding information, which may reduce signaling overhead and related implementation complexity.

As described above, when RPT is applied, if a non-zero transform coefficient is detected in an empty space region filled with 0, RPT may not be applied. In this case, signaling for information related to RPT may be omitted. However, since it is not possible to determine whether to apply RPT when a non-zero transform coefficient is not detected in a corresponding empty space region, a flag representing whether to apply RPT may be parsed after parsing (or signaling) a related transform coefficient to finally determine whether to apply RPT.

As an embodiment, a forward secondary transform may be additionally applied to transform coefficients generated by applying RPT. Alternatively, a forward secondary transform may be additionally applied to a region where corresponding generated transform coefficients are positioned in a M x N block. In the present disclosure, a corresponding region or a part of a corresponding region may be referred to as a ROI from the perspective of a forward secondary transform. For a backward direction, a backward secondary transform may be applied first and then backward RPT may be applied. Specifically, a region where r transform coefficients generated by applying forward RPT are arranged or a part of a corresponding region may be set as a ROI to apply a forward secondary transform. In this case, when a 16x64 forward RPT transform matrix is applied to a 8x8 region, generated 16 transform coefficients may be positioned in a top-left 4x4 sub-block, and a corresponding sub-block region may be set as a ROI to apply a forward secondary transform to a corresponding ROI.

In addition, a RPT kernel may adjust a coefficient value by considering an operation such as an integer operation or a fixed-point operation. In other words, a RPT kernel may be configured to perform transform through an integer operation (or a fixed-point operation) in an actual codec system by appropriately scaling kernel coefficients belonging to a corresponding kernel, not a theoretical orthogonal transform or non-orthogonal transform (here, an orthogonal transform and a non-orthogonal transform represent a transform in which the norm of each transform basis vector is 1). It may be reflected equally even when RPT is applied as much as a scaling factor multiplied when applying a separable transform in the existing image compression technology. In this case, a separable transform or a non-separable transform (including RPT) may be performed while maintaining other processes (e.g., quantization and dequantization processes) other than transform.

The integerized coefficient of a RPT kernel may be obtained by multiplying a transform basis vector by a scaling value described above. As an embodiment, multiplying a scaling value may include applying an operation such as rounding, floor, ceiling, etc. to each kernel coefficient. In other words, an integerized RPT kernel obtained through the above-described method may be defined and used for a transform/inverse transform process. As described above, when kernel coefficients of a scaled integer value are obtained through an operation such as rounding, floor, ceiling, etc., the maximum value and the minimum value may be obtained for all kernel coefficients, so the number of bits enough to express all kernel coefficients may be obtained from the maximum value and the minimum value. For example, when the maximum value is less than or equal to 127 and the minimum value is greater than or equal to -128, all integer kernel coefficients may be expressed in 8 bits (especially, through two's complement expression, etc.).

In a generalized manner, when the maximum value is less than or equal to (2^{(N-1)} - 1) and the minimum value is greater than or equal to -2^{(N-1)}, all integer kernel coefficients may be expressed in N bits. When the maximum value is greater than (2^{(N-1)} - 1) or the minimum value is less than -2^{(N-1)}, all integer kernel coefficients may not be expressed in N bits. In this case, 1) all kernel coefficients may be additionally multiplied by a scaling value to adjust them to fall within the range of N bits, or 2) the number of bits needed to express a kernel coefficient may be increased (i.e., N+1 bits or more). When all kernel coefficients need to be multiplied by 2^{-p} (p >= 1) to express them with N bits, they may be compensated by multiplying by 2^{-p} afterwards so that they are fused into the existing encoding/decoding process. As an embodiment, multiplying by 2^{p} may be implemented by additionally performing a shift operation by p bits to the left or reducing the amount of right shift applied in a quantization or dequantization process by p.

All kernel coefficients may be expressed in 8-bit, 9-bit, 10-bit, etc. by using a method described above, and of course, the scaling value of a kernel coefficient may be set differently for each block size or kernel and the number of bits for expressing a kernel coefficient may be set differently.

NSPT described above may be applied based on at least one of the size, tree type, or component type of a current block. As an example, whether to apply NSPT may be determined based on at least one of the size, tree type, or component type of a current block. A NSPT index may be signaled based on at least one of the size, tree type, or component type of a current block. A NSPT set or a NSPT kernel may be derived based on at least one of the size, tree type, or component type of a current block.

Allowed transform block sizes pre-defined in a decoding device may be largely divided into two groups. Any one of the two groups (hereinafter, referred to as the first group) may mean a set of block sizes to which NSPT is applicable. The first group may be composed of any one of the allowed transform block sizes or may be composed of two or more block sizes among the allowed block sizes. A block size to which NSPT is applicable may be defined as a block size in which at least one of a width and a height is less than or equal to a predetermined threshold value. Alternatively, a block size to which NSPT is applicable may be defined as a block size in which the product of a width and a height is less than or equal to a predetermined threshold value. Alternatively, a block size to which NSPT is applicable may be defined as a block size in which the maximum value of a width and a height is less than or equal to a predetermined threshold value. The threshold value may be an integer of 4, 8, 16, 32, 64, 128 or higher.

Another one of the two groups (hereinafter, referred to as the second group) may mean a set of block sizes to which NSPT is not applied. The above-described separable primary transform may be applied to block sizes belonging to the second group. In addition, a non-separable secondary transform may be applied to all or part of the block sizes belonging to the second group.

For example, when the size of a current block belongs to the first group, backward NSPT may be applied to the (dequantized) transform coefficient of a current block. When the size of a current block belongs to the second group, a backward separable primary transform may be applied to the (dequantized) transform coefficient of a current block. Alternatively, when the size of a current block belongs to the second group, a backward non-separable secondary transform (e.g., low frequency non-separable transform, LFNST) may be applied first to the (dequantized) transform coefficient of a current block and a backward separable primary transform (e.g., DCT-2) may be applied to a transform coefficient obtained therefrom.

As an example, the first group, which is a set of block sizes to which NSPT is applicable, may be defined as a set of 4x4, 4x8, 8x4 and 8x8. Alternatively, the first group may be defined as a set of 4x8, 8x4 and 8x8. Alternatively, the first group may be defined as a set of 4x8 and 8x4. Alternatively, the first group may be defined as a set of 4x4, 4x8, 4x16, 8x4, 8x8 and 16x4. Alternatively, the first group may be defined as a set of 4x8, 4x16, 8x4, 8x8 and 16x4. Alternatively, the first group may be defined as a set of 4x8, 4x16, 8x4 and 16x4. Alternatively, the first group may be defined as a set of 4x4, 4x8, 8x4, 8x8, 8x16, 16x8 and 16x16. Alternatively, the first group may be defined as a set of 4x4, 4x8, 8x4, 8x8, 8x16 and 16x8. Alternatively, the first group may be defined as a set of 4x8, 8x4, 8x8, 8x16 and 16x8. Alternatively, the first group may be defined as a set of 4x8, 8x4, 8x16 and 16x8. Alternatively, the first group may be defined as a set of 4x4, 4x8, 8x4, 8x8, 8x16, 16x8, 16x16, 16x32, 32x16 and 32x32. Alternatively, the first group may be defined as a set of 4x4, 4x8, 8x4, 8x8, 8x16, 16x8, 16x16, 16x32 and 32x16. Alternatively, the first group may be defined as a set of 4x8, 8x4, 8x8, 8x16, 16x8, 16x16, 16x32 and 32x16. Alternatively, the first group may be defined as a set of 4x8, 8x4, 8x16, 16x8, 16x16, 16x32 and 32x16. Alternatively, the first group may be defined as a set of 4x8, 8x4, 8x16, 16x8, 16x32 and 32x16. Alternatively, the first group may be defined as a set of 4x4, 4x8, 4x16, 8x4 and 16x4. Alternatively, the first group may be defined as a set of 4x4, 4x8, 4x16, 8x4, 8x8, 8x16, 16x4 and 16x8. Alternatively, the first group may be defined as a set of 4x8, 4x16, 8x4, 8x8, 8x16, 16x4 and 16x8. Alternatively, the first group may be defined as a set of 4x4, 4x8, 4x16, 8x4, 8x16, 16x4 and 16x8. Alternatively, the first group may be defined as a set of 4x8, 4x16, 8x4, 8x16, 16x4 and 16x8. Alternatively, the first group may be defined as a set of 4x4, 4x8, 4x16, 8x4, 8x8, 8x16, 16x4, 16x8 and 16x16. Alternatively, the first group may be defined as a set of 4x8, 4x16, 8x4, 8x8, 8x16, 16x4, 16x8 and 16x16. Alternatively, the first group may be defined as a set of 4x4, 4x8, 4x16, 8x4, 8x16, 16x4, 16x8 and 16x16. Alternatively, the first group may be defined as a set of 4x8, 4x16, 8x4, 8x16, 16x4, 16x8 and 16x16. Alternatively, the first group may be defined as a set of 4x4, 4x8, 4x16, 4x32, 8x4, 8x16, 8x32, 16x4, 16x8, 32x4 and 32x8. Alternatively, the first group may be defined as a set of 4x8, 4x16, 4x32, 8x4, 8x16, 8x32, 16x4, 16x8, 32x4 and 32x8. The first group may be defined as a set of 4x4, 4x8, 4x16, 4x32, 8x4, 8x8, 8x16, 8x32, 16x4, 16x8, 16x16, 32x4 and 32x8. Alternatively, the first group may be defined as a set of 4x4, 4x8, 4x16, 4x32, 8x4, 8x8, 8x16, 8x32, 16x4, 16x8, 16x32, 32x4, 32x8 and 32x16. Alternatively, the first group may be defined as a set of 4x4, 4x8, 4x16, 4x32, 8x4, 8x8, 8x16, 8x32, 16x4, 16x8, 16x16, 16x32, 32x4, 32x8 and 32x16. Alternatively, the first group may be defined as a set of 4x8, 4x16, 4x32, 8x4, 8x16, 8x32, 16x4, 16x8, 16x32, 32x4, 32x8 and 32x16. Alternatively, the first group may be defined as a set of 4x4, 4x8, 4x16, 4x32, 8x4, 8x8, 8x16, 8x32, 16x4, 16x8, 16x16, 16x32, 32x4, 32x8, 32x16 and 32x32.

A NSPT matrix (or, a NSPT kernel) having a predetermined dimension may be applied to block sizes belonging to the first group. Here, a NSPT matrix may be expressed as a matrix having a dimension of PxQ as a backward transform matrix, and a PxQ matrix represents a matrix in which the number of rows and the number of columns are P and Q, respectively.

As an example, a NSPT matrix of 16x16 may be applied to a 4x4 block. A NSPT matrix of 32x20 may be applied to at least one of a 4x8 block or a 8x4 block. A NSPT matrix of 64x24 may be applied to at least one of a 4x16 block or a 16x4 block. A NSPT matrix of 64x32 may be applied to a 8x8 block. A NSPT matrix of 128x40 may be applied to at least one of a 8x16 block or a 16x8 block. A NSPT matrix of 256x44 may be applied to a 16x16 block. A NSPT matrix of 128x36, 128x38 or 128x40 may be applied to a 4x32 block or a 32x4 block. A NSPT matrix of 256x48 may be applied to a 8x32 block or a 32x8 block. A NSPT matrix of 512x52 or 512x54 may be applied to a 16x32 block or a 32x16 block.

For at least one of a 4x32 block or a 32x4 block, an NSPT matrix of 128x36, 128x38, 128x40 or 128x(36-(4*n)) may be applied. Alternatively, for at least one of a 4x32 block or a 32x4 block, an NSPT matrix of 128x(36-(4*n)) may be applied instead of an NSPT matrix of 128x36, 128x38 or 128x40. Here, * represents multiplication, and n may be an integer greater than or equal to 0.

As an example, as an NSPT matrix for at least one of a 4x32 block or a 32x4 block, at least one of a 128x36 matrix, a 128x32 matrix, a 128x28 matrix, a 128x24 matrix, a 128x20 matrix, a 128x16 matrix, a 128x12 matrix, a 128x8 matrix or a 128x4 matrix may be used.

In addition, for at least one of an 8x32 block or a 32x8 block, an NSPT matrix of 256x48 or 256x(48-(4*m)) may be applied. Alternatively, for at least one of an 8x32 block or a 32x8 block, an NSPT matrix of 256x(48-(4*m)) may be applied instead of an NSPT matrix of 256x48. Here, * represents multiplication, and m may refer to an integer greater than or equal to 0.

As an example, as an NSPT matrix for at least one of an 8x32 block or a 32x8 block, at least one of a 256x48 matrix, a 256x44 matrix, a 256x40 matrix, a 256x36 matrix, a 256x32 matrix, a 256x28 matrix, a 256x24 matrix, a 256x20 matrix, a 256x16 matrix, a 256x12 matrix, a 256x8 matrix or a 256x4 matrix may be used.

The combination of the structure of an NSPT matrix for a 4x32 block and a 32x4 block and the structure of an NSPT matrix for an 8x32 block and a 32x8 block may be configured by combining the above-described matrices. That is, the combination of the structure of an NSPT matrix for a 4x32 block and a 32x4 block and the structure of an NSPT matrix for an 8x32 block and a 32x8 block may be defined as the combination of one or more NSPT matrices of 128x(36-(4*n)) and one or more NSPT matrices of 256x(48-(4*m)). Here, n may be one or more integers in the range of 0 to 8, and m may be one or more integers in the range of 0 to 11.

As an example, an NSPT matrix for at least one of a 4x32 block or a 32x4 block may be a 128x24 matrix, and an NSPT matrix for at least one of an 8x32 block or a 32x8 block may be a 256x36 matrix.

Alternatively, an NSPT matrix for at least one of a 4x32 block or a 32x4 block may be a 128x24 matrix, and an NSPT matrix for at least one of an 8x32 block or a 32x8 block may be a 256x32 matrix.

Alternatively, an NSPT matrix for at least one of a 4x32 block or a 32x4 block may be a 128x24 matrix, and an NSPT matrix for at least one of an 8x32 block or a 32x8 block may be a 256x28 matrix.

Alternatively, an NSPT matrix for at least one of a 4x32 block or a 32x4 block may be a 128x24 matrix, and an NSPT matrix for at least one of an 8x32 block or a 32x8 block may be a 256x24 matrix.

Alternatively, an NSPT matrix for at least one of a 4x32 block or a 32x4 block may be a 128x24 matrix, and an NSPT matrix for at least one of an 8x32 block or a 32x8 block may be a 256x20 matrix.

Alternatively, an NSPT matrix for at least one of a 4x32 block or a 32x4 block may be a 128x24 matrix, and an NSPT matrix for at least one of an 8x32 block or a 32x8 block may be a 256x16 matrix.

Alternatively, an NSPT matrix for at least one of a 4x32 block or a 32x4 block may be a 128x20 matrix, and an NSPT matrix for at least one of an 8x32 block or a 32x8 block may be a 256x36 matrix.

Alternatively, an NSPT matrix for at least one of a 4x32 block or a 32x4 block may be a 128x20 matrix, and an NSPT matrix for at least one of an 8x32 block or a 32x8 block may be a 256x32 matrix.

Alternatively, an NSPT matrix for at least one of a 4x32 block or a 32x4 block may be a 128x20 matrix, and an NSPT matrix for at least one of an 8x32 block or a 32x8 block may be a 256x28 matrix.

Alternatively, an NSPT matrix for at least one of a 4x32 block or a 32x4 block may be a 128x20 matrix, and an NSPT matrix for at least one of an 8x32 block or a 32x8 block may be a 256x24 matrix.

Alternatively, an NSPT matrix for at least one of a 4x32 block or a 32x4 block may be a 128x20 matrix, and an NSPT matrix for at least one of an 8x32 block or a 32x8 block may be a 256x20 matrix.

Alternatively, an NSPT matrix for at least one of a 4x32 block or a 32x4 block may be a 128x20 matrix, and an NSPT matrix for at least one of an 8x32 block or a 32x8 block may be a 256x16 matrix.

Alternatively, an NSPT matrix for at least one of a 4x32 block or a 32x4 block may be a 128x16 matrix, and an NSPT matrix for at least one of an 8x32 block or a 32x8 block may be a 256x36 matrix.

Alternatively, an NSPT matrix for at least one of a 4x32 block or a 32x4 block may be a 128x16 matrix, and an NSPT matrix for at least one of an 8x32 block or a 32x8 block may be a 256x32 matrix.

Alternatively, an NSPT matrix for at least one of a 4x32 block or a 32x4 block may be a 128x16 matrix, and an NSPT matrix for at least one of an 8x32 block or a 32x8 block may be a 256x28 matrix.

Alternatively, an NSPT matrix for at least one of a 4x32 block or a 32x4 block may be a 128x16 matrix, and an NSPT matrix for at least one of an 8x32 block or a 32x8 block may be a 256x24 matrix.

Alternatively, an NSPT matrix for at least one of a 4x32 block or a 32x4 block may be a 128x16 matrix, and an NSPT matrix for at least one of an 8x32 block or a 32x8 block may be a 256x20 matrix.

Alternatively, an NSPT matrix for at least one of a 4x32 block or a 32x4 block may be a 128x16 matrix, and an NSPT matrix for at least one of an 8x32 block or a 32x8 block may be a 256x16 matrix.

Since the PxQ matrix is a backward NSPT matrix, a Px1 output vector may be obtained by applying a PxQ matrix to a Qx1 input vector (i.e., (PxQ matrix)x(Qx1 input vector)). Here, a Qx1 input vector may correspond to (dequantized) transform coefficients within a current block to which a NSPT is applied. In this case, the value of Q may mean the number of transform coefficients to which a NSPT is applied, and may be less than or equal to the product of the width and height of a current block. The value of Q may be variably determined based on the size of a current block among the block sizes belonging to the first group described above. Alternatively, the value of Q may be set equally for block sizes belonging to the first group. A Px1 output vector may correspond to a residual signal (or, decoded residual samples). The value of P may be equal to the product of the width and height of a current block.

Conversely, a forward NSPT matrix may be expressed as a QxP matrix which is the transpose matrix of the PxQ matrix. A Qx1 output vector may be obtained by applying a QxP matrix to a Px1 input vector (i.e., (QxP matrix)x(Px1 input vector)). Here, a Px1 input vector may correspond to residual samples within a current block to which a NSPT is applied. The value of P may be equal to the product of the width and height of a current block. A Qx1 output vector may correspond to transform coefficients within a current block derived through a NSPT. In this case, the value of Q may mean the number of transform coefficients output through a NSPT, and may be less than or equal to the product of the width and height of a current block. Similarly, the value of Q may be variably determined based on the size of a current block among the block sizes belonging to the first group described above. Alternatively, the value of Q may be set equally for block sizes belonging to the first group.

As in the example, NSPT may be applied to a MxN block and a NxM block which are a non-square block. For example, NSPT may be applied to a 4x8 block and a 8x4 block. Alternatively, NSPT may be applied to a 4x16 block and a 16x4 block, or NSPT may be applied to a 8x16 block and a 16x8 block, or NSPT may be applied to a 16x32 block and a 32x16 block.

By applying NSPT to specific block sizes belonging to the first group, transform may be performed more sophisticatedly and coding performance may be improved. When forward LFNST is applied, primary transformed transform coefficients of the remaining region except for a region to which LFNST is applied (i.e. Region-Of-Interest, ROI) may be zeroed out. In addition, LFNST may be composed of a small number of transform basis vectors. In this case, when a separable primary transform such as DCT-2 and a non-separable secondary transform such as LFNST are applied to corresponding block sizes instead of NSPT, performance degradation may occur. When NSPT is applied instead of LFNST for a corresponding case, the zero-out process is omitted, and coding performance may be improved compared to a case of applying LFNST. In addition, performance improvement may be expected by a method for applying NSPT. NSPT or LFNST may be applied by using symmetry described below. Here, for LFNST, a transpose operation is performed on a corresponding input block by using symmetry only for a ROI region. On the other hand, for NSPT, a transpose operation is performed on the entire block by using symmetry. Accordingly, for NSPT, symmetry in a more sophisticated manner may be used to train and apply a corresponding NSPT kernel, so performance improvement may be expected.

In addition, when LFNST, not NSPT, is applied for a 8x8 block, a 32x64 transform matrix, instead of a 16x64 transform matrix, may be applied from the perspective of forward transform. Here, a 16x64 transform matrix may be configured by sampling the top 16 rows in a 32x64 transform matrix. When 16x64 transform matrix-based LFNST is applied to a 8x8 block, 16 multiplications are needed per sample to apply LFNST, but when a 32x64 transform matrix is used, 32 multiplications are needed per sample to apply LFNST. However, when a 32x64 transform matrix is used like this, improvement of coding performance may be expected.

When the tree type of a current block is a single tree, NSPT may be applied to the luma component of a current block and NSPT may not be applied to the chroma component of a current block. When the tree type of a current block is a dual tree, NSPT may be applied to the luma component and the chroma component of a current block.

Alternatively, regardless of whether the tree type of a current block is a single tree, NSPT may be applied to the luma component of a current block and NSPT may not be applied to the chroma component of a current block. Alternatively, regardless of whether the tree type of a current block is a single tree, NSPT may be applied to the luma component and the chroma component of a current block.

As an example, when the tree type of a current block is a single tree, NSPT is allowed for a luma component and a chroma component and the size of a current block belongs to the first group, one NSPT index may be signaled and the luma component and the chroma component of a current block may share a corresponding NSPT index. Here, a NSPT index may be an index for selecting any one of the transform kernel candidates for NSPT. When the size of the luma block and chroma block of a current block belongs to the first group, a transform kernel candidate selected by the same NSPT index may be applied to a luma component and a chroma component. When the tree type of a current block is a single tree and NSPT is applied only to a luma component, LFNST may not be applied to and a separate transform may be applied to the chroma component of a current block. Alternatively, when the tree type of a current block is a single tree and NSPT is applied only to a luma component, LFNST may be applied to the chroma component of a current block.

A single tree may have a high correlation between a luma component and a chroma component. In this case, unnecessary signaling may be reduced and compression efficiency may be improved by applying NSPT only to a luma component or by commonly applying a transform kernel candidate selected by one NSPT index to a luma component and a chroma component. On the other hand, for a non-single tree, a luma component and a chroma component have an independent partition and encoding structure, respectively. In this case, the characteristics of each component may be reflected and compression efficiency may be improved by signaling a NSPT index for each component.

A NSPT kernel for the NSPT may be derived based on at least one of symmetry between intra prediction modes or symmetry between block shapes. As an example, a NSPT kernel may be derived as a NSPT kernel corresponding to at least one of a mode symmetrical to the intra prediction mode of a current block or a block shape symmetrical to the block shape of a current block. Alternatively, a NSPT kernel may be derived based on a NSPT set including one or more NSPT kernel candidates, wherein a NSPT set may be derived as a NSPT set corresponding to at least one of a mode symmetrical to the intra prediction mode of a current block or a block shape symmetrical to the block shape of a current block. Any one of one or more NSPT kernel candidates belonging to the NSPT set may be set as the NSPT kernel of a current block. For this purpose, a NSPT index specifying any one of one or more NSPT kernel candidates belonging to a NSPT set may be used. A NSPT index may be signaled through a bitstream or may be derived based on the above-described symmetry.

There may be symmetry between at least two intra prediction modes among the intra prediction modes pre-defined in a decoding device. Hereinafter, for convenience of a description, symmetry around a top-left diagonal mode (i.e., mode 34) is described. Referring to FIG. 5, there is symmetry between directional modes. Excluding a planar mode, which is no.0, and a DC mode, which is no.1, all modes have a prediction direction. Mode 2 to mode 66 may be named a normal directional mode (may be expressed as [2, 66]), and mode -14 to mode -1 (may be expressed as [-14, -1]) and mode 67 to mode 80 (may be expressed as [67, 80]) may be named a wide directional mode. A wide directional mode may include at least one of a mode having a value smaller than -14 or a mode having a value larger than 80. Referring to FIG. 5, all modes excluding mode 0 and mode 1 are symmetrical around mode 34. Specifically, mode x and mode (68 - x) are symmetrical for mode [2, 66], and mode x and mode (66 - x) are symmetrical between mode [-14, -1] and mode [67, 80]. The same symmetry relationship may be established between mode [N, -1] and mode [67, 66 - N]. Here, N may be an integer less than or equal to -14.

Meanwhile, with respect to the symmetry between block shapes, a MxN block and a NxM block may be defined as blocks with symmetry to each other. Here, M and N may be the same or different from each other. Alternatively, when the ratio of the width and height of a M1xN1 block (M1/N1) and the ratio of the height and width of a M2xN2 block (N2/M2) are the same, a M1xN1 block and a M2xN2 block may be defined as blocks with symmetry to each other. Alternatively, when the ratio of the width and height of a M1xN1 block (M1/N1) and the ratio of the height and width of a M2xN2 block (M2/N2) are the same, a M1xN1 block and a M2xN2 block may be defined as blocks with symmetry to each other.

In a square block, modes symmetrical to each other may share at least one of a NSPT set, a NSPT index or a NSPT kernel. In other words, at least one of a NSPT set, a NSPT index or a NSPT kernel for any one of the symmetrical modes may be applied equally to another one of the symmetrical modes.

As an example, modes symmetrical to each other may share one NSPT kernel. However, for any one of the symmetrical modes, a corresponding NSPT kernel may be applied to input data, and for another one, a corresponding NSPT kernel may be applied after applying a transpose operation to input data. Specifically, when mode x belongs to mode [2, 33], a 1D vector may be configured for an MxM block which is input data according to the column-first order for mode x, and an NSPT kernel may be applied to a corresponding 1D vector. Here, the configuration of a 1D vector according to the column-first order may read input data in the unit of a column from an MxM block which is input data to obtain M columns, and arrange them sequentially to configure a 1D vector. On the other hand, a 1D vector may be configured according to the row-first order for mode (68 - x) symmetrical to mode x, and the corresponding same NSPT kernel may be applied to a corresponding 1D vector. Here, the configuration of a 1D vector according to the row-first order may read input data in the unit of a row from an MxM block which is input data to obtain M rows, and arrange them sequentially to configure a 1D vector. When mode x belongs to mode [N, -1] (N ≤ -14), a 1D vector may be configured according to the row-first order for mode (66 - x) symmetrical to mode x, and the same NSPT kernel as for mode x may be applied to a corresponding 1D vector. Column-first order or row-first order may be applied to mode 0 and mode 1, and column-first order or row-first order may also be applied to mode 34. In addition, row-first order may be applied to an intra prediction mode belonging to mode [2, 33], and column-first order may be applied to a mode symmetrical to a corresponding intra prediction mode. Row-first order may be applied to an intra prediction mode belonging to mode [N, -1], and column-first order may be applied to a mode symmetrical thereto.

For a non-square block, in addition to the symmetry between intra prediction modes, the symmetry between block shapes may be further considered. A non-square block whose width and height are M and N, respectively, may be considered to have a symmetry relationship with a non-square block whose width and height are N and M, respectively. As an example, in mode [2, 66], there may be symmetry between mode x of a MxN block and mode (68 - x) of a NxM block. Similarly, when mode x of a MxN block belongs to mode [N, -1] (N ≤ -14), there may be symmetry between mode x of a MxN block and mode (66 - x) of a NxM block.

A method for configuring a 1D vector from an input data block is as described above. In other words, when column-first order is applied to mode x, row-first order may be applied to a mode symmetrical thereto. Alternatively, when row-first order is applied to mode x, column-first order may be applied to a mode symmetrical thereto. Specifically, when column-first order is applied to mode x, M columns may be obtained by reading input data in the unit of a column from a MxN block which is input data, and they may be arranged sequentially to configure a 1D vector. Here, each column may have a length of N. For a mode symmetrical to mode x, N rows may be obtained by reading input data in the unit of a row from a MxN block which is input data, and they may be arranged sequentially to configure a 1D vector. Here, each row may have a length of M. Alternatively, when row-first order is applied to mode x, N rows may be obtained by reading input data in the unit of a row from a MxN block which is input data, and they may be arranged sequentially to configure a 1D vector. Here, each row may have a length of M. For a mode symmetrical to mode x, M columns may be obtained by reading input data in the unit of a column from a MxN block which is input data, and they may be arranged sequentially to configure a 1D vector. Here, each column may have a length of N.

When a current block is a MxN block having mode x and the above-described symmetry is used for a current block, tthe NSPT set and/or NSPT kernel of a current block may be determined based on at least one of an intra prediction mode symmetrical to mode x or a block size of NxM symmetrical to a block size of MxN. Here, a NSPT kernel may be set as a NSPT kernel for a NxM block, not a NSPT kernel for a MxN block. In other words, when symmetry is used for a current block, a NSPT set and/or a NSPT kernel for a block having symmetry with a current block may be used in the same manner. As described above, a 1D vector may be configured from an input data block according to a predetermined priority, which may correspond to the input of the NSPT kernel.

In addition, there may be a limit that the symmetry is used only when the value of the intra prediction mode of a current block is greater than 34. In other words, when the value of the intra prediction mode of a current block is greater than 34, a transpose operation may be applied when configuring a 1D vector from an input data block, and a NSPT set or a NSPT kernel corresponding to a block shape and/or a mode having symmetry with a current block may be used. Specifically, when the intra prediction mode of a current block belongs to mode [N, -1] and mode [2, 34], symmetry may not be used for a current block. On the other hand, when the intra prediction mode of a current block belongs to mode [35, 66] and mode [67, 66 - N], symmetry may be used for a current block. Here, N may be an integer less than or equal to -14.

The derivation of a NSPT set or a NSPT kernel based on the symmetry may be adaptively performed based on the size of a current block. As an example, for a 4x4 block and a 8x8 block, a NSPT set or a NSPT kernel may be derived based on symmetry, and for a 4x8 block and a 8x4 block, a NSPT set or a NSPT kernel may not be derived based on symmetry.

According to whether the symmetry is used, the number of available NSPT sets may be different. As an example, when symmetry is used, the number of available NSPT sets may be 35, and when symmetry is not used, the number of available NSPT sets may be 67.

Table 9 below relates to an example in which a NSPT set is determined by using symmetry, and shows a mapping relationship between a NSPT set and an intra prediction mode when the number of available NSPT sets is 35.

**[Table 9]**

| Intra Prediction Mode | NSPT Set Index |
|---|---|
| X < 0 | 2 |
| 0 ≤ X ≤ 34 | X |
| 35 ≤ X ≤ 66 | 68 - X |
| X > 66 | 2 |

Referring to Table 9, when the value (X) of the intra prediction mode of a current block is less than 0, the NSPT set of a current block may be determined as a NSPT set having a NSPT set index of 2 among the 35 NSPT sets. When the value (X) of the intra prediction mode of a current block is greater than or equal to 0 and less than or equal to 34, the NSPT set of a current block may be determined as a NSPT set having a NSPT set index of X among the 35 NSPT sets. When the value (X) of the intra prediction mode of a current block is greater than or equal to 35 and less than or equal to 66, the NSPT set of a current block may be determined as a NSPT set having a NSPT set index of (68-X) among the 35 NSPT sets. When the value (X) of the intra prediction mode of a current block is greater than or equal to 35 and less than or equal to 66, the NSPT set of a current block may be the same as a NSPT set corresponding to the value (68-X) of a mode symmetrical to the intra prediction mode of a current block. Similarly, when the value (X) of the intra prediction mode of a current block is greater than 66, the NSPT set of a current block may be determined as a NSPT set having a NSPT set index of 2 among the 35 NSPT sets. When the value (X) of the intra prediction mode of a current block is greater than 66, the NSPT set of a current block may be the same as a NSPT set corresponding to a mode symmetrical to the intra prediction mode of a current block.

Table 10 below relates to an example in which a NSPT set is determined without using symmetry, and shows a mapping relationship between a NSPT set and an intra prediction mode when the number of available NSPT sets is 67.

**[Table 10]**

| Intra Prediction Mode | NSPT Set Index |
|---|---|
| X < 0 | 2 |
| 0 ≤ X ≤ 66 | X |
| X > 66 | 66 |

Referring to Table 10, when the value (X) of the intra prediction mode of a current block is less than 0, the NSPT set of a current block may be determined as a NSPT set having a NSPT set index of 2 among the 67 NSPT sets. When the value (X) of the intra prediction mode of a current block is greater than or equal to 0 and less than or equal to 66, the NSPT set of a current block may be determined as a NSPT set having a NSPT set index of X among the 67 NSPT sets. Similarly, when the value (X) of the intra prediction mode of a current block is greater than 66, the NSPT set of a current block may be determined as a NSPT set having a NSPT set index of 66 among the 67 NSPT sets.

The symmetry may be utilized to save a memory size needed to store a transform kernel while maintaining performance according to the application of transform. For example, when 35 NSPT sets, instead of 67 NSPT sets, are used by utilizing symmetry, a memory size needed to store a NSPT kernel may be significantly reduced.

The number of available NSPT sets and/or the number of NSPT kernel candidates belonging to a NSPT set may vary depending on a block size. For example, the number of available NSPT sets for a 4x4 block may be 35, the number of available NSPT sets for a 4x8 block and a 8x4 block may be 19 and the number of available NSPT sets for a 8x8 block may be 10. A NSPT set for a 4x4 block may be composed of three NSPT kernel candidates, a NSPT set for a 4x8 block and a 8x4 block may be composed of three or two NSPT kernel candidates and a NSPT set for a 8x8 block may be composed of one NSPT kernel candidate.

The size of a transform kernel may increase as a block size increases. Accordingly, the number of available NSPT sets and/or the number of NSPT kernel candidates belonging to a NSPT set may be reduced to save a memory size needed to store a transform kernel. In addition, as a block size increases, the characteristics of a residual signal within a corresponding block tend to become more generalized. Accordingly, reducing the number of available NSPT sets and/or the number of NSPT kernel candidates belonging to a NSPT set may help maintain compression efficiency while reducing implementation complexity by reflecting these statistical characteristics.

### Embodiment 4

A non-separable transform may be applied to a current block to which a sub-block transform (SBT) is applied. Here, a non-separable transform may include at least one of the aforementioned LFNST or NSPT.

An SBT according to the present disclosure may be applied to a block encoded by inter prediction (hereinafter, referred to as an inter block). An SBT refers to a method for partitioning one block into two sub-blocks and applying a transform only to the residual data of one of the two. In this case, the residual data of the other of the two may be set as 0.

One block may be partitioned into two sub-blocks in a horizontal or vertical direction. One block may be partitioned at the ratio of 1:1, 1:3 or 3:1. Information indicating the position of a sub-block to which an (inverse) transform is applied among the two sub-blocks may be encoded and signaled through a bitstream. For example, when one block is partitioned in a horizontal direction, based on the signaled information, a sub-block in which residual data is encoded/decoded among the top or bottom sub-blocks may be specified. When one block is partitioned in a vertical direction, based on the signaled information, a sub-block in which residual data is encoded/decoded among the left or right sub-blocks may be specified. Hereafter, for convenience of description, a sub-block in which residual data is decoded will be referred to as the first sub-block and a sub-block with residual data of 0 will be referred to as the second sub-block.

When an SBT is applied to a current block, a transform type for an SBT (trTypeHor, trTypeVer) may be determined based on the size of the first sub-block within a current block. Here, trTypeHor represents a horizontal transform type applied to the horizontal direction of the first sub-block and trTypeVer represents a vertical transform type applied to the vertical direction of the first sub-block. For example, when even one of the width and height of the first sub-block within a current block is greater than or equal to 64, a DCT-2 pair (i.e., a transform type of (DCT-2, DCT-2)) may be applied to the first sub-block. Otherwise, one of the combinations of DST-7 and DCT-8 may be adaptively applied to the first sub-block. Here, the combinations of DST-7 and DCT-8 may include at least one of (DST-7, DST-7), (DST-7, DCT-8), (DCT-8, DST-7) or (DCT-8, DCT-8). Based on information representing whether it is horizontal partitioning or the position of the first sub-block, one of the combinations of DST-7 and DCT-8 described above may be selected. When an SBT is applied to a current block, one of the combinations of DST-7 and DCT-8 may be applied only to the luma component of a current block and a DCT-2 pair may be applied to the chroma component of a current block.

When an SBT is applied to a current block, a non-separable transform may be applied to the first sub-block within a current block.

As an example, an SBT may be applied to a current block and the non-separable transform of an LFNST may be applied to the first sub-block of a current block. In this case, a transform type for the primary inverse transform of the first sub-block may be determined as a DCT-2 pair. For example, when an LFNST index for a current block (or, the first sub-block) is greater than 0, the signaling of an MTS index for a current block (or, the first sub-block) may be omitted and an MTS index may be derived as 0. An MTS index of 0 may indicate a DCT-2 pair. From the perspective of an encoder, when it is determined that the secondary transform of an LFNST is applied to the first sub-block, a DCT-2 pair-based primary transform may be applied to the first sub-block and then, the secondary transform of an LFNST may be applied. Alternatively, even when the first sub-block has a block size to which the combination of DST-7 and DCT-8 described above may be applied, when it is determined that the secondary transform of an LFNST is applied to the first sub-block, a DCT-2 pair-based primary transform may be applied to the first sub-block and then, the secondary transform of an LFNST may be applied.

Alternatively, when an SBT is applied to a current block and a transform type for the primary inverse transform of the first sub-block is a DCT-2 pair, the non-separable transform of an LFNST may be allowed for the first sub-block and an LFNST index may be signaled for a current block (or, the first sub-block). From the perspective of an encoder, when it is determined that a DCT-2 pair is used as a transform type for the primary transform of the first sub-block, the non-separable transform of an LFNST may be allowed for the first sub-block and an LFNST index may be encoded and signaled through a bitstream for a current block (or, the first sub-block).

Alternatively, an SBT may be applied to a current block and the non-separable transform of an LFNST may be applied to the first sub-block of a current block. In this case, a transform type for the primary inverse transform of the first sub-block may be determined as one of the combinations of DST-7 and DCT-8 described above. For example, when an LFNST index for a current block (or, the first sub-block) is greater than 0, an MTS index may be signaled for a current block (or, the first sub-block). Here, an MTS index may indicate one of the combinations of DST-7 and DCT-8 described above. From the perspective of an encoder, when it is determined that the secondary transform of an LFNST is applied to the first sub-block, a primary transform may be applied to the first sub-block based on one of the combinations of DST-7 and DCT-8 and then, the secondary transform of an LFNST may be applied.

Alternatively, when an SBT is applied to a current block and a transform type for the primary inverse transform of the first sub-block is one of the combinations of DST-7 and DCT-8, the non-separable transform of an LFNST may be allowed for the first sub-block and an LFNST index may be signaled for a current block (or, the first sub-block). From the perspective of an encoder, when it is determined that one of the combinations of DST-7 and DCT-8 is used as a transform type for the primary transform of the first sub-block, the non-separable transform of an LFNST may be allowed for the first sub-block and an LFNST index may be encoded and signaled through a bitstream for a current block (or, the first sub-block).

Alternatively, an SBT may be applied to a current block and the non-separable transform of an LFNST may be applied to the first sub-block of a current block. In this case, a transform type for the primary inverse transform of the first sub-block may be determined as one of a plurality of transform type candidates. Here, a plurality of transform type candidates may include a DCT-2 pair or at least one of the combinations of DST-7 and DCT-8. For example, when an LFNST index for a current block (or, the first sub-block) is greater than 0, an MTS index may be signaled for a current block (or, the first sub-block). Here, an MTS index may indicate one of the plurality of transform type candidates. From the perspective of an encoder, when it is determined that the secondary transform of an LFNST is applied to the first sub-block, a primary transform may be applied to the first sub-block based on one of a plurality of transform type candidates and then, the secondary transform of an LFNST may be applied.

Alternatively, when an SBT is applied to a current block and a transform type for the primary inverse transform of the first sub-block is one of a plurality of transform type candidates, the non-separable transform of an LFNST may be allowed for the first sub-block and an LFNST index may be signaled for a current block (or, the first sub-block). From the perspective of an encoder, when it is determined that one of a plurality of transform type candidates is used as a transform type for the primary transform of the first sub-block, the non-separable transform of an LFNST may be allowed for the first sub-block and an LFNST index may be encoded and signaled through a bitstream for a current block (or, the first sub-block).

When an SBT is applied to an inter block, a transform set for a non-separable transform shall be selected to apply a non-separable transform to a corresponding block. Here, a transform set may be referred to as an LFNST set or an NSPT set. For an intra block, a transform set may be selected through a predetermined mapping table (or, mapping rule) based on the intra prediction mode of a corresponding block. In an encoding apparatus and a decoding apparatus, a transform set applied for each intra prediction mode may be predefined. However, since an inter block does not have an intra prediction mode, an intra prediction mode for selecting a transform set may be derived. A transform set may be selected based on the derived intra prediction mode through a method identical or similar to that for an intra block. Even for an inter block, the same transform kernel(s) for a non-separable transform as an intra block may be applied or the same mapping table (or, mapping rule) may be applied.

Hereinafter, a method for deriving an intra prediction mode for selecting the transform set of an inter block will be described. An intra prediction mode for selecting the transform set may also be called a virtual intra prediction mode (VIPM).

Through a decoder side intra mode derivation (DIMD) method, an intra prediction mode may be derived for a current block. Here, a current block may be a block to which at least one of inter prediction or an SBT is applied. When an SBT is applied to a current block, a region to which an (inverse) transform is applied may correspond to a partial region of the entire block. Here, the entire block may be a coding block for a luma component (when an SBT is applied to a luma component) or may be a coding block for a chroma component (when an SBT is applied to a chroma component). The partial region may be one of the two sub-blocks belonging to the entire block (i.e., the first sub-block).

A virtual intra prediction mode for a current block (or, the first sub-block) may be derived by applying a DIMD method based on the prediction block of the first sub-block among the entire block, instead of applying a DIMD method based on the prediction block of the entire block. Alternatively, a virtual intra prediction mode for a current block (or, the first sub-block) may be derived by applying a DIMD method based on the prediction block of the entire block, instead of applying a DIMD method based on only the prediction block of the first sub-block among the entire block. In this case, since a virtual intra prediction mode is derived by utilizing more samples, the accuracy of an intra prediction mode may be increased, thereby improving coding performance. Hereinafter, for convenience of description, a DIMD method will be applied based on a current block (i.e., the entire block). However, it is not limited thereto, and of course, 'current block' may be understood by being substituted with 'first sub-block'.

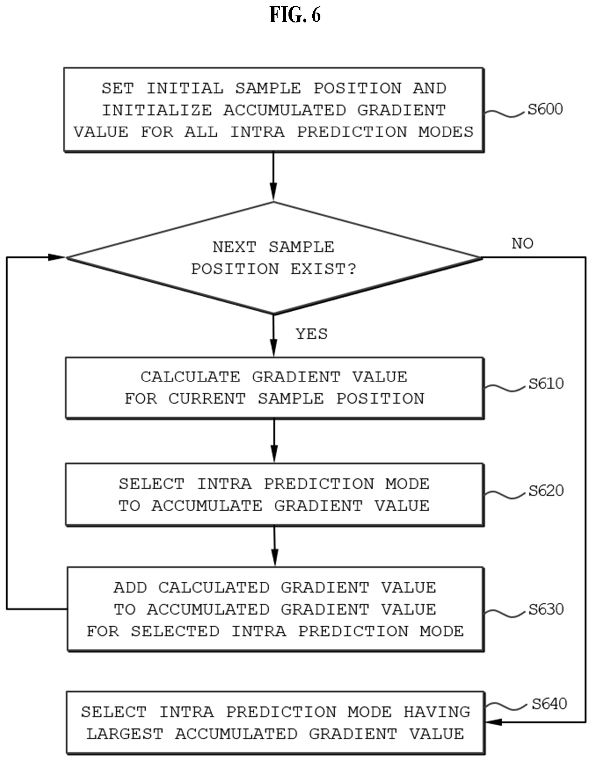

According to a DIMD method, a horizontal and/or vertical gradient value may be calculated by applying a predetermined filter to at least one of a prediction block or a neighboring region of the current block, and a specific intra prediction mode may be derived based on the calculated gradient value. A transform set to be applied to the current block may be selected based on the specific intra prediction mode. Hereinafter, a method for deriving an intra prediction mode based on the DIMD method will be described in detail with reference to FIG. 6.

Referring to FIG. 6, an initial sample position may be set, and a accumulated gradient value for all intra prediction modes may be initialized (S600). A gradient value for a current sample position may be calculated (S610). An intra prediction mode to accumulate the calculated gradient value may be selected (S620). The gradient value calculated in S610 may be added to the accumulated gradient value for the selected intra prediction mode (S630). The aforementioned processes of S610 to S630 may be performed for each of all or some sample positions belonging to the current block until a next sample position does not exist. When the next sample position does not exist, an intra prediction mode having the largest accumulated gradient value may be selected (S640).

A process of applying the DIMD method to a neighboring region of the current block is described in detail as follows. For convenience of description, it is assumed that the neighboring region is a block having a width and a height of W and H, respectively. However, as described above, the DIMD method may be applied based on a prediction block of the current block, and hereinafter, the "neighboring region" may be understood by being replaced with the "prediction block".

A filter having a size of PxQ may be applied inside the WxH block. The PxQ filter may be a 2D filter or a 1D filter. However, for samples adjacent to a block boundary, a case where the filter deviates from the block boundary may occur. The filter may be applied only to an inner region of the WxH block excluding the samples adjacent to the block boundary. Specifically, the filter may be applied only to sample positions belonging to a (W-P+1)x(H-Q+1) region, which is the inner region of the WxH block. As an example, when the size of the filter is 3x3, a 3x3 2D filter may be applied only to sample positions belonging to a (W-2)x(H-2) block excluding an edge having a length of 1 from the WxH block. In this case, the 2D filter may be applied to a 3x3 region having a sample at the sample position (hereinafter, referred to as a base sample) as a center sample.

The base sample and at least one neighboring sample adjacent to the base sample may be input to a 2D filter. Here, the neighboring sample may include a sample adjacent to at least one of top, left, bottom, right, top-left, top-right, bottom-left, or bottom-right of the base sample.

A gradient value of a specific intra prediction mode may be derived by applying a filter to each sample position belonging to the inner region. The derived gradient value may be added to a pre-derived gradient value for the specific intra prediction mode, and through this process, an accumulated gradient value may be derived for the specific intra prediction mode. When the filter is applied to all sample positions belonging to the inner region, accumulated gradient values may be derived for all intra prediction modes (or directional modes excluding a non-directional mode). An intra prediction mode having the largest accumulated gradient value may be selected, and this may be set as an intra prediction mode derived based on the DIMD method (hereinafter, referred to as a DIMD mode).

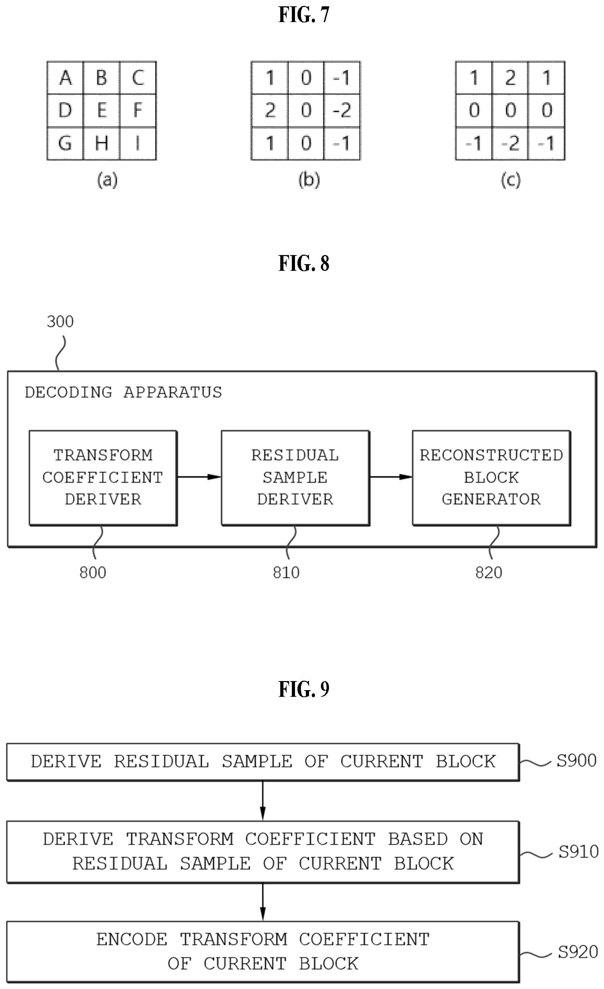

Two types of 3x3 filters as shown in FIG. 7 may be used as filters for deriving the DIMD mode, and these will be referred to as filterY and filterX, respectively. When a position where filterY and filterX are applied (i.e., a position of a base sample) is E, positions of samples related to the application of the two filters may be represented as A, B, C, D, E, F, G, H, and I. When values obtained by applying filterY and filterX are represented as iDy and iDx, respectively, iDy and iDx may be calculated as follows. [Equation 6] $\begin{matrix}iDy = A + 2 * D + G - C - 2 * F - I \\ iDx = G + 2 * H + I - A - 2 * B - C\end{matrix}$

When iDy and iDx are 0, subsequent processes (i.e., processes of obtaining a gradient value, selecting a specific intra prediction mode, and adding the gradient value to an accumulated gradient value for the specific intra prediction mode) may be omitted, and the process may proceed to a next sample position to which a filter is to be applied.

A function 'abs' may be a function that obtains and returns an absolute value for an input value. A value of iAmp may be calculated as follows. This may correspond to step S610 of FIG. 6. [Equation 7] $iAmp = abs \left(iDx\right) + abs \left(iDy\right)$

When at least one of iDx or iDy is 0, iAngUneven, which is a value of a specific intra prediction mode to be selected, may be determined as shown in Equation 8 below. This may correspond to step S620 of FIG. 6 for a case where at least one of iDx or iDy is 0. [Equation 8] $iAngUneven = \left(iDx==0\right) ? VER_IDX : HOR_IDX$

In Equation 8, VER_IDX and HOR_IDX may denote a vertical mode and a horizontal mode, respectively. For example, VER_IDX and HOR_IDX may correspond to mode 50 and mode 18 in FIG. 5, respectively. That the value of iDx is 0 may mean that a variation in a vertical direction is zero or negligible. In other words, it may mean that samples are considered to have the same sample values in the vertical direction, and thus prediction is well performed in the vertical direction. Conversely, that the value of iDy is 0 (i.e., when the value of iDx is not 0) may mean that a variation in a horizontal direction is zero or negligible. In other words, it may mean that samples are considered to have the same sample values in the horizontal direction, and thus prediction is well performed in the horizontal direction.

When both iDx and iDy are not 0, iAngUneven, which is a value of a specific intra prediction mode to be selected, may be determined as follows. This may correspond to step S620 of FIG. 6 for a case where both iDx and iDy are not 0.

First, values of intra prediction modes (in particular, values of directional modes) may be classified into four groups as follows.

The first group (region 0) may consist of a specific number of modes having horizontal directionality. As an example, the first group may consist of modes less than or equal to a value of a horizontal mode. In FIG. 5, modes having horizontal directionality are mode 2 to mode 34 (provided that mode 34 may not be included in the modes having horizontal directionality), and the value of the horizontal mode is 18 (i.e., the horizontal mode is mode 18). When the specific number is N, the first group may consist of {18, 18-1, 18-2, ... , 18-(N-1)} modes. When N is 17, the first group may consist of {18, 17, 16, ... , 2} modes.

The second group (region 1) may consist of a specific number of modes having horizontal directionality. As an example, the second group may consist of modes greater than or equal to a value of a horizontal mode. When the specific number is N, the second group may consist of {18, 18+1, 18+2, ... , 18+(N-1)} modes. When N is 17, the second group may consist of {18, 19, 20, ... , 34} modes.

The third group (region 2) may consist of a specific number of modes having vertical directionality. As an example, the third group may consist of modes less than or equal to a value of a vertical mode. In FIG. 5, modes having vertical directionality are mode 34 to mode 66 (provided that mode 34 may not be included in the modes having vertical directionality), and the value of the vertical mode is 50 (i.e., the vertical mode is mode 50). When the specific number is N, the third group may consist of {50, 50-1, 50-2, ... , 50-(N-1)} modes. When N is 17, the third group may consist of {50, 49, 48, ... , 34} modes.

The fourth group (region 3) may consist of a specific number of modes having vertical directionality. As an example, the fourth group may consist of modes greater than or equal to a value of a vertical mode. When the specific number is N, the fourth group may consist of {50, 50+1, 50+2, ... , 50+(N-1)} modes. When N is 17, the fourth group may consist of {50, 51, 52, ... , 66} modes.

When groups for intra prediction modes are defined as described above, an identifier indicating a specific group may be calculated as shown in Table 11 below. Identifiers corresponding to the first group to the fourth group are 0, 1, 2, and 3, respectively.

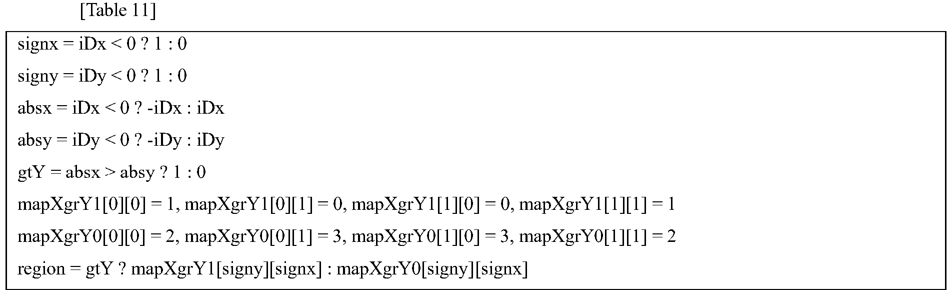

In Table 11, gtY may indicate whether a variation in a vertical direction is greater than a variation in a horizontal direction. That is, when absx is greater than absy, gtY is derived as 1, and otherwise, gtY may be derived as 0. Here, when gtY is 1, it indicates that the variation in the vertical direction is greater than the variation in the horizontal direction, and when gtY is 0, it may indicate that the variation in the vertical direction is less than or equal to the variation in the horizontal direction. That the variation in the vertical direction is large may mean that a probability of prediction being well performed in the vertical direction is low. In this case, region 0 or region 1 may be selected. That is, mapXgrY1 [signy][signx] may be selected as an identifier for the region. That the variation in the horizontal direction is large may mean that a probability of prediction being well performed in the horizontal direction is low. In this case, region 2 or region 3 may be selected. That is, mapXgrY0[signy][signx] may be selected as an identifier for the region.

In addition, for a horizontal direction, a direction indicated by a positive variation may be right, and a direction indicated by a negative variation may be left. For a vertical direction, a direction indicated by a positive variation may be bottom, and a direction indicated by a negative variation may be top. When a sign for iDx and a sign for iDy are the same, region 1 or region 2 may be selected, and when the sign for iDx and the sign for iDy are different, region 0 or region 3 may be selected.

Next, a ratio value scaled to an integer value may be obtained as shown in Table 12 below.

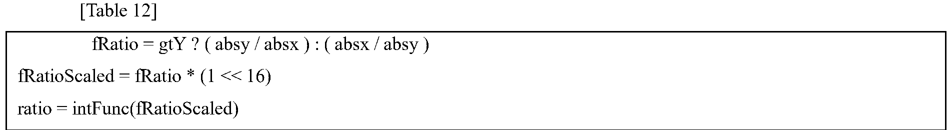

In Table 12, (1 << 16) means shifting 1 to the left by 16, which represents 65536, i.e., 2¹⁶. An 'intFunc' function may be a function that converts fRatioScaled expressed as a decimal value into an integer value. For the conversion into the integer value, operations such as round, ceiling, or floor may be applied. The conversion into the integer value may also be performed using a casting function such as 'int' provided by a C/C++ library. In Table 12, a division operation (/) may be required to obtain a ratio of absy and absx. However, when a codec is implemented (particularly when implemented in hardware), there is a problem that implementation costs for the division operation are expensive or the implementation is not easy. Accordingly, it is often advantageous in terms of implementation to approximate the division operation with a combination of several integer operations. Therefore, equations for obtaining the ratio may be approximated by equations in Table 13 below.

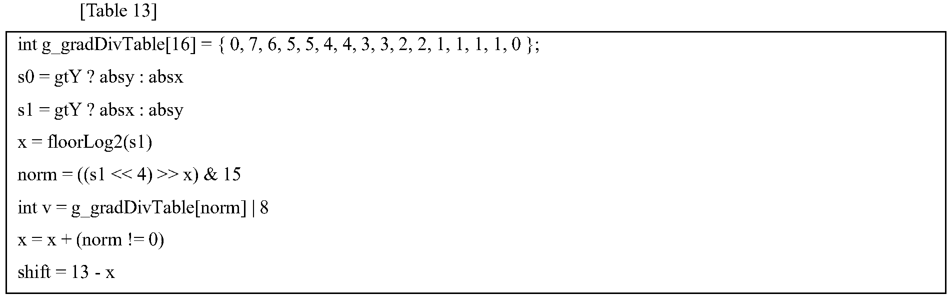

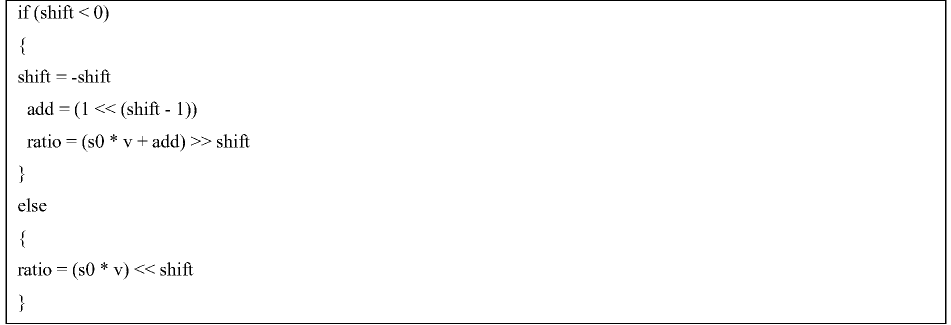

An integerized ratio value may be determined through a process as shown in Table 13. Which position in 'angTable' the ratio value is closest to may be determined as shown in Table 14 below.

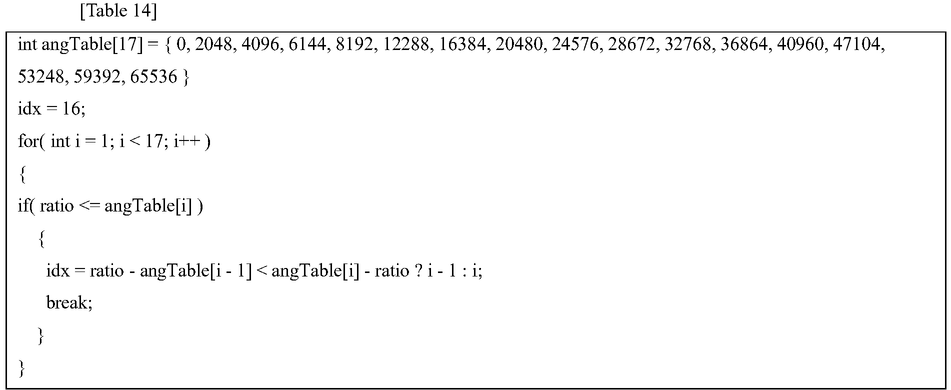

According to Table 14, angTable may consist of 17 entries. When each of the aforementioned groups consists of 17 modes, each of the intra prediction modes constituting each group may correspond to an entry. In Table 14, an entry of angTable closest to a ratio value is found, and a value of idx may be derived based on an index of angTable corresponding to the entry.

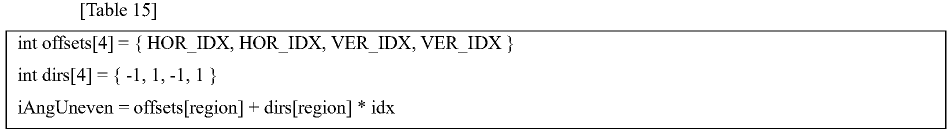

Table 15 is described according to C/C++ syntax. A value of an intra prediction mode to accumulate a gradient value for a current sample position within a current block to which a filter is applied may be assigned to iAngUneven. The previously derived region may be an identifier indicating any one of four groups. offsets[region] may represent a starting value of an intra prediction mode for a group indicated by the region, and dirs[region] may represent a directionality in which the corresponding intra prediction mode increases or decreases. idx may represent a position within the angleTable. Accordingly, a value of iAngUneven may be determined through an equation as shown in Table 15.

A process of adding an accumulated gradient value for a selected specific intra prediction mode may be performed as follows. [Equation 9] $piHistogram \left[iAngUneven\right] + = iAmp$

In Equation 9, a 'piHistogram' array is an array storing accumulated gradient values for all intra prediction modes, and after being initialized to 0, a gradient value may be calculated while looping through sample positions of an inner region within a current block to which a filter is applied. In this case, a gradient value calculated for a current sample position is added to an accumulated gradient value for a selected specific intra prediction mode. As described above, a value of an intra prediction mode selected for the current sample position to which the filter is applied may be stored in iAngUneven, and a gradient value calculated for the corresponding sample position may be stored in iAmp. An accumulated gradient value for an intra prediction mode indicated by iAngUneven may be stored in piHistogram[iAngUneven]. Equation 9 may correspond to step S630 of FIG. 6.

When the loop is completed for the sample positions of the inner region within the block to which the filter is applied, accumulated gradient values for all intra prediction modes are stored in the 'piHistogram' array. One or two or more modes having the largest accumulated gradient value may be selected. The selected mode may be referred to as a DIMD mode. This may correspond to step S640 in FIG. 6.

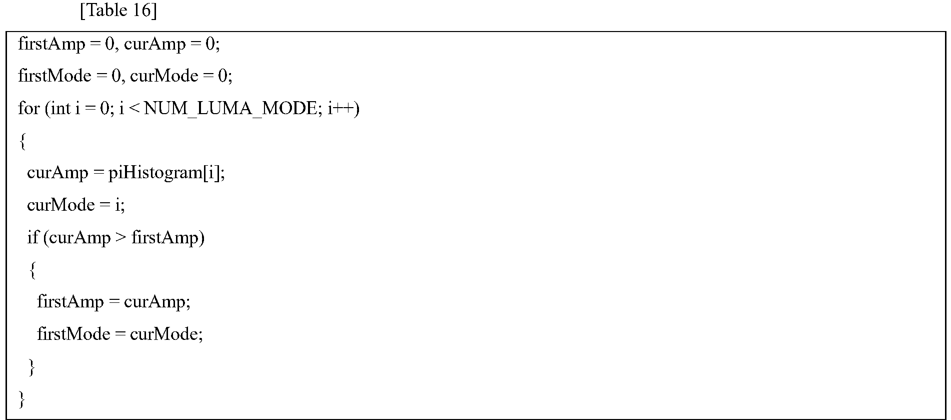

Table 16 is described according to C/C++ syntax. NUM_LUMA_MODE may represent the number of all intra prediction modes available as the DIMD mode. For example, NUM_LUMA_MODE may be 67. According to Table 16, a value of an intra prediction mode having the largest accumulated gradient value may be assigned to a 'firstMode' variable. Accordingly, an intra prediction mode corresponding to the finally determined value of the 'firstMode' variable may be set as the DIMD mode for the WxH block.

As described above, when an SBT is applied to a current block, a current block may be partitioned into two sub-blocks and an (inverse) transform may be applied only to the first sub-block among the two sub-blocks. The residual data of the second sub-block may be set as 0. Based on the size of the first sub-block, it may be determined whether an LFNST or an NSPT is applied to a current block (or, the first sub-block). Based on the size of the first sub-block, it may be determined whether both an LFNST and an NSPT are not applied.

For example, a size in which an NSPT is allowed instead of an LFNST may be pre-defined in an encoding apparatus and a decoding apparatus. When the size of the first sub-block within a current block corresponds to a size in which an NSPT is allowed instead of an LFNST, an NSPT may be applied and an LFNST may not be applied to the first sub-block. It is assumed that a size in which an NSPT is allowed instead of an LFNST includes a 4x8 block. If an 8x8 coding block is partitioned in a vertical direction and partitioned into two 4x8 sub-blocks, an NSPT may be applied and an LFNST may not be applied to a 4x8 block corresponding to the first sub-block.

A size in which both an LFNST and an NSPT are not allowed may be pre-defmed in an encoding apparatus and a decoding apparatus. When the size of the first sub-block generated by partitioning a current block corresponds to a size in which both an LFNST and an NSPT are not allowed, an LFNST and an NSPT may not be applied to the first sub-block.

When a current block is encoded in a single tree structure, a current block may include a luma block and a chroma block. A chroma block may include a Cb block and a Cr block. An SBT may be applied to the luma block and chroma block of a current block, respectively. In this case, a non-separable transform may be allowed for a luma block and a non-separable transform may not be allowed for a chroma block. Alternatively, a non-separable transform may be allowed for a luma block and a chroma block, respectively. Even when a non-separable transform is allowed for a luma block and a chroma block, respectively, when the size of the first sub-block within each component block corresponds to a size in which a non-separable transform is not allowed, a non-separable transform may not be applied to a corresponding component block. For example, when a color format is 4:2:0, the size of a luma block may be MxN and the size of a chroma block may be (M/2)x(N/2). It is assumed that a non-separable transform is allowed only when both the width and height of a transform block are greater than or equal to 4. When the size of a luma block is 8x8 and a luma block is partitioned into two 8x4 sub-blocks due to the application of an SBT, a non-separable transform may be applied to an 8x4 sub-block corresponding to the first sub-block. On the other hand, a chroma block corresponding to the luma block may have a block size of 4x4 and may be partitioned into two 4x2 sub-blocks through the same partition method as a luma block. In this case, since the height of the sub-blocks of a chroma block is less than 4, a non-separable transform may not be applied to a 4x2 sub-block corresponding to the first sub-block of a chroma block.

The selected transform set may include a plurality of transform kernel candidates. An index indicating any one of the plurality of transform kernel candidates may be signaled. The index herein may be expressed as an NSPT index or an LFNST index according to a type of the non-separable transform. Alternatively, an index may be expressed as a transform index.

The index may be signaled based on whether a predetermined zero-out condition is satisfied. In terms of an encoder, when a non-separable transform is applied to a current block (or, the first sub-block), a current block (or, the first sub-block) is required to satisfy the zero-out condition. For an SBT, since a non-zero transform coefficient does not exist in the second sub-block, a zero-out condition may be checked only for the first sub-block.

Hereinafter, a zero-out condition will be described in detail. When a forward non-separable transform is applied to an MxN block, R transform coefficients may be generated. For an LFNST, an LFNST may be applied to a region of interest (ROI) region within an MxN block. When input data is multiplied by an RxS matrix, which is a forward transform matrix, R transform coefficients may be generated (wherein, R≤S≤M*N), and R transform coefficients may be arranged sequentially according to a predetermined scan order within an MxN block. An RxS matrix may mean a transform matrix that an input length is S and an output length is R. Here, the input length may represent the number of transform coefficients (or, residual samples) input to a non-separable transform and the output length may represent the number of transform coefficients output from a non-separable transform. For example, R transform coefficients may be arranged sequentially from a DC position according to a diagonal scan order, a horizontal scan order or a vertical scan order. A region where R transform coefficients are not arranged within an MxN block (hereinafter, referred to as the remaining regions) may be filled with 0. A transform coefficient belonging to the remaining regions may be set as 0. When a forward non-separable transform is applied to an MxN block, it is required that the values of all transform coefficients belonging to the remaining regions are 0. Accordingly, in terms of a decoder, when a non-zero transform coefficient does not exist in the remaining regions within an MxN block, it may correspond to a case in which a zero-out condition is satisfied. Conversely, when at least one non-zero transform coefficient exists in the remaining regions within the MxN block, it may correspond to a case in which a zero-out condition is not satisfied.

When a current block is encoded in a single tree structure, a current block may include a plurality of color component blocks. Here, a plurality of color component blocks may include a luma block and a chroma block. A non-separable transform may be applied to a specific component and a non-separable transform may not be applied to other components. In this case, it may be configured to check whether a zero-out condition is satisfied only for a specific component to which a non-separable transform is applied (e.g., a luma component). When a zero-out condition is satisfied for a specific component to which a non-separable transform is applied, an index for the non-separable transform may be signaled.

Alternatively, even when a non-separable transform is applied only to a specific component, it may be configured to check whether a zero-out condition is satisfied for all components. However, a zero-out condition for a component to which a non-separable transform is not applied may correspond to a zero-out condition when it is assumed that a transform kernel for a non-separable transform is applied to a corresponding color component block. A transform kernel herein may be determined based on the size of a transform block (or, the first sub-block) corresponding to a corresponding color component block. An index may be signaled for a current block (or, the first sub-block) when a zero-out condition is satisfied for all components.

When an SBT is applied to a current block, an index may be signaled when a non-zero transform coefficient exists at a sample position other than a DC position in at least one of all color component blocks of a current block. The DC position may refer to a top-left sample position within a color component block (or, the first sub-block of a color component block). Alternatively, an index may also be signaled when a non-zero transform coefficient exists at a sample position other than a DC position in a color component block (or, the first sub-block) for a specific component to which a non-separable transform is applied (e.g., a luma component).

When an SBT is applied to a current block, an index may be signaled when a non-zero transform coefficient exists in at least one first sub-block among all color component blocks of a current block. Alternatively, an index may be signaled when a non-zero transform coefficient exists in the first sub-block of a color component block for a specific component to which a non-separable transform is applied (e.g., a luma component).

An intra block copy (IBC) mode may be applied in an intra slice (e.g., slice I) and an inter slice (e.g., slices P and B). A non-separable transform may be applied to a block to which an IBC mode is applied. Here, a non-separable transform may include at least one of an LFNST or an NSPT.

An IBC mode is functionally similar to an inter prediction mode, but is different in that a reference block belongs to a pre-reconstructed region within a current picture to which a current block belongs. For example, a reference block may be specified based on a block vector other than a motion vector. When the resolution of a block vector is not integer-pel, a reference block may be specified through an interpolation process. However, it is similar to inter prediction in that it derives a prediction block most similar to a current block. Accordingly, a method in which a virtual intra prediction mode (VIPM) is derived based on the aforementioned DIMD method and a transform set is selected based on a virtual intra prediction mode may be applied equally even when an IBC mode is applied.

When an IBC mode is applied to a current block, a non-separable transform may be applied to the luma component of a current block and a non-separable transform may not be applied to the chroma component of a current block. Alternatively, an IBC mode may also be applied to a chroma component. In this case, a non-separable transform may also be applied to a chroma component.

In a single tree structure, an IBC mode may be applied to a luma component and a chroma component. Here, a block vector for a luma component may be signaled. A block vector for a chroma component may be derived based on a block vector for a luma component. For example, a block vector for a chroma component may be derived from a block vector for a luma component by considering a color format, etc.

When an IBC mode is applied to a current block and a current block is encoded in a single tree structure, a non-separable transform may be applied to a luma component and a non-separable transform may not be applied to a chroma component. Alternatively, when an IBC mode is applied to a current block and a current block is encoded in a single tree structure, a non-separable transform may also be applied to both a luma component and a chroma component.

When a current block is encoded in a single tree structure, a non-separable transform may be applied to both a luma component and a chroma component based on one index. For example, one of a plurality of transform kernel candidates belonging to a transform set may be selected through an index. In this case, for a luma component, a transform set applied to the size of a luma block may be selected, and for a chroma component, a transform set applied to the size of a chroma block may be selected.

In a dual tree structure, an IBC mode may be applied to a luma component and an IBC mode may not be applied to a chroma component. A non-separable transform may be applied to a luma component and a non-separable transform may not be applied to a chroma component. For example, an IBC mode may be applied to a block where a tree type is a dual tree luma and an IBC mode may not be applied to a block where a tree type is a dual tree chroma. Alternatively, an IBC mode may also be applied to a chroma component in a dual tree structure. In this case, a non-separable transform may also be applied to a chroma component.

Hereinafter, a method for signaling an index for a non-separable transform in case of an IBC mode will be described in detail.

According to a tree type of a current block, the current block may include one or more color component blocks. As an example, when the tree type of the current block is a single tree, the current block may include one luma block and two chroma blocks. Here, the two chroma blocks may include a Cb block and a Cr block. When the tree type of the current block is a dual tree (particularly, when the tree type of the current block is a dual tree luma), the current block may include one luma component block. When the tree type of the current block is a dual tree (particularly, when the tree type of the current block is a dual tree chroma), the current block may include two chroma blocks. The current block may be one coding unit or coding block, and each color component block belonging to the current block may be a coding block or a transform block.

The current block or each color component block may include one or more transform blocks. For example, when an intra subpartitions (ISP) mode is applied to the current block, the current block may be partitioned into a plurality of transform blocks. Alternatively, when the ISP mode is applied to a specific color component block, the corresponding color component block may be partitioned into a plurality of transform blocks.

For all color component blocks belonging to the current block, when a non-zero transform coefficient exists at a sample position other than a DC position (e.g., a top-left sample position within a corresponding color component block) within a color component block, an index may be signaled for the current block. When there is at least one color component block in which a non-zero transform coefficient exists only at the DC position among all the color component blocks belonging to the current block, the index may not be signaled for the current block.

Alternatively, when a non-zero transform coefficient exists at a sample position other than the DC position within a color component block in any one of a plurality of color component blocks belonging to the current block, the index may be signaled for the current block.

A non-separable transform may be allowed/applied only for any one of the color component blocks (e.g., a luma component block), and the non-separable transform may not be allowed/applied for other color component blocks. Alternatively, the non-separable transform may be allowed/applied for two or more component blocks among the color component blocks.

When the current block is a block coded with inter prediction, the current block may have a single tree structure. When a non-zero transform coefficient exists at a sample position other than a DC position within at least one color component block among a plurality of color component blocks belonging to such a current block, an index may be signaled for the current block.

When a tree type of a current block is a single tree, an index may be signaled for the current block when at least one non-zero transform coefficient exists in a luma block of the current block (e.g., when a value of a coded block flag (CBF) for the luma block is not 0). In case that the tree type of the current block is a single tree, when it is limited to applying a non-separable transform only to the luma block, whether to signal the index may be determined by checking only the CBF for the luma block. When the index is not signaled, a value of the index may be inferred as 0. When the value of the index is 0, it may indicate that the non-separable transform is not applied.

When the tree type of the current block is a single tree, the index may be signaled for the current block when at least one non-zero transform coefficient exists in any one of a plurality of color component blocks belonging to the current block. In the case of the single tree, the non-separable transform may be applied to all color component blocks constituting one coding unit, or may be applied only to some color component blocks (e.g., a luma or chroma block). Regardless of to which color component block the non-separable transform is applied, the index may be signaled for the current block when at least one non-zero transform coefficient exists in any one color component block. For example, when a value of the CBF for at least one of the color component blocks of the current block is 1, the index may be signaled for the current block.

When the current block is a block coded with inter prediction, the current block may have a dual tree structure. When a tree type of the current block is a dual tree chroma (DUAL_TREE_CHROMA), an index may be signaled for the current block only when at least one non-zero transform coefficient exists for one designated color component block.

Here, the designated color component block is identically designated in an encoding apparatus and a decoding apparatus, and may be a Cb or Cr block. Alternatively, information indicating the designated color component block may be separately signaled. Alternatively, the designated color component block may be derived based on a neighboring context. For example, when a joint Cb-Cr mode is applied, a color component block for which a transform coefficient is actually signaled may be derived as the designated color component block.

Alternatively, when a tree type of a current block is a dual tree chroma (DUAL_TREE_CHROMA), an index may be signaled for the current block when at least one non-zero transform coefficient exists in any one of Cb and Cr blocks. For example, even when at least one non-zero transform coefficient exists in any one of the Cb and Cr blocks but no non-zero transform coefficient exists in the other, the index may be signaled for the current block including the corresponding Cb and Cr blocks.

The current block may be a block coded with inter prediction and include a plurality of color component blocks. When all color component blocks belonging to the current block are not coded with a transform skip, a non-separable transform may be allowed for the current block. When all color component blocks belonging to the current block are not coded with the transform skip, the non-separable transform may be applied to at least one of the color component blocks belonging to the current block. When any one of the plurality of color component blocks belonging to the current block is coded with the transform skip, the non-separable transform may not be allowed/applied to all the color component blocks belonging to the current block. For example, in case that a tree type of the current block is a single tree, the non-separable transform may be allowed/applied to at least one of luma and chroma blocks of the current block when the luma and chroma blocks of the current block are not coded with the transform skip. In other words, when any one of the luma and chroma blocks of the current block is coded with the transform skip, the non-separable transform may not be allowed/applied to the luma and chroma blocks of the current block.

When the current block is a block coded with inter prediction, at least one of whether a transform skip is applied or whether a non-separable transform is applied may be determined for each of a plurality of color component blocks belonging to the current block. Through this, the transform skip or the non-separable transform may be applied to each of the plurality of color component blocks belonging to the current block. As an example, when the current block is a block coded with inter prediction and a tree type of the current block is a single tree, the current block may consist of a luma block, a Cb block, and a Cr block, and each component block may consist of one transform block. In this case, at least one of whether the transform skip is applied or whether the non-separable transform is applied may be determined for each color component block. When the non-separable transform is applied to at least one color component block, an index may be signaled for the current block. On the other hand, when the transform skip is applied to all color component blocks (e.g., when a transform skip flag for all color component blocks is 1), the index is not signaled for the current block, and the non-separable transform may not be applied to all the color component blocks.

An index may be signaled for a current block when the current block coded with inter prediction satisfies a predetermined zero-out condition. In terms of an encoder, when a non-separable transform is applied to the current block coded with inter prediction, the current block is required to satisfy the zero-out condition. Hereinafter, the zero-out condition will be described in detail. When a forward non-separable transform is applied to an MxN block, R transform coefficients may be generated. In the case of LFNST, the LFNST may be applied to a ROI (Region Of Interest) region within the MxN block. R transform coefficients may be generated by multiplying input data by an RxS matrix, which is a forward transform matrix (here, R ≤ S ≤ M*N), and the R transform coefficients may be sequentially arranged within the MxN block according to a predetermined scan order. The RxS matrix may mean a transform matrix having an input length of S and an output length of R. Here, the input length may indicate the number of transform coefficients (or residual samples) input to the non-separable transform, and the output length may indicate the number of transform coefficients output from the non-separable transform. For example, the R transform coefficients may be sequentially arranged from a DC position according to a diagonal scan order, a horizontal scan order, or a vertical scan order. A region in which the R transform coefficients are not arranged within the MxN block (hereinafter, referred to as a remaining region) may be filled with 0. Transform coefficients belonging to the remaining region may be set to 0. When the forward non-separable transform is applied to the current block, values of all transform coefficients belonging to the remaining region are required to be 0. Accordingly, in terms of a decoder, a case where no non-zero transform coefficient exists in the remaining region within the current block may correspond to a case where the zero-out condition is satisfied. Conversely, a case where at least one non-zero transform coefficient exists in the remaining region within the current block may correspond to a case where the zero-out condition is not satisfied.

When a tree type of a current block is a single tree, the current block may consist of a plurality of color component blocks. In this case, a non-separable transform may be applied to any one of the plurality of color component blocks, and the non-separable transform may not be applied to other color component blocks. For the color component blocks to which the non-separable transform is not applied, it may be configured such that a zero-out condition should be satisfied regardless of whether the non-separable transform is applied. However, the zero-out condition for the color component blocks to which the non-separable transform is not applied may correspond to a zero-out condition under an assumption that a transform kernel for the non-separable transform is applied to the corresponding color component block. The transform kernel herein may be determined based on a size of a transform block corresponding to the corresponding color component block. For example, even when the non-separable transform is applied to a luma block of the current block but the non-separable transform is not applied to Cb and Cr blocks, an index may be signaled for the current block when the zero-out condition is satisfied for all the color component blocks.

Alternatively, when a tree type of a current block is a single tree, the current block may consist of a plurality of color component blocks. In this case, a non-separable transform may be applied to any one of the plurality of color component blocks, and the non-separable transform may not be applied to other color component blocks. In signaling an index for the non-separable transform, it may be configured not to check whether a zero-out condition is satisfied for the color component blocks to which the non-separable transform is not applied. For example, when the current block is a block coded with inter prediction and the tree type of the current block is a single tree, the non-separable transform may be applied only to a luma block of the current block. In this case, regardless of whether the zero-out condition is satisfied for Cb and Cr blocks to which the non-separable transform is not applied, the index may be signaled for the current block when the zero-out condition is satisfied for the luma block.

An index for a block coded with inter prediction may be signaled in a different manner from a block coded with intra prediction.

As an example, an index for a block coded with intra prediction may be expressed by applying fixed-length binarization. For example, the index may have any one value of 0 to 3. Here, an index of 0 indicates that a non-separable transform is not applied, and indices of 1 to 3 may represent transform kernel candidates for the non-separable transform, respectively. Binary codes 00, 01, 10, and 11 may be assigned to the indices of 0 to 3, respectively.

An index for a block coded with inter prediction may be expressed by applying truncated unary binarization. For example, the index may have any one value of 0 to 3. Here, an index of 0 indicates that a non-separable transform is not applied, and indices of 1 to 3 may represent transform kernel candidates for the non-separable transform, respectively. Binary codes 0, 10, 110, and 111 may be assigned to the indices of 0 to 3, respectively.

A context (e.g., CABAC context) assigned for encoding/decoding of the index may be determined based on at least one of a tree type of the current block or a size of the current block.

As an example, an index for a block coded with inter prediction may be expressed by applying truncated unary binarization. Here, it is assumed that the index has any one value of 0 to 3. An index of 0 indicates that a non-separable transform is not applied, and indices of 1 to 3 may represent transform kernel candidates for the non-separable transform, respectively. Binary codes 0, 10, 110, and 111 may be assigned to the indices of 0 to 3, respectively. Six contexts may be assigned to code a total of three bins. Hereinafter, for convenience of description, the six contexts will be named by being classified into first to sixth contexts.

A context for a first bin may be determined based on a tree type of a current block. For example, when the tree type of the current block is a single tree, a first context may be assigned, and otherwise (e.g., when the tree type is a dual tree), a second context may be assigned. However, when index coding based on truncated unary binarization is applied only to a block coded with inter prediction and the corresponding block is coded only as a single tree, the second context assigned for the case of the dual tree may be removed from the six contexts.

A context for a second bin may be determined based on a size of the current block. Here, the size of the current block may be defined as at least one of a width, a height, a minimum value of the width and the height, a maximum value of the width and the height, a product of the width and the height, or a sum of the width and the height. For example, when the width and the height of the current block are greater than or equal to a predetermined threshold size, a fifth context may be assigned, and otherwise, a third context may be assigned. Here, the threshold size may be 16. However, it is not limited thereto, and the threshold size may be 8, 32, or 64.

A context for a third bin may be determined based on a size of the current block. Here, the size of the current block may be defined as at least one of a width, a height, a minimum value of the width and the height, a maximum value of the width and the height, a product of the width and the height, or a sum of the width and the height. The size in the third bin may be defined identically to or differently from the size in the second bin. For example, when the width and the height of the current block are greater than or equal to a predetermined threshold size, a sixth context may be assigned, and otherwise, a fourth context may be assigned. Here, the threshold size is as described above.

According to the aforementioned disclosure, block sizes are classified into two groups, and a context may be determined according to a group to which the current block belongs. Alternatively, the block sizes may be classified into three or more groups, and a different context may be assigned to each group. For example, the block sizes may be classified into four groups. Here, a first group may include 4x4, 4x8, 8x4, and 8x8 blocks; a second group may include 4x16, 16x4, 8x16, 16x8, and 16x16 blocks; a third group may include 4x32, 32x4, 8x32, 32x8, 16x32, 32x16, and 32x32 blocks; and a fourth group may include blocks having a width or a height greater than 32. For the four groups, different contexts may be assigned for each bin.

When a coding tool that performs prediction in a sub-block unit (e.g., overlapped block motion compensation (OBMC), an affine mode) is applied, the boundary of a sub-block may be prominent. To elaborate, since data predicted through a different motion vector in a sub-block unit or used for prediction in a sub-block unit is different, a difference occurs in the boundary value of neighboring sub-blocks, which may make the boundary of a sub-block prominent. In this case, a separate transform set or transform kernel applied may be defined. A separate transform set(s) for an inter prediction mode that performs prediction in a sub-block unit may be defined and a transform set (or, a transform kernel) may be selected based on a virtual intra prediction mode.

The residual block of a current block may have different statistical characteristics according to the motion vector resolution. Accordingly, a transform set for a non-separable transform may be determined based on the motion vector resolution related to a current block. A transform kernel for a non-separable transform may be determined based on the motion vector resolution related to a current block. A virtual intra prediction mode for selecting a transform set (or, a transform kernel) may be derived based on the motion vector resolution related to a current block.

The motion vector resolution may be derived based on information signaled through a bitstream or may be implicitly derived from an encoding/decoding apparatus. An interpolation filter used may vary depending on the motion vector resolution. For example, since the value of a motion vector that may not be expressed as a 1/4-pixel resolution (e.g., a 3/8 pixel) exists at a 1/8-pixel resolution, in this case, an interpolation filter different from an interpolation filter applied at a 1/4-pixel resolution may be required.

For each coding tool for inter prediction, a flag related to whether a non-separable transform (an LFNST or an NSPT) may be applied together when a corresponding coding tool is applied may be signaled. A corresponding flag may be signaled in a high-level syntax. Here, a high-level syntax may include at least one of a sequence parameter set (SPS), a picture parameter set (PPS), a picture header (PH) or a slice header (SH).

In addition, a flag related to whether a non-separable transform is applied when a corresponding coding tool is applied may be signaled at a block level (e.g., a CTU, CU or TU level). Whether a coding tool for inter prediction is applied and whether a non-separable transform is applied may be signaled at a block level. For example, a flag related to whether a coding tool for inter prediction is applied and a flag related to whether a non-separable transform is applied may be signaled, respectively. Alternatively, whether a coding tool for inter prediction is applied and whether a non-separable transform is applied may also be indicated together by using one flag.

Alternatively, for a specific coding tool for inter prediction, based on whether a specific condition is satisfied, it may be determined whether a non-separable transform may be applied (or, whether a non-separable transform is applied). For example, when the specific condition is satisfied, it may be determined that a non-separable transform may be applied or is applied without signaling of the aforementioned flag. The specific condition will be described later.

Alternatively, for a specific coding tool for inter prediction, at least one of the number of available transform sets or the number of transform kernel candidates belonging to one transform set may be different from other coding tools. In addition, considering the characteristics of residual data generated through inter prediction, at least one of the number of transform sets available for a current block or the number of transform kernel candidates belonging to one transform set may be determined differently. To elaborate, when the pattern of residual data for a specific coding tool has a constant form or shows a somewhat simple form, the number of available transform sets or transform kernel candidates may be set to be small. It may reduce a cost for signaling an index and improving coding performance.

The characteristics of the residual data may be defined as the sum of the absolute values of transform coefficients. A category to which the sum of the absolute values of the transform coefficients belongs may be derived, and the number of available transform sets or the number of transform kernel candidates may be set by responding to a corresponding category. However, it is merely an example, and the characteristics of residual data may be defined as the average value or mode of the absolute values of transform coefficients. Alternatively, the characteristics of residual data may also be defined as a difference between transform coefficients adjacent to each other.

When the specific condition is satisfied, the following configurations may be applied to a non-separable transform.

(Configuration 1) An LFNST and an NSPT are not applied.

(Configuration 2) The number of transform coefficients generated by applying a forward non-separable transform is adjusted.

(Configuration 3) The number of available transform kernel candidates belonging to a transform set is adjusted.

The (Configuration 1) corresponds to a case in which when a specific condition is satisfied, an LFNST and an NSPT are disabled because it is determined that the effect of a non-separable transform is insignificant. Since an LFNST and an NSPT are not applied, the complexity of an encoding apparatus may be reduced and energy required to perform a non-separable transform may be saved.

In the (Configuration 2), the number of transform coefficients generated when a specific condition is satisfied may be less than the number of transform coefficients generated otherwise. Since this configuration signals a smaller amount of transform coefficient data, it may reduce a bit-rate. Alternatively, for the (Configuration 2), the number of transform coefficients generated when a specific condition is satisfied may be greater than the number of transform coefficients generated otherwise. This configuration may express residual data (or, primary transform coefficient data) more sophisticatedly, thereby improving image quality.

In the (Configuration 3), the number of available transform kernel candidates when a specific condition is satisfied may be less than the number of available transform kernel candidates otherwise. This configuration may reduce the signaling cost of an index for a non-separable transform. Alternatively, in the (Configuration 3), the number of available transform kernel candidates when a specific condition is satisfied may be greater than the number of available transform kernel candidates otherwise. This configuration may cover more diverse patterns of residual data (or, primary transform coefficient data) with increased transform kernel candidates, thereby improving image quality.

At least one of the (Configuration 1) to (Configuration 3) is applied when a specific condition is satisfied, and a specific condition herein may include at least one of the conditions 1 to 36 described below.
[Condition 1] When local illumination compensation (LIC) is applied
[Condition 2] When a non-adjacent spatial candidate is selected
[Condition 3] When an (enhanced) TMVP (including SbTMVP) is applied
[Condition 4] When template matching is applied
[Condition 5] When multi-pass decoder-side motion vector refinement is applied
[Condition 6] When adaptive decoder-side motion vector refinement is applied
[Condition 7] When OBMC is applied
[Condition 8] When template matching based OBMC is applied
[Condition 9] When history-parameter-based affine model inheritance is applied or a non-adjacent affine mode is applied
[Condition 10] When sample-based BDOF is applied
[Condition 11. When multi-hypothesis Prediction (MHP) is applied
[Condition 12] When adaptive reordering of merge candidates with template matching (ARMC-TM) is applied
[Condition 13] When MV candidate type based ARMC is applied
[Condition 14] When TM based reordering for MMVD and affine merge motion vector differences (MMVD) are applied
[Condition 15] When an affine candidate obtained by using regression based affine candidate derivation is selected
[Condition 16] When a geometric partitioning mode (GPM) with merge motion vector differences (GPM-MMVD) is applied
[Condition 17] When a geometric partitioning mode with template matching (GPM-TM) is applied
[Condition 18] When a GPM with inter and intra prediction is applied
[Condition 19] When template matching based reordering for GPM split modes is applied
[Condition 20] When a bi-predictive GPM is applied
[Condition 21] When a bilateral matching AMVP-merge mode is applied
[Condition 22] When IBC is applied
[Condition 23] When IBC with template Matching (IBC-TM) is applied
[Condition 24] When fractional pel IBC is applied
[Condition 25] When filtered IBC prediction is applied
[Condition 26] When OOB is detected because enhanced bi-directional motion compensation is applied
[Condition 27] When reconstruction-reordered IBC (RR-IBC) is applied
[Condition 28] When an IBC merge mode with block vector differences (IBC-MBVD) is applied
[Condition 29] When combined intra block copy and intra prediction (CIIP) is applied
[Condition 30] When IBC with geometry partitioning is applied
[Condition 31] When an IBC BVP-merge and a bi-predictive IBC merge are applied
[Condition 32] When IBC MBVD list derivation is applied
[Condition 33] When IBC with local illumination compensation is applied
[Condition 34] When template matching based BCW index derivation for merge mode is applied
[Condition 35] When decoder-side motion vector refinement (DMVR) for affine merge coded blocks is applied
[Condition 36] When an inter convolutional cross-component intra prediction model (InterCCCM) is applied

A NSPT kernel may be configured with 8-bit precision. The range of coefficients within a NSPT kernel may be greater than or equal to -128 and less than or equal to 127. When corresponding precision is increased to more than 8-bit, a result value obtained through matrix multiplication may be shifted to the right by increased precision. For example, when a value obtained after matrix multiplication based on a NSPT kernel with 8-bit precision is shifted to the right by S bits and stored in a buffer, if a kernel coefficient is configured with N-bit precision, it may be shifted to the right by (S+(N-8)) bits and stored in a buffer.

When a NSPT kernel is configured with 8-bit precision, it is possible to prevent an excessive increase in internal precision in an encoder/a decoder performing transform, thereby reducing implementation complexity in terms of the memory requirement and the operation quantity and minimizing a decrease in compression efficiency simultaneously.

When backward NSPT is applied to a NxN-sized current block, the size of a NSPT kernel (or a NSPT matrix) may be expressed as MN x r. Here, MN may mean the product of the width and height of a current block. This may mean the output length of NSPT or the number of residual samples generated by NSPT. In addition, r may mean the input length of NSPT or the number of (dequantized) transform coefficients to which NSPT is applied. r may be an integer greater than or equal to 0 and less than or equal to MN. The following is an example of a NSPT matrix of MN x r according to a block size.

A NSPT matrix for a 4x4 block may be composed of a 16x16 matrix. A NSPT matrix for a 4x8 block and a 8x4 block may be composed of a 32x20 matrix, a 32x16 matrix, a 32x24 matrix, a 32x28 matrix or a 32x32 matrix. A NSPT matrix for a 8x8 block may be composed of a 64x16 matrix, a 64x24 matrix, a 64x32 matrix, a 64x40 matrix, a 64x48 matrix, a 64x56 matrix or a 64x64 matrix. A NSPT matrix for a 4x16 block and a 16x4 block may be composed of a 64x16 matrix, a 64x24 matrix, a 64x32 matrix, a 64x40 matrix, a 64x48 matrix, a 64x56 matrix or a 64x64 matrix. A NSPT matrix for a 8x16 block and a 16x8 block may be composed of a 128x96 matrix, a 128x64 matrix, a 128x48 matrix or a 128x32 matrix. A NSPT matrix for a 16x16 block may be composed of a 256x128 matrix, a 256x96 matrix or a 256x64 matrix. A NSPT matrix for a 16x32 block and a 32x16 block may be composed of a 512x256 matrix or a 512x128 matrix. A NSPT matrix for a 32x32 block may be composed of a 1024x512 matrix, a 1024x256 matrix or a 1024x128 matrix.

Alternatively, a 16x16 matrix may be applied to a 4xN block and a Nx4 block. Here, N may be an integer greater than or equal to 4. A 64x16 matrix may be applied to a 8x8 block. A 64x32 matrix may be applied to a 8xN block and a Nx8 block. Here, N may be an integer greater than or equal to 16. A 96x32 matrix may be applied to a 16xN block and a Nx16 block. Here, N may be an integer greater than or equal to 16.

Alternatively, the value of r in the NSPT matrix of MN x r may be determined according to a predetermined criterion. A criterion here may be (1) ensuring that the sum of the amount of calculation for primary transform and the amount of calculation for secondary transform is less than or equal to a certain level, and (2) ensuring that the number of multiplications per sample needed for a NSPT operation is less than or equal to a certain number.

Based on inverse transform, when a separable primary transform is performed by matrix multiplication for a MxN block, (M+N) multiplications are needed per sample to perform a corresponding primary transform. In addition, when LFNST is applied to a certain Region-Of-Interest (ROI) region, (P*Q)/(M*N) multiplications are needed per sample when it is assumed that the LFNST matrix of inverse transform is a PxQ matrix. Here, a PxQ matrix may mean a matrix that the number of rows is P and the number of columns is Q.

When NSPT, instead of DCT-2 transform (or separable transform such as KLT) and LFNST, is applied to a MxN block, the value of r ensuring that the number of multiplications per sample for a case where corresponding NSPT is applied is less than or equal to the number of multiplications per sample for a case where DCT-2 transform and LFNST are applied may be determined as follows. [Equation 10] $r \leq \left(M+N+\left(P*Q\right)/\left(M*N\right)\right)$

When the value of r is set as the maximum value while satisfying Equation 10 above (i.e., r = M + N + (P*Q)/(M*N)), the value of r in a NSPT matrix for each block size may be set as follows. In Equation 10, when the value of (P*Q)/(M*N) is not an integer, an integer close to the value of (P*Q)/(M*N) may be used. As an example, a floor operation may be applied to the value of (P*Q)/(M*N). In this case, r may be set as (M + N + floor((P*Q)/(M*N))). Here, floor(x) may refer to the largest integer not greater than x. Alternatively, a round operation may be applied to the value of (P*Q)/(M*N). In this case, r may be set as (M + N + round((P*Q)/(M*N))). Here, round(x) may refer to a value obtained by rounding x. Alternatively, a ceil operation may be applied to the value of (P*Q)/(M*N). In this case, r may be set as (M + N + ceil((P*Q)/(M*N))). Here, ceil(x) may refer to the smallest integer greater than or equal to x. When a floor operation is applied, an inequality in Equation 10 above may be satisfied. However, when a round operation or a ceil operation is applied, an inequality in Equation 10 above may not be satisfied.

For a NSPT for a 4x4 block, the maximum value of r is 24. However, since the value of r must be less than or equal to 16, the value of r may be set as 16.

For a NSPT for a 4x8 block and a 8x4 block, the maximum value of r is 20. The value of r may be set as 20.

For a NSPT for a 8x8 block, the maximum value of r is 32. The value of r may be set as 32.

For a NSPT for a 4x16 block and a 16x4 block, the maximum value of r is 24. The value of r may be set as 24.

For a NSPT for a 8x16 block and a 16x8 block, the maximum value of r is 40. The value of r may be set as 40.

For a NSPT for a 16x16 block, the maximum value of r is 44. The value of r may be set as 44.

For a NSPT for a 16x32 block and a 32x16 block, the maximum value of r is 54. The value of r may be set as 54.

For a NSPT for a 32x32 block, the maximum value of r is 67. The value of r may be set as 67.

For a NSPT for a 4x32 block and a 32x4 block, the maximum value of r is 38. The value of r may be set as 38. Alternatively, the value of r may be set as 20.

For a NSPT for a 8x32 block and a 32x8 block, the maximum value of r is 48. The value of r may be set as 48. Alternatively, the value of r may be set as 24.

In a NSPT matrix for each block size described above, there may be a case in which the value of r is not a multiple of 4. For ease of implementation, it may be advantageous that the value of r is a multiple of 4. For example, in implementing parallel processing through Single Instruction Multiple Data (SIMD) instructions, etc., when the inner product of four transform basis vectors is processed simultaneously (i.e., four transform coefficients are generated simultaneously) in the process of applying a forward NSPT, it may be advantageous to set the value of r as a multiple of 4.

As an example, for a NSPT for a 16x32 block and a 32x16 block, the value of r may be set as 52 or 56 instead of 54. For a NSPT for a 32x32 block, the value of r may be set as 64 or 68 instead of 67. For a NSPT for a 4x32 block and a 32x4 block, the value of r may be set as 36 or 40 instead of 38.

More generally, the value of r may be set to be a multiple of K. Here, K may be an integer greater than or equal to 1. As an example, the value of r may be set as a multiple of K that satisfies an inequality in Equation 11 below. [Equation 11] $r \leq func \left(\left(M+N+\left(P*Q\right)/\left(M*N\right)\right)/K\right) * K$

In Equation 11 above, func() may be floor, round or ceil described above.

The value of r according to a predetermined standard described above relates to a case where zero-out is not considered. In other words, when forward LFNST is applied, primary-transformed transform coefficients in the remaining region except for a region where LFNST is applied are zeroed out, so the actual amount of calculation needed to apply DCT-2 and LFNST may be less than the amount of calculation above. Accordingly, when the zero-out is considered, the value of r may be set as a value less than the value of r according to the predetermined standard.

Since zero-out is not performed for a 4x4 block, the value of r may be set as a value less than or equal to 16.

For a 4x8 block, zero-out may be performed for the remaining region except for a top-left 4x4 block based on forward transform, and a 16x16 matrix, which is a forward LFNST matrix, may be applied to a top-left 4x4 block. When such zero-out is performed, the number of multiplications per sample needed in forward separable primary transform is 8 (((4x4x8)+(4x8x4))/(4x8)=8), and the number of multiplications per sample needed in LFNST is 8 ((16x16)/32=8). Accordingly, when separable primary transform and LFNST are replaced with NSPT, the value of r may be set as a value less than or equal to 16, which is the sum of the number of multiplications per sample in separable primary transform and the number of multiplications per sample in LFNST. Since the same amount of calculation is needed even when applying backward separable primary transform and LFNST, the value of r may be set as a value less than or equal to 16.

For a 8x4 block, zero-out may be performed for the remaining region except for a top-left 4x4 block based on forward transform, and a 16x16 matrix, which is a forward LFNST matrix, may be applied to a top-left 4x4 block. When such zero-out is performed, the number of multiplications per sample needed in forward separable primary transform is 6 ((4x8x4)+(4x4x4)/(8x4)=6), and the number of multiplications per sample needed in LFNST is 8 ((16x16)/32=8). Accordingly, when separable primary transform and LFNST are replaced with NSPT, the value of r may be set as a value less than or equal to 14, which is the sum of the number of multiplications per sample in separable primary transform and the number of multiplications per sample in LFNST. Since the same amount of calculation is needed even when applying backward separable primary transform and LFNST, the value of r may be set as a value less than or equal to 14.

For a 8x8 block, zero-out may not be performed for separable primary transform, and in this case, the value of r may be set as a value less than or equal to 32.

For a 8x16 block, zero-out may be performed for the remaining region except for a top-left 8x8 block based on forward transform, and a 64x32 matrix, which is a forward LFNST matrix, may be applied to a top-left 8x8 block. When such zero-out is performed, the number of multiplications per sample needed in forward separable primary transform is 16 ((8x8x16)+(8x16x8)/(8x16)=16), and the number of multiplications per sample needed in LFNST is 16 ((64x32)/128=16). Accordingly, when separable primary transform and LFNST are replaced with NSPT, the value of r may be set as a value less than or equal to 32, which is the sum of the number of multiplications per sample in separable primary transform and the number of multiplications per sample in LFNST. Since the same amount of calculation is needed even when applying backward separable primary transform and LFNST, the value of r may be set as a value less than or equal to 32.

For a 16x8 block, zero-out may be performed for the remaining region except for a top-left 8x8 block based on forward transform, and a 64x32 matrix, which is a forward LFNST matrix, may be applied to a top-left 8x8 block. When such zero-out is performed, the number of multiplications per sample needed in forward separable primary transform is 12 ((8x16x8)+(8x8x8)/(16x8)=12), and the number of multiplications per sample needed in LFNST is 16 ((64x32)/128=16). Accordingly, when separable primary transform and LFNST are replaced with NSPT, the value of r may be set as a value less than or equal to 28, which is the sum of the number of multiplications per sample in separable primary transform and the number of multiplications per sample in LFNST. Since the same amount of calculation is needed even when applying backward separable primary transform and LFNST, the value of r may be set as a value less than or equal to 28.

For a 16x16 block, zero-out may be performed for the remaining region except for a top-left 12x12 block based on forward transform, and a 96x32 matrix, which is a forward LFNST matrix, may be applied to a top-left 12x12 block. When such zero-out is performed, the number of multiplications per sample needed in forward separable primary transform is 21 ((12x16x16)+(12x16x12)/(16x16)=21), and the number of multiplications per sample needed in LFNST is 12 ((96x32)/256=12). Accordingly, when separable primary transform and LFNST are replaced with NSPT, the value of r may be set as a value less than or equal to 33, which is the sum of the number of multiplications per sample in separable primary transform and the number of multiplications per sample in LFNST. Since the same amount of calculation is needed even when applying backward separable primary transform and LFNST, the value of r may be set as a value less than or equal to 33.

For a 4x16 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 8 (((4x4x16)+(4x16x4)/(4x16)=8), and the number of multiplications per sample needed in an LFNST is 4 ((16x16)/64=4). Accordingly, when a separable primary transform and an LFNST are replaced with a NSPT, the value of r may be set as a value less than or equal to 12, which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 12.

For a 16x4 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 5 (((4x16x4)+(4x4x4))/(16x4)=5), and the number of multiplications per sample needed in an LFNST is 4 ((16x16)/64=4). Accordingly, when a separable primary transform and an LFNST are substituted with a NSPT, the value of r may be set as a value less than or equal to 9 which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 9.

For a 4x32 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 8 (((4x4x32)+(4x32x4)/(4x32)=8), and the number of multiplications per sample needed in an LFNST is 2 ((16x16)/128=2). Accordingly, when a separable primary transform and an LFNST are substituted with a NSPT, the value of r may be set as a value less than or equal to 10 which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 10.

For a 32x4 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 4.5 (((4x32x4)+(4x4x4)/(32x4)=4.5), and the number of multiplications per sample needed in an LFNST is 2 ((16x16)/128=2). Accordingly, when a separable primary transform and an LFNST are substituted with a NSPT, the value of r may be set as a value less than or equal to 6.5. Since the same amount of calculation is needed even when applying a backward separable primary transform and an LFNST, the value of r may be set as a value less than or equal to 6.5. Here, the value of r is a value configuring a matrix dimension, so it may be set as an integer of 6 or 7 instead of 6.5.

For a 8x32 block, zero-out may be performed for the remaining regions except for a top-left 8x8 block based on a forward transform, and a 64x32 matrix which is a forward LFNST matrix may be applied to a top-left 8x8 block. When such zero-out is performed, the number of multiplications per sample needed in a forward separable primary transform is 16 (((8x8x32)+(8x32x8)/(8x32)=16), and the number of multiplications per sample needed in an LFNST is 8 ((64x32)/256=8). Accordingly, when a separable primary transform and an LFNST are substituted with a NSPT, the value of r may be set as a value less than or equal to 24. Since the same amount of calculation is needed even when applying a backward separable primary transform and an LFNST, the value of r may be set as a value less than or equal to 24.

For a 32x8 block, zero-out may be performed for the remaining regions except for a top-left 8x8 block based on a forward transform, and a 64x32 matrix which is a forward LFNST matrix may be applied to a top-left 8x8 block. When such zero-out is performed, the number of multiplications per sample needed in a forward separable primary transform is 10 (((8x32x8)+(8x8x8)/(32x8)=10), and the number of multiplications per sample needed in an LFNST is 8 ((64x32)/256=8). Accordingly, when a separable primary transform and an LFNST are substituted with a NSPT, the value of r may be set as a value less than or equal to 18. Since the same amount of calculation is needed even when applying a backward separable primary transform and an LFNST, the value of r may be set as a value less than or equal to 18.

For a 16x32 block, zero-out may be performed for the remaining regions except for a top-left 12x12 block based on a forward transform, and a 96x32 matrix which is a forward LFNST matrix may be applied to a top-left 12x12 block. When such zero-out is performed, the number of multiplications per sample needed in a forward separable primary transform is 21 (((12x16x32)+(12x32x12)/(16x32)=21), and the number of multiplications per sample needed in an LFNST is 6 ((96x32)/512=6). Accordingly, when a separable primary transform and an LFNST are substituted with a NSPT, the value of r may be set as a value less than or equal to 27. Since the same amount of calculation is needed even when applying a backward separable primary transform and an LFNST, the value of r may be set as a value less than or equal to 27.

For a 32x16 block, zero-out may be performed for the remaining regions except for a top-left 12x12 block based on a forward transform, and a 96x32 matrix which is a forward LFNST matrix may be applied to a top-left 12x12 block. When such zero-out is performed, the number of multiplications per sample needed in a forward separable primary transform is 13.5 (((12x32x12)+(12x16x12)/(32x16)=13.5), and the number of multiplications per sample needed in an LFNST is 6 ((96x32)/512=6). Accordingly, when a separable primary transform and an LFNST are substituted with a NSPT, the value of r may be set as a value less than or equal to 19.5. Since the same amount of calculation is needed even when applying a backward separable primary transform and an LFNST, the value of r may be set as a value less than or equal to 19.5. Here, the value of r is a value configuring a matrix dimension, so it may be set as an integer of 19 or 20 instead of 19.5.

In a NSPT matrix for each block size described above, there may be a case in which the value of r is not a multiple of K. Here, K may be 4. In this case, for ease of implementation, the value of r may be set to be a multiple of K. When the value of r which is pre-set through the above-described method is rₚᵣₑᵥ, the value of r which is a multiple of K may be set as follows. [Equation 12] $r = func \left({r}_{prev}/K\right) x K$

In Equation 12 above, func() may be floor, round or ceil described above.

As described above, the value of r in a NSPT matrix for a MxN block may be different from the value of r in a NSPT matrix for a NxM block. As an example, a backward NSPT matrix for a 4x8 block may be a 32x16 matrix, and a backward NSPT matrix for a 8x4 block may be a 32x14 matrix. In this case, a NSPT matrix may be determined by using symmetry between a MxN block and a NxM block.

It is assumed that a current block is a MxN block having mode x. When the above-described symmetry is used for a current block, instead of applying a NSPT matrix corresponding to the block size of MxN or mode x, a NSPT matrix corresponding to at least one of a mode symmetrical to mode x or the block size of NxM symmetrical to the block size of MxN may be applied. In this case, a NSPT matrix corresponding to the block size of NxM may be applied to a current block as it is. Alternatively, a NSPT matrix corresponding to the block size of NxM is applied, but for the value of r, the value of r in a NSPT matrix corresponding to the block size of MxN may be used.

As an example, a backward NSPT matrix for a 4x8 block may be a 32x16 matrix (i.e., the value of r in a NSPT matrix is 16), and a backward NSPT matrix for a 8x4 block may be a 32x14 matrix (i.e., the value of r in a NSPT matrix is 14). When a current block is a 8x4 block having mode x, a NSPT matrix for at least one of a mode symmetrical to mode x or a 4x8 block symmetrical to a 8x4 block may be applied to a current block. In this case, a 32x16 matrix, which is a backward NSPT matrix for a 4x8 block, may be used as it is, or a 32x14 matrix having the value of r in a backward NSPT matrix for a 8x4 block may be used. Here, a 32x14 matrix may be derived by sampling 14 rows from the left in a 32x16 matrix. In this way, when a 32x14 matrix is applied to a current block with a block size of 8x4, the above-described predetermined standard is satisfied.

Conversely, when a current block is a 4x8 block having mode x, a NSPT matrix for at least one of a mode symmetrical to mode x or a 8x4 block symmetrical to a 4x8 block may be applied to a current block. In this case, a 32x14 matrix for a 8x4 block, not a 32x16 matrix for a 4x8 block, may be applied to a current block. Through this, NSPT may be performed by using fewer multiplications than the number of multiplications allowed for a 4x8 block.

For NSPT for a MxN block and a NxM block, when the values of r satisfying the above-described predetermined condition is r1 and r2, respectively, a backward NSPT matrix for a MxN block and a NxM block may be set as MN x max(r1, r2). Here, max(r1, r2) may refer to selecting a value greater than or equal to r1 and r2.

As an example, a backward NSPT matrix for a 4x8 block may be a 32x16 matrix (i.e., the value of r in a NSPT matrix is 16), and a backward NSPT matrix for a 8x4 block may be a 32x14 matrix (i.e., the value of r in a NSPT matrix is 14). When a current block is a 4x8 block having mode x, a NSPT matrix for at least one of a mode symmetrical to mode x or a 8x4 block symmetrical to a 4x8 block may be applied to a current block. In this case, a 32x16 matrix, which is a backward NSPT matrix for a 8x4 block, may be used. When a backward NSPT matrix is not configured like MN x max(r1, r2), a 32x14 matrix will be used as a NSPT matrix for a 8x4 block. However, when a NSPT matrix for a 4x8 block and a NSPT matrix for a 8x4 block are configured as a 32 x max(16, 14) matrix, a 32x16 matrix may be fully applied.

Conversely, when a current block is a 8x4 block having mode x, a NSPT matrix for at least one of a mode symmetrical to mode x or a 4x8 block symmetrical to a 8x4 block may be applied to a current block. In this case, a 32x16 matrix, which is a backward NSPT matrix for a 4x8 block, may be used or a 32x14 matrix may be used. Here, a 32x14 matrix may be derived by sampling 14 rows from the left in a 32x16 matrix.

When a NSPT matrix is configured as described above, transform consisting of the maximum number of transform basis vectors may be applied while satisfying the predetermined condition, thereby maximizing coding performance.

In the above-described embodiment, the value of r may be set to be a multiple of 16. As an example, for backward NSPT for a 4x8 block and a 8x4 block, a 32x16 matrix, not a 32x20 matrix, may be applied. The transform coefficients of a transform block may be encoded in the unit of a predetermined coefficient group (CG). Here, a CG may be defined as a group of 16 transform coefficients, and as an example, a CG may be a sub-block of a size such as 4x4, 2x8 or 8x2. A non-zero transform coefficient may not exist within one CG, and in this case, the encoding process of a transform coefficient may be skipped for a corresponding CG. Accordingly, when the value of r is set as a multiple of 16, there is an advantage of reducing the complexity of implementation.

The transform coefficients may be derived by applying forward NSPT to residual samples of a MxN block. In this case, the number of derived transform coefficients may be less than or equal to the value of (M*N) due to zero-out. In other words, a forward NSPT matrix may be defined as a r x (M*N) matrix, wherein r may mean the output length of NSPT or the number of transform coefficients derived through NSPT, and (M*N) may mean the input length of NSPT or the number of residual samples to which NSPT is applied.

The derived transform coefficients may be arranged in a MxN block according to the predetermined scan order, and a region where the transform coefficients are not filled may be filled with 0 (i.e., zero-out). Accordingly, in the process of scanning transform coefficients in a decoding device, when a non-zero transform coefficient is found in a region that would have been filled with 0 if NSPT had been applied (or, when the scan position of the last valid coefficient in a MxN block is greater than or equal to r), it is considered that NSPT is not applied to a corresponding MxN block, and a NSPT index may not be signaled. An index representing a scan position of 0 may be allocated to a top-left coefficient (i.e., a DC component coefficient) within a MxN block, and an index increased by 1 may be allocated to the remaining coefficients within a MxN block in predetermined order.

One or more values of r available for block sizes to which NSPT is applicable may be defined. As an example, one or more values of r may be defined for each block size to which NSPT is applicable. Alternatively, one value of r may be defined for each block size to which NSPT is applicable, and the value of r for any one of the block sizes to which NSPT is applicable may be different from the value of r for another one. Alternatively, one value of r may be defined for some of the block sizes to which NSPT is applicable, and at least two values of r may be defined for the remaining.

When a plurality of values of r are available, an index specifying any one of a plurality of values of r or r itself may be signaled. A corresponding index may be signaled in a high level syntax (HLS) such as VPS, SPS, PPS, PH or SH or may be signaled at a block level such as CTU, CU or TU. When the value of r is a value belonging to a specific range, bits enough to include a corresponding range may be allocated and signaled. For example, when the value of r belongs to the range of 1 to 256, 8 bits may be designated as fixed-length and signaled.

The transform kernel of a current block may be determined based on any one of the above-described embodiments 1 to 4. Alternatively, the transform kernel of a current block may be determined based on a combination of at least two of the embodiments 1 to 4 within a range where an invention according to the above-described embodiments 1 to 4 does not conflict with each other.

A transform index for inverse transform of a current block may be signaled. Here, a transform index may specify any one of one or more transform kernels (or, transform matrices) belonging to a transform set. Here, a transform index may mean a NSPT index specifying any one of one or more NSPT kernels belonging to a NSPT set. Alternatively, the transform index may mean a LFNST index specifying any one of one or more LFNST kernels belonging to a LFNST set.

Whether the transform index corresponds to a NSPT index may be determined based on whether the size of a current block is any one of the block sizes belonging to the first group described above. It assumes that block sizes to which NSPT is applicable and block sizes to which LFNST is applicable are distinct from each other. In this case, when the size of a current block belongs to the first group, a transform index signaled for a current block may correspond to a NSPT index and a NSPT kernel may be determined from a NSPT set based on a corresponding transform index. On the other hand, when the size of a current block does not belong to the first group, a transform index signaled for a current block may correspond to a LFNST index and a LFNST kernel may be determined from a LFNST set based on a corresponding transform index. When the size of a current block does not belong to the first group, it may mean that the size of a current block belongs to the second group described above. Alternatively, when the size of a current block does not belong to the first group, it may mean that the size of a current block corresponds to a block size to which LFNST is applicable among the block sizes belonging to the second group. In this way, a NSPT index and a LFNST index may be configured as one integrated syntax, not as a separate syntax.

As an example, it is assumed that block sizes to which NSPT is applicable, belonging to the first group, are 4x4, 4x8, 8x4 and 8x8. For block sizes belonging to the first group, NSPT may be applied instead of LFNST. Specifically, NSPT may be applied instead of a combination of separable primary transform (e.g., DCT-2, separable KLT) and LFNST. A NSPT index may be signaled for four block sizes belonging to the first group, and a LFNST index may be signaled for the remaining block sizes (where LFNST is allowed).

In this way, when a NSPT index and a LFNST index are signaled as one syntax, the amount of encoded information may be reduced. In addition, the complexity of implementation may be reduced by applying at least one of binarization, a CABAC context or an initial value for entropy coding to a NSPT/LFNST index equally.

Alternatively, a NSPT index and a LFNST index may be signaled separately as a separate syntax. In this case, the complexity of implementation may be increased partially, but compression performance may be improved by performing optimized entropy coding for each index.

When the number of LFNST kernel candidates belonging to a LFNST set and the number of NSPT kernel candidates belonging to a NSPT set are the same, the same binarization may be applied to a LFNST index and a NSPT index. The same CABAC context (or, CABAC context increment) may be allocated to the bins of a LFNST index and a NSPT index.

Different binarization and/or CABAC context may be used for a LFNST index and a NSPT index. A different CABAC initial value may be allocated to a LFNST index and a NSPT index. As an example, any one of a LFNST index and a NSPT index may be binarized based on fixed-length binarization, and the other may be binarized based on truncated unary binarization. Even when the binarization of a LFNST index and a NSPT index are the same, a different CABAC context and/or CABAC initial value may be allocated. When the number of LFNST kernel candidates belonging to a LFNST set and the number of NSPT kernel candidates belonging to a NSPT set are different from each other, different binarization and/or CABAC context may be used for a LFNST index and a NSPT index.

The number of NSPT kernel candidates belonging to a NSPT set may be set differently for each block size. Alternatively, block sizes belonging to the first group may be divided into a plurality of sub-groups. In this case, the number of NSPT kernel candidates belonging to a NSPT set may be set differently for each of the plurality of sub-groups. Here, at least one of a plurality of sub-groups may include a plurality of different block sizes.

According to the number of NSPT kernel candidates belonging to a NSPT set, binarization applied to a NSPT index may be different.

As an example, when the number of NSPT kernel candidates in a NSPT set for a specific block size is 3, a NSPT index may have a value of any one of 0 to 3. When the value of a NSPT index is 0, it may represent that NSPT is not applied to a current block. When the value of a NSPT index is not 0, it may represent a NSPT kernel candidate corresponding to a corresponding NSPT index among the three NSPT kernel candidates. One bin may be allocated to distinguish between a case where NSPT is applied and a case where it is not applied. A case where the value of a corresponding bin is 0 may correspond to a case where the value of a NSPT index is 0. On the other hand, a case where the value of a corresponding bin is 1 may correspond to a case where the value of a NSPT index is 1, 2 or 3. In this case, truncated unary binarization may be applied to distinguish three NSPT kernel candidates. In other words, two bins may be allocated to distinguish three NSPT kernel candidates as 0, 10 and 11.

When the number of NSPT kernel candidates in a NSPT set for a specific block size is 2, a NSPT index may have a value of any one of 0 to 2. When the value of a NSPT index is 0, it may represent that NSPT is not applied to a current block. When the value of a NSPT index is not 0, it may represent a NSPT kernel candidate corresponding to a corresponding NSPT index among the two NSPT kernel candidates. One bin may be allocated to distinguish between a case where NSPT is applied and a case where it is not applied. Two NSPT kernel candidates may be distinguished by allocating one bin representing any one of the two NSPT kernel candidates.

When the number of NSPT kernel candidates in a NSPT set for a specific block size is 1, a NSPT index may have a value of any one of 0 or 1. When the value of a NSPT index is 0, it may represent that NSPT is not applied to a current block. When the value of a NSPT index is 1, it may represent one NSPT kernel candidate. In this case, whether to apply NSPT and a NSPT kernel candidate may be specified only with one bin.

The inverse transform of the current block may be a separable primary transform and/or a LFNST-based inverse transform. In other words, backward LFNST may be applied to all or a part of the (dequantized) transform coefficients of a current block, and then a backward separable primary transform may be applied to transform coefficients derived through LFNST to derive residual samples. As an example, backward LFNST may be applied to (dequantized) transform coefficients belonging to a partial region of a current block. Here, a partial region refers to a region to which forward LFNST is applied, and hereinafter, it is referred to as a region of interest (ROI) region. Transform coefficients derived through LFNST may be arranged in a ROI region according to the predetermined scan order. The predetermined scan order may be row-first order or column-first order. A backward separable primary transform may be applied to transform coefficients derived through the LFNST and transform coefficients belonging to the remaining region except for a ROI region within the current block. Alternatively, in a forward transform process, when zero-out is performed on the remaining region except for a ROI region within the current block (i.e., when transform coefficients within the remaining region are set as 0), a backward separable primary transform may be applied to transform coefficients derived through LFNST. The size of the ROI region may be determined based on at least one of the width or height of a current block. Here, the size of a ROI region may refer to at least one of the width or height of a ROI region, or may refer to the number of sample positions belonging to a ROI region.

Referring to FIG. 4, a current block may be reconstructed based on the residual sample of a current block S420.

The current block may be reconstructed based on a prediction block and a residual block of the current block.

The prediction block of the current block may be derived based on at least one of inter prediction or intra prediction. As an example, the current block may be partitioned into a plurality of partitions, and the prediction block of the current block may be generated based on prediction for each partition.

The current block may be partitioned into a plurality of partitions based on one or more partition lines. The partition line may include at least one of a vertical line or a horizontal line. Alternatively, when geometric partitioning is applied to the current block, the current block may be partitioned into two partitions by a predetermined partition line. The partition line for the geometric partitioning may be defined based on a predetermined partition direction (or partition angle) and a distance from a center of the current block. The current block may be a coding block that is not further partitioned through tree-based block partitioning.

It is assumed that a current block is partitioned into two partitions, i.e., a first partition and a second partition. In this case, a prediction block of the current block may be generated by a weighted sum of a first prediction block for the first partition and a second prediction block for the second partition. Here, the first and second prediction blocks may be generated based on intra prediction. Alternatively, the first and second prediction blocks may be generated based on inter prediction. Alternatively, any one of the first prediction block or the second prediction block may be generated based on intra prediction, and the other may be generated based on inter prediction.

As an example, when the current block is partitioned into two partitions based on geometric partitioning, a prediction block for each partition may be generated based on inter prediction, and the prediction block of the current block may be generated based on a weighted sum of the generated prediction blocks.

Alternatively, when the current block is partitioned into two partitions based on geometric partitioning, a prediction block for each partition may be generated based on intra prediction, and the prediction block of the current block may be generated based on a weighted sum of the generated prediction blocks. Hereinafter, this will be referred to as a Spatial Geometric Partitioning Mode (SGPM).

When SGPM is applied to a current block, a partition type of the current block may be determined based on a partition type index specifying a partition direction and a position of a partition line. The partition type index may indicate any one of pre-defined partition type candidates. An intra prediction mode of each partition within the current block may be derived based on a mode index indicating any one of a plurality of intra prediction mode candidates. The mode index may be defined for each partition within the current block.

The partition type index and the mode index for each partition may be signaled through a bitstream. In this case, the partition type index may be expressed as partition_mode_idx, and the mode index for each partition may be expressed as intra_pred_mode0_idx and intra_pred_mode1_idx, respectively. Alternatively, the partition type index and a mode index for a first partition may be signaled through the bitstream, and a mode index for a second partition may be derived based on the mode index for the first partition. At least one of the aforementioned partition type index or mode index may be signaled based on a flag (cu_sgpm_flag) indicating whether SGPM is applied to the current block. As an example, when cu_sgpm_flag is 1, the partition type index and the mode index may be signaled, and when cu_sgpm_flag is 0, the partition type index and the mode index may not be signaled.

Alternatively, a candidate list for SGPM may be constructed. The candidate list includes a plurality of candidates, and each candidate may include one partition type index and two mode indices. As an example, the plurality of candidates belonging to the candidate list may be derived by a combination between pre-defined partition type candidates (e.g., 26 partition type candidates) and predetermined intra prediction mode candidates (e.g., 3 intra prediction mode candidates). The maximum number of candidates that can be included in the candidate list may be 16. Based on any one of the plurality of candidates, the partition type index for the current block and the mode index for each partition may be derived. A candidate index indicating any one of the plurality of candidates may be signaled through a bitstream.

The candidate list may be reordered based on a predetermined template region. As an example, an SAD between a prediction sample and a reconstructed sample of the template region may be calculated. The SAD may be calculated for each of the plurality of candidates belonging to the candidate list. The plurality of candidates in the candidate list may be reordered in an ascending order of the SAD. The template region may include at least one of a top neighboring region or a left neighboring region adjacent to the current block. A height of the top neighboring region and a width of the left neighboring region may be fixed to a predetermined length (e.g., 1).

The intra prediction mode candidates may be constructed in an IPM list. The IPM list may be constructed for each of the partitions within the current block. At least one of the intra prediction mode candidates belonging to an IPM list of a first partition may be different from intra prediction mode candidates belonging to an IPM list of a second partition. Alternatively, one IPM list may be constructed for the current block, and partitions belonging to the current block may share the one IPM list. Three or more intra prediction mode candidates may be included in the IPM list.

SGPM may be applied when a size of the current block satisfies a predetermined condition. The condition may include at least one of the following conditions 1 to 5. Here, width and height may mean a width and a height of the current block, respectively.$4 < = width < = 64$ (Condition 1) $4 < = height < = 64$ (Condition 2) $width < height * 8$ (Condition 3) $height < width * 8$ (Condition 4) $width * height > = 32$ (Condition 5)

A flag indicating whether blending between a prediction block of a first partition and a prediction block of a second partition for a current block is allowed may be defined.

When the flag indicates that the blending between the prediction blocks is allowed (e.g., when the flag is false), adaptive blending may be used in SGPM. A blending depth for the adaptive blending may be derived based on a size of the current block. As an example, when a minimum value of a width and a height of the current block is 4, the blending depth may be derived as 1/2τ. When the minimum value of the width and the height of the current block is 8, the blending depth may be derived as τ. When the minimum value of the width and the height of the current block is 16, the blending depth may be derived as 2τ. When the minimum value of the width and the height of the current block is 32, the blending depth may be derived as 4τ. When the minimum value of the width and the height of the current block is greater than 32, the blending depth may be derived as 8τ. Here, τ may be any integer greater than 0.

On the other hand, when the flag indicates that blending between the prediction blocks is not allowed (e.g., when the flag is true), a blending depth may be derived as a default value (e.g., 1/4τ). This indicates that the blending is not used when a partition line of geometric partitioning corresponds to a vertical or horizontal line, and a width of a region to which the blending is applied becomes relatively narrower when the partition line of the geometric partitioning does not correspond to the vertical and horizontal lines (i.e., when the partition line has a different partition direction).

FIG. 8 illustrates a schematic configuration of a decoding apparatus (300) that performs an image decoding method according to the present disclosure.

Referring to FIG. 8, the decoding apparatus (300) according to the present disclosure may include a transform coefficient deriver (800), a residual sample deriver (810), and a reconstructed block generator (820). The transform coefficient deriver (800) may be configured in the entropy decoder (310) of FIG. 3, the residual sample deriver (810) may be configured in the residual processor (320) of FIG. 3, and the reconstructed block generator (820) may be configured in the adder (340) of FIG. 3.

The transform coefficient deriver (800) may obtain residual information of the current block from the bitstream and decode it to derive the transform coefficients of the current block.

The residual sample deriver (810) may derive the residual samples of the current block by performing at least one of dequantization or inverse transform on the transform coefficients of the current block.

The residual sample deriver (810) may determine a transform kernel for the inverse transform of the current block through a predetermined transform kernel determination method, and derive the residual samples of the current block based on this. It is the same as described by referring to FIG. 4, and a detailed description thereof will be omitted here.

The reconstructed block generator (820) may reconstruct the current block based on the residual samples of the current block.

FIG. 9 illustrates an image encoding method performed by an encoding apparatus (200) according to an embodiment of the present disclosure.

Referring to FIG. 9, residual samples of a current block may be derived (S900).

The residual samples of the current block may be derived by subtracting prediction samples from original samples of the current block. Here, the prediction sample may be derived based on inter prediction or intra prediction. The current block may be partitioned into a plurality of partitions, and a prediction block of the current block may be generated based on prediction for each partition.

As described with reference to FIG. 4, when the current block is partitioned into two partitions (i.e., a first partition and a second partition), a prediction block of the current block may be generated by a weighted sum of a first prediction block for the first partition and a second prediction block for the second partition. Here, each of the first and second prediction blocks may be generated based on intra prediction or inter prediction.

When the aforementioned SGPM is applied to the current block, a partition type of the current block and an intra prediction mode of each partition may be determined. A partition type index for indicating the determined partition type may be encoded in a bitstream. A mode index indicating the determined intra prediction mode among a plurality of intra prediction mode candidates may be encoded in the bitstream. The mode index may be encoded for each partition. A mode index for a second partition may be encoded based on a mode index for a first partition. At least one of the partition type index or the mode index may be encoded based on a flag (cu_sgpm_flag) indicating whether SGPM is applied to the current block.

As described with reference to FIG. 4, a candidate list for SGPM of the current block may be constructed. Each candidate belonging to the candidate list may include one partition type index and two mode indices. Based on any one of a plurality of candidates belonging to the candidate list, a partition type index for the current block and a mode index for each partition may be derived. A candidate index indicating any one of the plurality of candidates may be encoded in a bitstream. In addition, the candidate list may be reordered based on a predetermined template region.

As described with reference to FIG. 4, the intra prediction mode candidates may be constructed in an intra prediction mode (IPM) list. SGPM may be applied when a size of the current block satisfies a predetermined condition.

Whether blending between a prediction block of a first partition and a prediction block of a second partition for the current block is allowed may be determined. When it is determined that the blending between the prediction blocks is allowed, adaptive blending may be used in SGPM, and a blending depth for the adaptive blending may be derived based on the size of the current block. On the other hand, when it is determined that the blending between the prediction blocks is not allowed, the blending depth may be derived as a default value (e.g., 1/4τ). Based on the determination, a flag indicating whether the blending between the prediction blocks of the first and second partitions is allowed may be encoded in the bitstream.

Referring to FIG. 9, transform coefficients of the current block may be derived by performing at least one of transform or quantization on the residual samples of the current block (S910).

A transform method according to the present disclosure may be understood as the reverse process of inverse transform described by referring to FIG. 4. A method for determining a transform kernel for the transform is the same as described by referring to FIG. 4. A detailed description thereof will be omitted here.

For example, one or more transform sets for transform of the current block may be defined/configured, and each transform set may include one or more transform kernel candidates. In this case, one from the plurality of transform sets may be selected as the transform set of the current block. One of the plurality of transform kernel candidates belonging to the transform set of the current block may be selected. The selection may be performed implicitly based on the context of the current block. Alternatively, an optimal transform set and/or transform kernel candidate for the current block may be selected, and an index indicating it may be signaled.

Alternatively, the transform kernel of the current block may be determined based on an MTS set. One of a plurality of MTS sets may be selected based on at least one of a size or an intra prediction mode of the current block. The selected MTS set may include one or more transform kernel candidates. One of the one or more transform kernel candidates may be selected, and the transform kernel of the current block may be determined based on the selected transform kernel candidate. The selection of the transform kernel candidate may be performed using a transform kernel candidate index derived based on the context of the current block. Alternatively, an optimal transform kernel candidate for the current block may be selected, and a transform kernel candidate index indicating the selected transform kernel candidate may be signaled.

Alternatively, the transform kernel of a current block may be determined based on a non-separable primary transform (NSPT) kernel. When the size of a current block belongs to the first group which is a set of block sizes to which NSPT is applicable, forward NSPT may be applied to a current block, and when the size of a current block belongs to the second group, forward NSPT may not be applied to a current block. When the size of a current block belongs to the second group, a forward separable primary transform (e.g., DCT-2) may be applied to the residual sample of a current block to derive transformation coefficients. Forward LFNST may be additionally applied to all or a part of the transform coefficients derived through the separable primary transform.

In addition, the NSPT may be applied based on at least one of the tree type or component type of a current block. A NSPT kernel (or, a NSPT matrix) for the NSPT may be determined by using the symmetry between intra prediction modes or the symmetry between block shapes. When forward NSPT is applied to a current block of MxN, a NSPT kernel may be expressed as r x MN. Here, r means the output length of NSPT or the number of transform coefficients generated by NSPT, and MN is the product of the width and height of a current block, which may mean the input length of NSPT or the number of residual samples to which NSPT is applied. A method for determining the size of this NSPT kernel is the same as described by referring to FIG. 4.

A LFNST index and/or a NSPT index for transform may be encoded as one integrated syntax or a LFNST index and a NSPT index may be encoded and inserted into a bitstream, respectively. The binarization for a LFNST index and a NSPT index and the allocation of a CABAC context and an initial value are the same as described by referring to FIG. 4.

A non-separable transform may be applied to a current block coded with inter prediction (or intra prediction), as described with reference to FIG. 4.

In addition, a method for signaling a transform index by referring to FIG. 4 was described, which may be applied equally to a method for encoding a transform index.

Referring to FIG. 9, a bitstream may be generated by encoding the transform coefficients of the current block (S920).

Residual information on the transform coefficients may be generated based on the transform coefficients of the current block, and a bitstream may be generated by encoding the residual information.

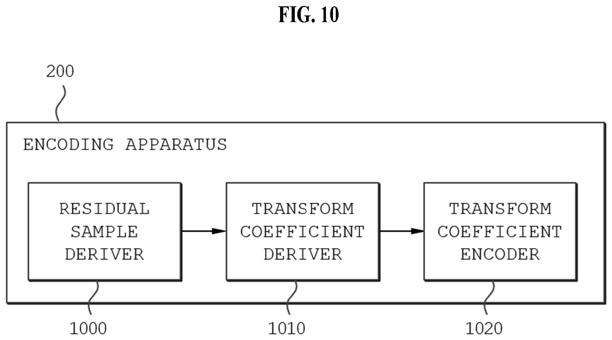

FIG. 10 illustrates a schematic configuration of an encoding apparatus (200) that performs an image encoding method according to the present disclosure.

Referring to FIG. 10, the encoding apparatus (200) according to the present disclosure may include a residual sample deriver (1000), a transform coefficient deriver (1010), and a transform coefficient encoder (1020). The residual sample deriver (1000) and the transform coefficient deriver (1010) may be configured in the residual processor (230) of FIG. 2, and the transform coefficient encoder (1020) may be configured in the entropy encoder (240) of FIG. 2.

The residual sample deriver (1000) may derive residual samples of the current block by subtracting prediction samples from original samples of the current block. Here, the prediction samples may be derived based on a predetermined intra prediction mode.

The transform coefficient deriver (1010) may derive the transform coefficients of the current block by performing at least one of transform or quantization on the residual samples of the current block. A transform coefficient deriver 1010 may determine the transform kernel of a current block based on at least one of the above-described embodiments 1 to 4 and apply the transform kernel to the residual sample of a current block to derive a transform coefficient.

The transform coefficient encoder (1020) may encode the transform coefficients of the current block to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

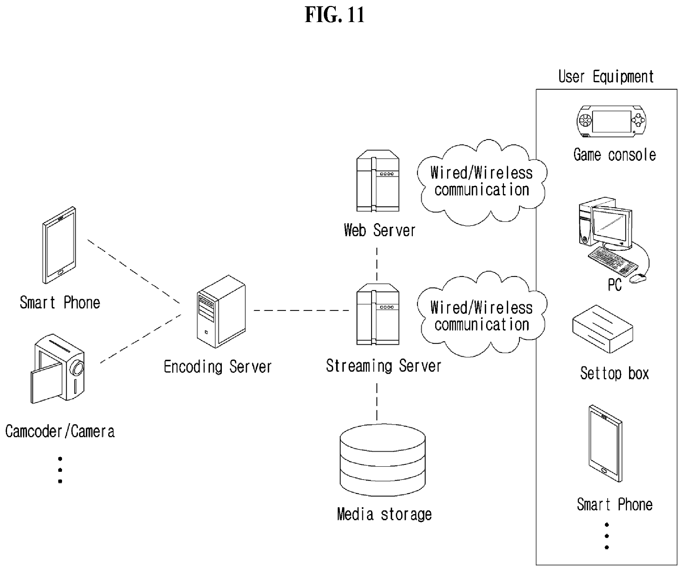

FIG. 11 shows an example of a contents streaming system to which embodiments of the present disclosure may be applied.

Referring to FIG. 11, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. A method, comprising:
deriving transform coefficients of a current block from a bitstream;
deriving residual samples of the current block based on an inverse transform on the transform coefficients of the current block; and
reconstructing the current block based on the residual samples of the current block,
wherein the current block is a block encoded based on inter prediction, and
wherein a transform set for the inverse transform is selected based on a predetermined intra prediction mode for the current block.

2. The method of claim 1, wherein the inverse transform is performed based on at least one of a separate transform or a non-separable transform.

3. The method of claim 2, wherein when a sub-block transform is applied to the current block and the non-separable transform is applied to the current block, a transform type for the separable transform of the current block is determined as DCT-2.

4. The method of claim 2, wherein when a sub-block transform is applied to the current block and the non-separable transform is applied to the current block, a transform type for the separable transform of the current block is determined as one of combinations of DST-7 and DCT-8.

5. The method of claim 2, wherein the intra prediction mode is derived by applying a decoder side intra mode derivation (DIMD) method based on a prediction block of the current block.

6. The method of claim 2, wherein when a sub-block transform is applied to the current block, based on whether a first sub-block of the current block corresponds to a size in which the non-separable transform is allowed, whether the non-separable transform is applied to the current block is determined.

7. The method of claim 6, wherein the intra prediction mode is derived by applying a decoder side intra mode derivation (DIMD) method based on the first sub-block of the current block.

8. The method of claim 2, wherein the transform set includes a plurality of transform kernel candidates, and
wherein an index indicating one of the plurality of transform kernel candidates is signaled.

9. The method of claim 8, wherein the index is signaled based on whether the current block satisfies a predetermined zero-out condition.

10. The method of claim 2, wherein when an intra block copy (IBC) mode is applied to the current block, the non-separable transform is applied to the current block.

11. The method of claim 2, wherein a transform set for the non-separable transform is determined based on whether an inter prediction mode which performs prediction in a sub-block unit is applied to the current block.

12. A method, comprising:
deriving residual samples of a current block;
deriving transform coefficients of the current block based on a transform on the residual samples of the current block; and
encoding the transform coefficients of the current block,
wherein the current block is a block encoded based on inter prediction, and
wherein a transform set for the transform is selected based on a predetermined intra prediction mode for the current block.

13. A computer-readable storage medium storing a bitstream generated by the method according to claim 12.

14. A method, comprising:
obtaining a bitstream for image information, wherein the bitstream is obtained based on deriving residual samples of a current block, deriving transform coefficients of the current block based on a transform on the residual samples of the current block, and encoding the transform coefficients of the current block; and
transmitting data including the bitstream,
wherein the current block is a block encoded based on inter prediction, and
wherein a transform set for the transform is selected based on a predetermined intra prediction mode for the current block.
